# EUROPEAN PATENT APPLICATION

(11) **EP 4 817 848 A1**
(43) Date of publication of application: **07.10.2026**
(21) Application number: 25167286.1
(22) Date of filing: 31.03.2025
(51) Int. Cl.: B29C 64/124, B29C 64/245, B29C 64/379, B33Y 10/00, B33Y 40/20, B29C 64/30, B29C 64/40

(54) **A METHOD FOR MANUFACTURING, VIA VOLUMETRIC PRINTING, AT LEAST ONE OBJECT OF IMPROVED QUALITY AND HANDLING THEREOF AND A SUPPORT STRUCTURE FOR USE IN SUCH A METHOD**

(71) Applicant: xolo GmbH, 12489 Berlin (DE)
(72) Inventor: Israel, Eric, 12489 Berlin (DE); Herder, Martin, 12489 Berlin (DE); Garmshausen, Yves, 12489 Berlin (DE); Kromer, Christian Sebastian Fabian, 12489 Berlin (DE); Reuss, Marvin, 12489 Berlin (DE); Reuter, Marcus, 12489 Berlin (DE)
(74) Representative: Hafner & Kohl PartmbB

(57) **Abstract**

A method for manufacturing, via volumetric printing, at least one object.

## Description

### Field of invention

The invention relates to a method for manufacturing, via volumetric printing, at least one object, particularly at least one optical component or dental component, wherein the method comprises: at least one volumetric irradiation process, particularly at least one multi-color irradiation process, of irradiating a photocurable resin with light of at least one wavelength to form, by photopolymerization of a photocurable resin, at least one green body in a working volume, and/or at least one post-processing process of post-processing at least one green body, formed by the or at least one volumetric irradiation process of irradiating a photocurable resin with light of at least one wavelength to form, by photopolymerization of a photocurable resin, the at least one green body in a working volume, to form at least one object.

### Background Art

Respective methods for manufacturing, via volumetric printing, at least one object, particularly at least one optical component or at least one dental component, which comprise at least one volumetric irradiation process, particularly at least one multi-color irradiation process, of irradiating a photocurable resin with light of at least one wavelength to form, by photopolymerization of a photocurable resin, at least one green body in a working volume, and/or at least one post-processing process of post-processing at least one green body, formed by the or at least one volumetric irradiation process of irradiating a photocurable resin with light of at least one wavelength to form, by photopolymerization of a photocurable resin, the at least one green body in a working volume, to form at least one object, have already been suggested in the prior art.

A non-limiting exemplary method for manufacturing, via volumetric printing, at least one object is disclosed in at least one of: WO2020245456A1 or WO2024163474A1. At least some of the known methods for manufacturing, via volumetric printing, at least one object are typically, called xolography or computed axial lithography (CAL), for instance.

Irrespective of their concrete implementation, respective methods for manufacturing, via volumetric printing at least one object require handling of a respective green body resulting from a respective irradiation process, e.g. to remove the at least one green body from a working volume in which the respective irradiation process has been performed, and/or handling of an object resulting from a respective post-processing process e.g. to remove the object from a respective post-processing volume in which the respective post-processing process has been performed.

By now, the handling of the respective green body and/or object is typically, done manually, i. e. by gripping the at least one green body or object, respectively with a hand or a tool, respectively which creates, due to the direct contact between the hand or tool and the at least one green body or object, respectively the risk of damaging the at least one green body and/or the object, respectively. The damaging can be caused by grabbing one or more sensitive surface portions of the at least one green body and/or the object, using unsuitable tools which can create deformations, scratches, etc. in one or more surface portions of the at least one green body and/or the object, etc. Particularly, with regard to highly sensitive green bodies or objects, respectively, such as e.g. green bodies or objects, respectively which are meant for applications as optical elements, the damaging can even lead to that the green bodies or objects, respectively have to be discarded.

As such, there is a need for an improved method for manufacturing, via volumetric printing, at least one object which overcomes the above drawbacks.

It is therefore, the object of the invention to overcome the drawbacks of known methods for manufacturing, via volumetric printing, at least one object and to provide an improved method for manufacturing, via volumetric printing, at least one object.

### Summary of the invention

A first aspect of the invention relates to a method for manufacturing, via volumetric printing, at least one object. The method thus, generally serves for manufacturing, via volumetric printing, at least one object. A respective object can be or comprise a technical component or a group of respective technical components. As a non-limiting example, a respective technical component can be or comprise an optical component, such as e.g. a lens, particularly a microlens, a prism, a mirror, etc. or a group of respective optical components. As another non-limiting example, a respective technical component can be a medical component, particularly a dental component, such as e.g. a dental prosthesis, particularly a dental implant, a bridge, or an inlay, overlay, an aligner or a dental brace, a bite splint, a retainer, a mouthguard, a migraine prevention device, a mandibular advancement device, such as one useable as a dental sleep medicine, a removable, such as e.g. a denture, a partial, a combination of a crown and a partial, a flipper, etc.

The method comprises at least one of the following processes: at least one volumetric irradiation process, particularly at least one multi-color irradiation process, particularly at least one dual-color irradiation process, of irradiating a photocurable resin with light of at least one wavelength to form, by photopolymerization of the photocurable resin, at least one green body in a working volume, and at least one post-processing process of post-processing at least one green body, formed by the or at least one volumetric irradiation process of irradiating a photocurable resin with light of at least one wavelength to form, by photopolymerization of a photocurable resin, the at least one green body in a working volume, to form at least one object.

The at least one volumetric irradiation process can be or comprise volumetric printing of at least one green body. The at least one volumetric irradiation process can thus, be or form part of a volumetric printing process in which at least one green body is created via volumetric printing. The at least one green body can be an intermediate component which does not completely exhibit all desired or required properties of the respective object to be manufactured. As a non-limiting example, a respective green body can have the geometric base configuration, particularly the shape, of the object to be manufactured. As a non-limiting example, a respective green body can differ in one or more properties, e.g. in mechanical properties, such as e.g. hardness, stiffness, tensile strength, etc., from the object to be manufactured. At least some of these properties can be desired or required for the intended use of the object to be manufactured such that the respective green body needs to undergo at least one post-processing process.

The at least one post-processing process can be or comprise a post-processing of a respective green body created in the at least one volumetric irradiation process in which the respective green body is converted, e.g. by post-curing, into the actual object (so-called brown body). A respective post-processing process can thus, comprise at least one measure which enables post-curing of the as printed green body, particularly to convert it into a brown body. Non-limiting examples of a respective measure can be or comprise at least one of the following: subjecting the as printed green body to elevated temperatures, e.g. by placing it in a heating device, such as e.g. an oven in which it undergoes post-curing; subjecting the as printed green body to radiation exposure, e.g. by placing it in a radiation device in which it is irradiated with radiation to undergo post-curing; subjecting the as printed green body to a chemically reactive atmosphere, e.g. by placing it in a chemical reactor in which it can react with a reaction agent to undergo post-curing, etc.

Exemplary non-limiting details of the at least one volumetric irradiation process or a volumetric printing process comprising same are provided hereinafter:
The at least one volumetric irradiation process can be or comprise volumetric printing via any volumetric printing process. Non-limiting volumetric printing processes can e.g. comprise at least one of the following: xolography (see e.g. WO2020245456A1, the contents of which are incorporated herein by reference); computed axial lithography, CAL, (see e.g. US2018032666A1, US20180015672A1, WO2019043529A1, or the article by Kelly B. et al. entitled: "Volumetric additive manufacturing via tomographic reconstruction" (see e.g. DOI: 10.1126/science.aau7114), the contents of which are incorporated herein by reference); a volumetric printing process which comprises tomographic reproductions or tomographic back projections, particularly via projecting light images from multiple directions into a working volume; or a volumetric printing process which comprises controlling a light source comprising a plurality of pixels to emit a plurality of beams toward an optical objective, diverging the plurality of beams, via the optical objective, as the plurality of beams exits the optical objective toward a volume of resin, translating, via one or more motors, the optical objective with respect to the volume of resin, by translating the optical objective relative to the volume of resin, applying the plurality of beams to a plurality of voxels inside the volume of resin, solidifying the plurality of voxels by the application of the plurality of beams to the plurality of voxels, applying the plurality of beams, via the optical objective, such that each of the plurality of voxels are exposed by at least two different beams among the plurality of beams, and exposing, via the at least two different beams, the each voxel at two different times such that the at least two different beams spatially overlap in the each voxel, wherein a total exposure that solidifies the volume of resin in the each voxel equals to at least a sum of exposure of the at least two different beams at the each voxel (see e.g. WO2024163474A1, the contents of which are incorporated herein by reference).

As indicated above, it is possible that the at least one irradiation process can be or comprise volumetric printing via computed axial lithography. In such embodiments, it is possible that the photocurable resin is irradiated with light of one or more different wavelengths. In exemplary embodiments in which the photocurable resin is irradiated with two different wavelengths, a first wavelength can irradiate the photocurable resin from a first direction or at a first angle relative to a reference axis and a further wavelength can irradiate the photocurable resin from a second direction or at a second angle with respect to the reference axis, respectively. Particularly, the angle between first and second direction can be 90°. The first wavelength can e.g. be or comprise a wavelength in accordance with the examples of respective first wavelengths as specified further below. Likewise, the second wavelength can e.g. be or comprise a wavelength in accordance with the examples of respective second wavelength as specified further below.

Each volumetric printing process comprises at least one volumetric irradiation process, hereinafter also referred to as "irradiation process", which comprises irradiating a photocurable resin with light of at least one wavelength to form, by photopolymerization, particularly by multi-color photopolymerization, more particularly by dual-color photopolymerization, at least one green body. The at least one irradiation process can comprise irradiating, typically on basis of one or more printing parameters, a photocurable resin with light of a first wavelength and light of a second wavelength, which is different from the first wavelength, to form, by multi-color photopolymerization, particularly by dual-color photopolymerization, a green body. Particularly, the at least one irradiation process can comprise irradiating, typically on basis of one or more printing parameters, a photocurable resin with light of a first wavelength and light of a second wavelength, which is different from the first wavelength, to form, by multi-color photopolymerization, particularly by dual-color photopolymerization, a green body in at least one direction. The at least one direction can be or comprise a formation direction of the respective green body to be printed, i. e. the or a direction in which the respective green body is printed. Alternatively, the at least one direction can be or comprise a rotational motion of the at least one container about a rotation axis, particularly about a symmetry axis of the at least one container. The method generally, enables volumetric printing of one or more green bodies in the at least one (formation) direction.

Generally, the light used for irradiating the photocurable resin in the at least one irradiation process can have a wavelength ranging between 350 nm and 500 nm, particularly between 375 nm and 475 nm, more particularly between 375 nm and 455 nm, more particularly between 395 nm and 425 nm.

In exemplary embodiments in which the at least one irradiation process comprises irradiating the photocurable resin with light of a first wavelength and light of a second wavelength, which is different from the first wavelength, the following can apply:
The light of the first wavelength can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum of wavelengths, particularly at least partly covering the respective ranges. As a concrete example, the first wavelength can be ca. 375 nm. Typically, the first wavelength will be chosen at least under consideration of the photochemical properties, particularly the photochromic properties, of the photoinitiator molecules of at least one photoinitiator of the photocurable resin.

The light of the second wavelength can comprise a wavelength in the range of: 400 nm - 1000 nm, particularly 425 - 750 nm, more particularly 450 - 675 nm, more particularly 500 - 650 nm, for instance. The light of the second wavelength can comprise a spectrum of wavelengths, particularly at least partly covering the respective ranges. As a non-limiting example, the second wavelength can be ca. 475 nm. Preferably, the light of the second wavelength can comprise a wavelength in a range which does not include the first wavelength. Typically, the second wavelength will be chosen at least under consideration of the photochemical properties, particularly the photochromic properties, of the photoinitiator molecules of at least one photoinitiator of the photocurable resin.

The photocurable resin can be irradiated with the light of the first wavelength and the light of the second wavelength such that the light of the first wavelength and the light of the second wavelength intersect in the or a formation zone. The formation zone can generally be deemed the zone in which the photopolymerization of the photocurable resin takes place or is initiated which results in photocuring and/or solidification, respectively of the photocurable resin and forming at least a cross-section of the at least one green body to be printed. As such, the light of the first wavelength can be irradiated into the photocurable resin at a different angle and/or in a different direction relative to the light of the second wavelength. As a non-limiting example, the light of the first wavelength can be irradiated into the photocurable resin at an angle of ca. 90° relative to the light of the second wavelength.

The light of the first wavelength can comprise at least one light sheet. The at least one light sheet can comprise a plurality of light beams extending through the photocurable resin. The light beams can comprise two or more (substantially) parallel light beams. The light beams can intersect in one or more intersection points; respective intersection points can be (substantially) arranged in a common plane. Additionally or alternatively, the light beams can comprise a light plane, for instance. A light plane can be or comprise a light plane in which the or a plurality of light beams, such as e.g. (substantially) parallel light beams, extend adjacent such that there is no intermediate space between directly adjacent light beams. Notably, at least some of the directly adjacent light beams can also partially overlap. Alternatively, a light plane can be or comprise a light plane in which the or a plurality of light beams extend adjacent such that there is an intermediate space between directly adjacent light beams. Respective light beams can be generated by a directed light emission device, such as e.g. a laser device, which can form part of an irradiation device of a volumetric printing apparatus used for implementing the method, for instance.

A respective light sheet or light beam, respectively can comprise a main extension which can be generally understood as the extension direction of the respective individual light sheet or light beam between opposing walls or wall portions of a container delimiting a working volume. Particularly, the main extension direction of each respective light sheet or light beam can be understood as the main propagation direction of the light of the light sheet or light beam between opposing walls or wall portions of a container delimiting the working volume. Hence, the main extension direction of a respective light sheet or light beam can correspond to a direction along a line which halves the divergence or divergence angle, respectively of the light sheet or light beam within the working volume.

The height direction or height extension of a respective light sheet or light beam can be generally understood as the direction with maximum spatial extension which extends orthogonal to the main extension direction. Particularly, the height direction or height extension can be a direction or extension parallel to a wall or wall portion of a container delimiting the working volume through which wall or wall portion, respectively the light sheet or light beam enters the working volume.

The light of the second wavelength can comprise a projection of images corresponding to a cross-sectional geometry of at least one green body to be printed or a plurality of points or lines corresponding to a cross-sectional geometry of the at least one green body to be printed. Respective points or lines can form a pattern, such as e.g. a hatch pattern. A respective projection can be generated by a light projection device, such as e.g. a digital light projection device, which can form part of an irradiation device of a volumetric printing apparatus used for implementing the method. As a non-limiting example, the light projection device can be or comprise a digital micromirror device (DMD) or a liquid-crystal display (LCD) configured to generate the different images corresponding to a cross-sectional geometry of the at least one green body, which can form part of an irradiation device of a volumetric printing apparatus used for implementing the method. Additionally or alternatively, a respective point or line can be generated by a directed light emission device, such as e.g. a laser device, which can form part of an irradiation device of a volumetric printing apparatus used for implementing the method, for instance.

In exemplary embodiments with multiple light sheets, such as e.g. four light sheets, e.g. extending at 90° angles relative to each other, the formation direction can be a first direction, e.g. from top to bottom of the container, and the light of the second wavelength or a respective projection of images can extend in a direction opposite the first direction. Further, the container can be moved along a motion path opposite the first direction during the printing process.

The one or more printing parameters which can be used for implementing the at least one irradiation process can generally be or comprise parameters of the at least one irradiation process which influence the spatial and/or temporary irradiation of the photocurable resin with the light of the first and/or the second wavelength. The one or more printing parameters can additionally or alternatively be or comprise the number of irradiation steps in which one or more volume elements, e.g. voxels, of the photocurable resin are irradiated with the light of the first wavelength and/or with the light of the second wavelength. As such, the one or more printing parameters can be or comprise control parameters of a volumetric printing apparatus for implementing the method which control parameters concern the spatial and/or temporary irradiation of the photocurable resin with the light of the first and the second wavelength to form, particularly by multi-color photopolymerization, more particularly by dual-color photopolymerization, at least one green body in at least one direction. Particularly, the one or more printing parameters can be or comprise control parameters of an irradiation device of a respective volumetric printing apparatus which irradiation device is configured to irradiate a photocurable resin with light of a respective first and second wavelength to form, by multi-color photopolymerization, particularly by dual-color photopolymerization, a green body in at least one direction. The one or more printing parameters can also be or comprise control parameters of a drive device of a respective volumetric printing apparatus which drive device is configured to move the photocurable resin or a container containing the photocurable resin in the at least one direction, for instance.

As is apparent from above, the at least one irradiation process can comprise irradiating the photocurable resin with light from at least two different (spatial) directions, particularly such that one or more volume elements of the photocurable resin are irradiated with light from at least two different angles. Hence, the at least one irradiation process can comprise that the photocurable resin is irradiated from a first direction and at least one second direction, which is different from the first direction. The first direction can be or comprise a direction transverse to a formation direction of the at least one green body to be printed and the second direction can be a direction parallel to the formation direction of the at least one green body to be printed. As such, a respective first direction can be related with a respective first angle and a respective second direction can be related with a respective second angle which can be 90° relative to the first angle, for instance. In either case, the light from a respective first direction can intersect with the light of a respective second direction in the or a formation zone. As mentioned above, the formation zone is typically the zone in which the photopolymerization of the photocurable resin takes place which results in photocuring and/or solidification, respectively of the photocurable resin and forming at least a cross-section of the at least one green body to be printed.

As is further apparent from above, the photocurable resin can be provided in a container. The container can delimit a container volume. The container volume can comprise the or a working volume which is configured to receive or receives the photocurable resin. The container can comprise one or more walls. Particularly, the container can comprise one or more top-walls, one or more side-walls, and one or more bottom-walls. One or more walls of the container can be made of a material which enables irradiating the photocurable resin inside the container with the light of the at least one wavelength. A respective material can be, at least with respect to the light of the at least one wavelength, a transparent material, for instance. A respective transparent material can be or comprise glass or a polymer, such as e.g. polycarbonate, polymethylmethacrylate, or cyclic olefin copolymer, for instance.

As an independent aspect of the invention, at least one wall of the container can be provided with anti-reflective properties with respect to the light of the at least one wavelength. Particularly, at least one wall (rear-wall) of the container through which the light, particularly the light of the second wavelength, exits the container after having propagated through the working volume can be provided with anti-reflective properties with respect to the light of the at least one wavelength. More particularly, at least one freely exposed wall portion, i.e. the wall portion opposed to a wall portion which is in contact with the photocurable resin inside the working volume, of the at least one wall through which the light exits the container after having propagated through the working volume can be provided with anti-reflective properties with respect to the light of the at least one wavelength. Experiments have surprisingly shown that providing at least one wall of the container with anti-reflective properties with respect to the light of the at least one wavelength can be a measure to reduce or avoid undesired artefacts in green bodies which are believed to originate from back-reflections of the light at the at least one wall through which the light exits the container after having propagated through the working volume. Respective anti-reflective properties can e.g. be created by an anti-reflective surface structuring of the at least one wall of the container and/or by anti-reflective elements attached to the at least one wall of the container and/or by an anti-reflective coating of the at least one wall of the container.

As another independent aspect of the invention, at least one wall of the container can be provided with a surface structuring configured to diffuse and/or scatter the light of the at least one wavelength. A respective surface structuring can be or comprise a regular or irregular pattern of depressions and/or elevations, particularly microscopic depressions and/or elevations. Particularly, at least one wall (rear-wall) of the container through which the light, particularly the light of the second wavelength, exits the container after having propagated through the working volume can be provided with a respective surface structuring. More particularly, at least one freely exposed wall portion, i.e. the wall portion opposed to a wall portion which is in contact with the photocurable resin inside the working volume, of the at least one wall through which the light exits the container after having propagated through the working volume can be provided with a respective surface structuring. Experiments have surprisingly shown that providing at least one wall of the container provided with a respective surface structuring can be a measure to reduce or avoid undesired artefacts in green bodies which are believed to originate from back-reflections of the light at the at least one wall through which the light exits the container after having propagated through the working volume. Particularly, scattering and/or diffusing light can be beneficial as it reduces the intensity of possible back-reflections and/or as it defocuses possible back-reflections. A respective surface structuring can be created e.g. by blasting, particularly sand-blasting, etching, scratching, laser-processing, etc. of the at least one wall of the container. Also, coatings enabling the same effect are conceivable.

As another independent aspect of the invention, at least one wall of a container for a refractive index matching bath can be provided with anti-reflective properties with respect to the light of the at least one wavelength. Particularly, at least one wall (rear-wall) of such a container through which the light, particularly the light of the second wavelength, exits the container after having propagated through the container volume can be provided with anti-reflective properties with respect to the light of the at least one wavelength. More particularly, at least one freely exposed wall portion, i.e. the wall portion opposed to a wall portion which is in contact with a refractive index matching medium inside the container volume, of the at least one wall through which the light exits the container after having propagated through the container volume can be provided with anti-reflective properties with respect to the light of the at least one wavelength. Experiments have surprisingly shown that providing at least one wall of the container with anti-reflective properties with respect to the light of the at least one wavelength can be a measure to reduce or avoid undesired artefacts in green bodies which are believed to originate from back-reflections of the light at the at least one wall through which the light exits the container after having propagated through the container volume. Again, respective anti-reflective properties can e.g. be created by an anti-reflective surface structuring of the at least one wall of such a container and/or by anti-reflective elements attached to the at least one wall of such a container and/or by an anti-reflective coating of the at least one wall of such a container.

As another independent aspect of the invention, at least one wall of a container for a refractive index matching bath can be provided with a surface structuring configured to diffuse and/or scatter the light of the at least one wavelength. A respective surface structuring can be or comprise a regular or irregular pattern of depressions and/or elevations, particularly microscopic depressions and/or elevations. Particularly, at least one wall (rear-wall) of the container through which the light, particularly the light of the second wavelength, exits the container after having propagated through the working volume can be provided with a respective surface structuring. More particularly, at least one freely exposed wall portion, i.e. the wall portion opposed to a wall portion which is in contact with the photocurable resin inside the working volume, of the at least one wall through which the light exits the container after having propagated through the working volume can be provided with a respective surface structuring. Experiments have surprisingly shown that providing at least one wall of the container provided with a respective surface structuring can be a measure to reduce or avoid undesired artefacts in green bodies which are believed to originate from back-reflections of the light at the at least one wall through which the light exits the container after having propagated through the working volume. Particularly, scattering and/or diffusing light can be beneficial as it reduces the intensity of possible back-reflections and/or as it defocuses possible back-reflections. Again, a respective surface structuring can be created e.g. by blasting, particularly sand-blasting, etching, scratching, laser-processing, etc. of the at least one wall of the container.

As another independent aspect of the invention, at least one light collecting element can be assigned to the container. Particularly, the at least one light collecting element can be configured to collect light of the at least one wavelength, particularly light of the second wavelength, which exits the container after having propagated through the container volume. The at least one light collecting element can be assigned to at least one wall (rear-wall) of the container through which the light, particularly the light of the second wavelength, exits the container after having propagated through the working volume. More particularly, the at least one light collecting element can be assigned to at least one freely exposed wall portion, i.e. the wall portion opposed to a wall portion which is in contact with the photocurable resin inside the working volume, of the at least one wall through which the light exits the container after having propagated through the working volume. Experiments have surprisingly shown that assigning at least one light collecting element to at least one wall of the container can be a measure to reduce or avoid undesired artefacts in green bodies which are believed to originate from back-reflections of the light at the at least one wall through which the light exits the container after having propagated through the working volume. Hence, light collecting can mean that the light is at least partially absorbed and/or reflected and/or diffused by the at least one light collecting element one or more times such that the amount of light which is possibly back-reflected into the container is at least significantly reduced. As such, the at least one light collecting element can comprise one or more surfaces or walls in a specific spatial arrangement which enable absorption and/or reflection, particularly such that the amount of light which is possibly back-reflected into the container is at least significantly reduced.

According to a non-limiting example, the at least one light collecting element can be arranged directly adjacent to the container such that light which exits the container can directly enter the at least one light collecting element, particularly via a wall of the at least one light collecting element which defines a light entry portion of the at least one light collecting element. Yet, it is also possible that the at least one light collecting element is arranged offset to the at least one container such that at least one light deflection element, e.g. a mirror element, which is configured to deflect the light which has exited the at least one container towards the at least one light collecting element, particularly towards a wall of the at least one light collecting element which defines a light entry portion of the at least one light collecting element, is arranged between the at least one container and the at least one light deflection element.

Particularly, there are no further elements located between the container and the light collection element which could lead to at least partial back reflections of the light into the container, such as e.g. transparent plates of the housing. Particularly a light collection element, can absorb at least 50 % of the light of the at least one wavelength, preferably at least 75 % of the light of the at least one wavelength, more preferably at least 90 % of the light at least one at least one wavelength, even more preferably at least 95 % of the light of the at least one wavelength, still more preferably 99 % of the light of the at least one wavelength, most preferably 100 % of the light of the at least one wavelength.

According to a further non-limiting example, the at least one light collecting element can be any structure configured to collect light of the at least one wavelength, particularly light of the second wavelength. As explained above, light collecting can mean that the light of the at least one wavelength, particularly light of the second wavelength, is at least partially absorbed and/or reflected and/or diffused by the at least one light collecting element one or more times such that the amount of light which is possibly back-reflected into the container is at least significantly reduced. As such, the at least one light collecting element can comprise one or more surfaces or walls in a specific spatial arrangement which enable absorption and/or reflection of the light of the at least one wavelength, particularly the second wavelength, particularly such that the amount of light which is possibly back-reflected into the container is at least significantly reduced. Hence, a rather simple exemplary configuration of a light collecting element can comprise a structure, such as e.g. a plate, a sheet, etc., which has light collecting properties, i.e. which is configured to at least partially absorb and/or reflect and/or diffuse light of the at least one wavelength one or more times such that the amount of light of the at least one wavelength which is possibly back-reflected into the container is at least significantly reduced. Respective light collecting properties can result from a light absorbing color, e.g. a dark color, such as e.g. black, of one or more surfaces or walls of the at least one light collecting element and/or a specific absorbing and/or reflecting and/or diffusing surface structuring of one or more surfaces or walls of the at least one light collecting element, for example.

According to a further non-limiting example, the at least one light collecting element can e.g. comprise a hollow structure with at least one light entry portion. As an example, the at least one light collecting element can have at least one of: a polyhedric base configuration and thus, the base shape of a polyhedron; a sphere base configuration and thus, the base shape of a sphere or parts of a sphere; a sphere-like base configuration and thus, e.g. the base shape of a spiral, a screw winding, a snail-shell, or any other tubular shape. Particularly, the at least one light collecting element can comprise at least two parallel walls and at least two inclined walls arranged at an angle of less than 180°, particularly less than 150°, particularly less than 120°, relative to each other. Particularly, the at least two inclined walls can form a tip-portion of the at least one light collecting element which is arranged opposite to a wall defining a light entry portion of the at least one light collecting element. Particularly, the at least two walls can enable at least one of: absorption, reflection, diffusion, etc. such that the light entering the at least one light collecting element is absorbed, reflected, diffused, etc. multiple times within the at least one light collecting element.

Generally, the at least one light collecting element can comprise at least one surface or wall which is inclined at an angle, e.g. at an angle different from 90°, relative to the direction of the light, particularly the light of the second wavelength, which exits the container after having propagated through the working volume. The angle of the surface or wall of the at least one light collecting element enables that the light which exits the container after having propagated through the working volume does not reflect back into the working volume or at least that the amount of light that does reflect back into the working volume is (substantially) reduced. Particularly, the angle of the surface or wall of the at least one light collecting element enables that the light is deflected and/or scattered in a direction away from the working volume or at least mainly in a direction away from the working volume.

Generally, the at least one light collecting element can have a color enabling absorption of the light of the at least one wavelength, such as e.g. a dark color, e.g. black, which enables absorption of the light of the at least one wavelength. For multi-color processes, the at least one light collecting element can have a color enabling absorption of the light of the second or further wavelength, such as e.g. a dark color, e.g. black, which enables absorption of the light of the second or further wavelength.

Generally, the at least one light collecting element can be made of a material having light collecting properties, particularly high-absorbing properties and/or low-reflecting properties, for the light of the at least one wavelength. Particularly, the at least one light collecting element can be made of a material having light collecting properties, particularly high-absorbing properties and/or low-reflecting properties, for the light of the at least one second wavelength, particularly in connection with embodiments in which the light the at least one first wavelength forms a light sheet or light plane, respectively. The respective optical properties of the at least one light collecting element, i.e. particularly the light collecting, absorption, reflection, scattering and/or diffusing properties, can be material-immanent properties and/or provided by a functionalization, e.g. a coating, surface structuring, etc., of at least one wall of the at least one light collecting element.

According to another independent aspect of the invention, a method for manufacturing, via volumetric printing, at least one object, particularly at least one optical component, is provided. This method comprises: step a) which comprises at least one volumetric irradiation process, particularly at least one multi-color irradiation process, of irradiating a photocurable resin with light of at least one wavelength to form, by photopolymerization of a photocurable resin, at least one green body in a working volume, and step b) which comprises performing at least one measure to avoid or reduce back-reflections of light of the at least one wavelength into the working volume. Particularly, the method comprises in step a) at least one multi-color irradiation process of irradiating a photocurable resin with light of at least one first wavelength and at least one further wavelength, which is different from the first wavelength, to form, by photopolymerization of a photocurable resin, at least one green body in a working volume, and in step b) performing at least one measure to avoid or reduce back-reflections of light of the at least one further wavelength into the working volume. The inventors have found that the implementation of step b) can surprisingly significantly improve the quality of the printed objects (green bodies), although measures according to step b) are performed, after the light of the at least one wavelength, particularly the second wavelength, has exited the working volume. The effect of performing at least one measure to avoid or reduce back-reflections of light of the at least one wavelength into the working volume has never been deemed a relevant parameter for influencing the quality of the printed objects so far. State of the art methods consider only manipulation of the light before the light enters the photocurable resin, such as e.g. via beam shaping or grey scaling, to affect the object shape or quality.

As a non-limiting example, step b) can comprise using at least one container, wherein at least one wall of the at least one container is provided with anti-reflective properties with respect to the light of the at least one wavelength. Particularly, at least one wall (rear-wall) of the at least one container through which the light, particularly the light of the second wavelength, exits the at least one container after having propagated through the working volume can be provided with anti-reflective properties with respect to the light of the at least one wavelength. More particularly, at least one freely exposed wall portion, i.e. the wall portion opposed to a wall portion which is in contact with the photocurable resin inside the working volume, of the at least one wall through which the light exits the container after having propagated through the working volume can be provided with anti-reflective properties with respect to the light of the at least one wavelength. As indicated above, experiments have surprisingly shown that providing at least one wall of the at least one container with anti-reflective properties with respect to the light of the at least one wavelength can be a measure to reduce or avoid undesired artefacts in green bodies which are believed to originate from back-reflections of the light at the at least one wall through which the light exits the container after having propagated through the working volume. Respective anti-reflective properties can e.g. be created by an anti-reflective surface structuring of the at least one wall of the at least one container and/or by anti-reflective elements attached to the at least one wall of the at least one container and/or by an anti-reflective coating of the at least one wall of the at least one container.

As another non-limiting example, step b) can comprise using at least one container, wherein at least one wall of the at least one container is provided with a surface structuring configured to diffuse and/or scatter the light of the at least one wavelength. A respective surface structuring can be or comprise a regular or irregular pattern of depressions and/or elevations, particularly microscopic depressions and/or elevations. Particularly, at least one wall (rear-wall) of the at least one container through which the light, particularly the light of the second wavelength, exits the at least one container after having propagated through the working volume can be provided with a respective surface structuring. More particularly, at least one freely exposed wall portion, i.e. the wall portion opposed to a wall portion which is in contact with the photocurable resin inside the working volume, of the at least one wall through which the light exits the at least one container after having propagated through the working volume can be provided with a respective surface structuring. As indicated above, experiments have surprisingly shown that providing at least one wall of at least one container provided with a respective surface structuring can be a measure to reduce or avoid undesired artefacts in green bodies which are believed to originate from back-reflections of the light at the at least one wall through which the light exits the at least one container after having propagated through the working volume. Particularly, scattering and/or diffusing light can be beneficial as it reduces the intensity of possible back-reflections and/or as it defocuses possible back-reflections. A respective surface structuring can be created e.g. by blasting, particularly sand-blasting, etching, scratching, laser-processing, etc. of the at least one wall of the container. Also, coatings enabling the same effect are conceivable.

As another non-limiting example, step b) can comprise using at least one container for a refractive index matching bath, wherein at least one wall of the at least one container is provided with anti-reflective properties with respect to the light of the at least one wavelength. Particularly, at least one wall (rear-wall) of the at least one container through which the light, particularly the light of the second wavelength, exits the container after having propagated through the container volume can be provided with anti-reflective properties with respect to the light of the at least one wavelength. More particularly, at least one freely exposed wall portion, i.e. the wall portion opposed to a wall portion which is in contact with a refractive index matching medium inside the container volume, of the at least one wall through which the light exits the at least one container after having propagated through the at least one container volume can be provided with anti-reflective properties with respect to the light of the at least one wavelength. As indicated above, experiments have surprisingly shown that providing at least one wall of the at least one container with anti-reflective properties with respect to the light of the at least one wavelength can be a measure to reduce or avoid undesired artefacts in green bodies which are believed to originate from back-reflections of the light at the at least one wall through which the light exits the at least one container after having propagated through the at least one container volume. Again, respective anti-reflective properties can e.g. be created by an anti-reflective surface structuring of the at least one wall of the at least one container and/or by anti-reflective elements attached to the at least one wall of such a container and/or by an anti-reflective coating of the at least one wall of the at least one container.

As another non-limiting example, step b) can comprise using at least one container for a refractive index matching bath, wherein at least one wall of the at least one container is provided with a surface structuring configured to diffuse and/or scatter the light of the at least one wavelength. A respective surface structuring can be or comprise a regular or irregular pattern of depressions and/or elevations, particularly microscopic depressions and/or elevations. Particularly, at least one wall (rear-wall) of the at least one container through which the light, particularly the light of the second wavelength, exits the at least one container after having propagated through the working volume can be provided with a respective surface structuring. More particularly, at least one freely exposed wall portion, i.e. the wall portion opposed to a wall portion which is in contact with the photocurable resin inside the working volume, of the at least one wall through which the light exits the at least one container after having propagated through the working volume can be provided with a respective surface structuring. As indicated above, experiments have surprisingly shown that providing at least one wall of the at least one container provided with a respective surface structuring can be a measure to reduce or avoid undesired artefacts in green bodies which are believed to originate from back-reflections of the light at the at least one wall through which the light exits the at least one container after having propagated through the working volume. Particularly, scattering and/or diffusing light can be beneficial as it reduces the intensity of possible back-reflections and/or as it defocuses possible back-reflections. Again, a respective surface structuring can be created e.g. by blasting, particularly sand-blasting, etching, scratching, laser-processing, etc. of the at least one wall of the at least one container.

As another non-limiting example, step b) can comprise using at least one light collecting element which is assigned to the at least one container which defines or delimits the working volume. Particularly, the at least one light collecting element can be configured to collect light of the at least one wavelength, particularly light of the second wavelength, which exits the at least one container after having propagated through the container volume. The at least one light collecting element can be assigned to at least one wall (rear-wall) of the at least one container through which the light, particularly the light of the second wavelength, exits the at least one container after having propagated through the working volume. More particularly, the at least one light collecting element can be assigned to at least one freely exposed wall portion, i.e. the wall portion opposed to a wall portion which is in contact with the photocurable resin inside the working volume, of the at least one wall through which the light exits the at least one container after having propagated through the working volume. As indicated above, experiments have surprisingly shown that assigning at least one light collecting element to at least one wall of the at least one container can be a measure to reduce or avoid undesired artefacts in green bodies which are believed to originate from back-reflections of the light at the at least one wall through which the light exits the at least one container after having propagated through the working volume. Hence, light collecting can mean that the light is at least partially absorbed and/or reflected and/or diffused by the at least one light collecting element one or more times such that the amount of light which is possibly back-reflected into the at least one container is at least significantly reduced. As such, the at least one light collecting element can comprise one or more walls in a specific spatial arrangement which enable absorption and/or reflection, particularly such that the amount of light which is possibly back-reflected into the container is at least significantly reduced. All remarks made in connection with the at least one light collecting element apply in analogous manner.

As is further apparent from above, the at least one irradiation process can comprise irradiating a photocurable resin including one or more photoinitiator molecules with light of at least a first wavelength and a second wavelength, different from the first wavelength, to form, by multi-color photopolymerization, particularly by dual-color photopolymerization, at least one green body (as indicated above). Concrete examples of respective first and second wavelengths are provided further above. Particularly, the at least one irradiation process can comprise irradiating the photocurable resin with the light of the first wavelength which can cause one or more photoinitiator molecules of the photocurable resin to transfer from an initial state into an intermediate state with changed optical properties compared to the initial state, such that the photoinitiator molecules of the one or more photoinitiators in the intermediate state can absorb the light of the second wavelength which results in that the photoinitiator molecules of the one or more photoinitiators are transferred from the intermediate state to a reactive state by absorption of light of the second wavelength which locally triggers the polymerization of the photocurable resin to form the at least one green body.

As a non-limiting example, the photocurable resin can be a photocurable monomer resin or a photocurable oligomer resin, which may e.g. include acrylates, methacrylates, thiol + ene, epoxides, oxiranes, oxetanes, or vinylethers, for instance. Multi-color photopolymerization can comprise multi-photon photopolymerization, particularly dual-photon photopolymerization, of the photocurable resin. Photopolymerization of the photocurable resin is typically effected by irradiating the photocurable resin with the light of the first wavelength and, particularly simultaneously, the light of the second wavelength, which is different from the first wavelength, which results in that photoinitiator molecules of the one or more photoinitiators of the photocurable resin are converted, e.g., due to the absorption of the light of the first wavelength, from an initial state in which the molecules of the one or more photoinitiators (substantially) do not absorb the light of the second wavelength, into an intermediate state with changed optical properties compared to the initial state, such that the photoinitiator molecules of the one or more photoinitiators in the intermediate state absorb the light of the second wavelength which results in that the molecules of the one or more photoinitiators are transferred from the intermediate state to a reactive state which locally triggers the polymerization of the photocurable resin to form at least one green body.

A back-reaction of the photoinitiator molecules of the one or more photoinitiators from the intermediate state into the initial state can be thermally induced, for instance. Hence, the intermediate state may return thermally at the printing temperature of the photocurable resin to the initial state. Preferably, the intermediate state may return thermally at the respective printing temperature to the initial state in a reaction or reaction sequence with one or more rate constants with the highest rate constant higher than k=0.01 s⁻¹. Especially preferably, at least one rate constant for the thermal back-reaction is higher than 0.02 s⁻¹, more preferably higher than 0.05 s⁻¹, even more preferably higher than 0.1 s⁻¹, still more preferably higher than 1.0 s⁻¹, most preferably higher than 5.0 s⁻¹. Hence, the rate constant may be in the range of 0.05 s⁻¹ and 1.0 s⁻¹, or any other range which may be formed from the values above. A high rate constant may result in an improved resolution of the printed green body.

Alternatively, the intermediate state may substantially not return thermally at the respective printing temperature of the photocurable resin to the initial state. Preferably, the intermediate state may return thermally at the printing temperature to the initial state in a reaction or reaction sequence with one or more rate constants with at least one rate constant lower than k=100 s⁻¹. Especially preferably, at least one rate constant for the thermal back-reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Further alternatively, the intermediate state may substantially not return thermally at the printing temperature of the photocurable resin to the initial state. Preferably, the intermediate state may return thermally at the printing temperature to the initial state in a reaction or reaction sequence with one or more rate constants with the highest rate constant lower than k=100 s⁻¹. Especially preferably, the highest rate constant for the thermal back-reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

The photocurable resin can have a relatively high viscosity. As a non-limiting example, the viscosity of the photocurable resin can range between 10² mPa·s to 10⁷ mPa·s, preferably of 10³ to 10⁶ mPa·s, particularly between 10³ to 10⁵ mPa·s, most preferably between 10⁴ to 9 x 10⁴ mPa·s.

The photocurable resin can have or exhibit non-Newtonian flow properties, i.e. shear-thinning flow properties and/or can have a yield point that is greater than the static shear stress caused by the at least one green body. The yield point of the photocurable resin can be determined, for example, by rotational rheometry (e.g. via a plate-plate rheometer) under quasi-static load via a 'creep test' or by running a slow shear stress ramp. A respective yield point of photocurable resin can be set by admixing oligomers and polymers with non-Newtonian flow properties and/or by admixing additives (rheological modifiers), for instance. Experiments have surprisingly shown that the use of a photocurable resin having respective non-Newtonian flow properties can be beneficial for the volumetric printing process and can result in improved properties of green bodies printed with the volumetric printing process. Particularly, the use of a photocurable resin having a respective non-Newtonian rheological behavior can facilitate manufacturing a green body which remains (substantially) fixed in position within the working volume during its formation which typically, improves the result of the volumetric printing process.

As a non-limiting example, the photocurable resin can have a yield point which is greater than the static shear load from the green body, is typically greater than or equal to 0.1 Pa, in particular 0.2 Pa, in particular 0.3 Pa, in particular 0.4 Pa, in particular 0.5 Pa, in particular 0.6 Pa, in particular 0.75 Pa, in particular 1 Pa. Particularly, the yield point of the photocurable resin can be at least 0.1 Pa per cm³ of the working volume. For an exemplary working volume of 1 cm³, the yield point of the photocurable resin can be at least 0.1 Pa, for example. For an exemplary working volume of 2 cm³, the yield point of the photocurable resin can be at least 0.2 Pa, for example.

Exemplary suitable photocurable resins and exemplary suitable photoinitiators of a respective photocurable resin are e.g. known from US5230986A, WO2020245456A1, WO2023034398A1, WO2023034404A1, WO2023034402A1, WO2023220461A1, WO2023220463A1, the contents of which are incorporated herein by reference.

At least one of: the photocurable resin, an irradiation device emitting the light of the at least one wavelength, and a formation zone within the photocurable resin, which is irradiated with the light of the at least one wavelength during the at least one irradiation process, can be moved during the at least one irradiation process. A respective motion of at least one of: the photocurable resin, the irradiation device emitting the light of the at least one wavelength, or the formation zone within the photocurable resin, which is irradiated with the light of the at least one wavelength, can enable a highly efficient printing process and high printing speeds, respectively. As such, the method can particularly, comprise that the or a formation zone can be moved along at least one direction, particularly relative to a respective container (as indicated above) comprising the photocurable resin. The at least one direction can comprise the or a formation direction of the at least one green body to be printed. Motion of the at least one formation zone can e.g. be relative to at least one functional component of a volumetric printing apparatus used for implementing the method, for instance. A respective functional component of a respective volumetric printing apparatus can be a respective container or an irradiation device, for instance. As such, during the at least one irradiation process, the at least one formation zone can be actively moved, e.g. due to a coupling with a drive device, such as e.g. a motor, along the at least one direction, particularly the formation direction, e.g. at a nominal motion rate, through at least one part of the container volume, while the container is stationary. Alternatively, during the at least one irradiation process, the container can be actively moved, e.g. due to a coupling with a drive device, such as e.g. a motor, along the at least one direction, particularly the formation direction, while the at least one formation zone is stationary. Further alternatively, both the at least one formation zone and the container can be actively moved, e.g. due to a coupling with a drive device, such as e.g. a motor, wherein the at least one formation zone and the container can be moved in the same direction or in opposite directions. Also, the nominal motion rate and/or motion direction at which the at least one formation zone and/or the container is moved along the at least one direction, particularly relative to the container, can be varied. Additionally or alternatively, the or a second irradiation apparatus of a dual-color irradiation device can be actively moved along the at least one direction, particularly the formation direction, while at least one of the container or the at least one formation zone is actively moved or not actively moved. Actively moving the or a second irradiation apparatus of a dual-color irradiation device can be a means to implement a focus correction of the light of the second wavelength, for instance. As such, also embodiments are contemplated in which each of the or a second irradiation apparatus of a dual-color irradiation device, the at least one formation zone and the container are actively moved before, during or after the at least one irradiation process. Respective active motions can be controlled by the or a controller of an apparatus used for implementing the method, for instance. Additionally or alternatively, a focus correction can be implemented by at least one refractive index matching bath container containing a refractive index matching medium or a refractive index matching bath, respectively. The at least one refractive index matching bath container can also comprise the container which defines the actual working volume. Notably, the container which defines the actual working volume can be moved during a printing process relative to the refractive index matching bath container. Further, the refractive index matching bath container does not move during the printing process or at least not substantially move during the printing process. Particularly, the refractive index matching bath does not move or at least not substantially move relative to the formation zone or relative to the light source of the light of the at least one wavelength, particularly the light source of the light of the second wavelength.

To overcome the above-mentioned drawbacks of known methods for manufacturing, via volumetric printing, at least one object, the method comprises supporting the at least one green body and/or the at least one object, particularly during and/or after the at least one irradiation process, via at least one support structure. The at least one support structure can also be deemed or denoted a "build plate". As a non-limiting example, the following exemplary embodiments are conceivable: supporting the at least one green body by a support structure during and/or after the at least one volumetric irradiation process; and/or supporting the at least one green body by the support structure during the at least one post-processing process; and/or supporting the at least one object by the support structure during and/or after the at least one post-processing process.

Although one of the major advantages which has been claimed for typical volumetric printing technologies, such as e.g. xolography and CAL, is the absence of a respective support structure, the inventors have surprisingly found that the utilization of at least one support structure can significantly increase object quality and the efficiency of the manufacturing process.

The method can thus, comprise using the or at least one support structure for supporting the at least one green body during and/or after the at least one irradiation process and thus, during and/or after volumetric printing. The method thus, enables handling the at least one green body during and/or after the at least one irradiation process and thus, during and/or after volumetric printing. Handling the at least one green body during and/or after the at least one irradiation process and thus, during and/or after volumetric printing can enable moving the at least one green body within the working volume and/or removing the at least one green body from the working volume. As explained herein, the working volume is typically, delimited by a container used in connection with the at least one irradiation process.

Additionally or alternatively, the method can comprise using the or at least one support structure for supporting the at least one object during and/or after the post-processing process and thus, during and/or after post-processing. The method thus, enables handling the at least one object during and/or after the post-processing process and thus, during and/or after post-processing. Handling the at least one object during and/or after the post-processing process and thus, during and/or after post-processing can enable moving the at least one object within at least one post-processing volume and/or removing the at least one object from at least one post-processing volume. As explained herein, the post-processing volume is typically, delimited by at least one post-processing device used in connection with the post-processing process.

It is apparent from the above, that the method can also comprise using at least one support structure for supporting the at least one green body and/or the at least one object after the at least one irradiation process and before the post-processing process. The period using at least one support structure for supporting the at least one green body and/or the at least one object can be or comprise an intermediate stage of the method.

As such, the method can comprise using at least one support structure for supporting the at least one green body and/or the at least one object before, during and after of a respective intermediate stage.

The method thus, generally comprises using at least one support structure for supporting the at least one green body and/or the at least one object. Hence, a manual handling of the at least one green body and/or the at least one object, e.g. manually griping the at least one green body or the at least one object, respectively, is generally not required in accordance with the method because the at least one green body or the at least one object, respectively is supported by the at least one support structure. Notably, the at least one support structure can be gripped by a hand or by a tool, particularly a gripping tool, e.g. of a handling device, which means that any direct contact between the at least one green body or the at least one object and the hand or tool, which direct contact could possibly damage the at least one green body or the at least one object, respectively can be avoided.

The method can particularly, used in connection with a photocurable resin having a relatively low viscosity as the effects of the at least one support structure can be particularly, beneficial in connection with processing photocurable resins having a relatively low viscosity. Also, the photocurable resin does not necessarily require a yield point that is greater than the static shear stress caused by the at least one green body. As a non-limiting example, the viscosity of the photocurable resin can be lower than 10² mPa·s, particularly lower than 10 mPa·s.

Non-limiting exemplary embodiments of the method are provided below. Two or more of these exemplary embodiments can be arbitrarily combined with two or more other exemplary embodiments.

According to a first exemplary embodiment, the at least one irradiation process can comprise irradiating the photocurable resin in the working volume with light of at least two different wavelengths, particularly from different irradiation directions, more particularly wherein light of at least one first wavelength comprises a light sheet and light of at least one second wavelength comprises a projection of images. Implementing the at least one irradiation process to comprise irradiating the photocurable resin in the working volume with light of at least two different wavelengths, particularly from different irradiation directions, more particularly wherein light of at least one first wavelength comprises a light sheet and light of at least one second wavelength comprises a projection of images can result in green bodies of generally good properties, particularly with respect to their geometric properties and structural fidelity, respectively. One, more or all remarks made further above in direct or indirect connection with the at least one irradiation process apply.

According to a further exemplary embodiment, the at least one post-processing process can comprise at least one process of: separating excess or uncured photocurable resin from the at least one green body, e.g. by washing the at least one green body in at least one washing fluid, which can be or comprise a solvent; drying the at least one green body, e.g. by (gently) heating the at least one green body or subjecting the at least one green body to a gas flow, particularly air flow; post-curing the at least one green body, e.g. by tempering the at least one green body and/or by irradiating the at least one green body with post-curing irradiation; polishing the at least one green body, coating the at least one green body; and moving or transferring the at least one green body from a first orientation and/or position, which can be correlated with at least one first post-processing process or post-processing device implementing such at least one first post-processing process, to at least one further orientation and/or position, which can be correlated with at least one further post-processing process or post-processing device implementing such at least one further post-processing process. One, more or all remarks made further above in direct or indirect connection with the at least one post-processing process apply. Each post-processing process can be performed via a post-processing device which is configured to perform the respective post-processing process.

According to another exemplary embodiment, the at least one green body can be removed from the working volume in which the at least one irradiation process takes place via the at least one support structure. The support structure is thus, not necessarily at least partially arranged within the working volume during the at least one irradiation process. Particularly, the at least one support structure can be introduced, e.g. by moving the at least one support structure in at least one degree of freedom of motion relative to the container, into the working volume for removing the at least one green body from the working volume before or after the at least one irradiation process is completed. More particularly, the at least one support structure can be introduced into the working volume for removing the at least one green body from the working volume within a period of the last 5, 10, 15, 20, 25 or 30 seconds before completion of the at least one irradiation process or after completion of the at least one irradiation process, particularly within a period of the last 5, 10, 15, 20, 25 or 30 seconds after completion of the at least one irradiation process and thus, within a period of the least 5, 10, 15, 20, 25 or 30 seconds before completion of the at least one volumetric printing process of the at least one green body or after completion of the at least one volumetric printing process of the at least one green body, particularly within a period of the last 5, 10, 15, 20, 25 or 30 seconds after completion of the at least one volumetric printing process of the at least one green body.

As such, the method can comprise introducing the at least one support structure into the working volume while the at least one irradiation process is still ongoing and/or introducing the at least one support structure into the working volume when the at least one irradiation is completed. Introducing the at least one support structure into the working volume before the at least one irradiation process is completed, can be beneficial as it can increase efficiency of the overall volumetric printing process. Introducing the at least one support structure into the working volume after the at least one irradiation process is completed, can be beneficial as it can avoid possible undesired effects, e.g. by light absorption or light reflection effects, caused by the at least one support structure during the volumetric printing process. The same applies for exemplary embodiments in which multiple support structures are used. In such exemplary embodiments, the method can comprise introducing one or more first support structures into the working volume while the at least one irradiation process is still ongoing and/or introducing one or more second support structures into the working volume when the at least one irradiation process is completed.

According to another exemplary embodiment, the at least one green body or object, respectively can be removed from the or a post-processing volume in which the at least one post-processing process takes place via the at least one support structure. The at least one support structure is thus, not necessarily at least partially arranged within the post-processing volume during the at least one post-processing process. Particularly, the at least one support structure can be introduced, e.g. by moving the at least one support structure in at least one degree of freedom of motion relative to a post-processing device in which the at least one post-processing process takes place, into the post-processing volume for removing the at least one green body or object, respectively from the post-processing volume before or after the at least one post-processing process is completed. More particularly, the at least one support structure can be introduced into the post-processing volume for removing the at least one green body and/or object, respectively from the post-processing volume within a period of the last 5, 10, 15, 20, 25 or 30 seconds before completion of the at least one post-processing process or after completion of the at least one post-processing process, particularly within a period of the last 5, 10, 15, 20, 25 or 30 seconds after completion of the at least one post-processing process and thus, within a period of the last 5, 10, 15, 20, 25 or 30 seconds before completion of the at least one post-processing process of the at least one green body or object, respectively or after completion of the at least one post-processing process of the at least one green body or object, respectively, particularly within a period of the last 5, 10, 15, 20, 25 or 30 seconds after completion of the at least one post-processing process of the at least one green body or object, respectively.

As such, the method can comprise introducing the at least one support structure into the post-processing volume while the at least one post-processing process is still ongoing and/or introducing the at least one support structure into the post-processing volume when the at least one post-processing process is completed. Introducing the at least one support structure into the post-processing volume before the at least one post-processing process is completed, can be beneficial as it can increase efficiency of the overall post-processing process. Introducing the at least one support structure into the post-processing volume after the at least one post-processing process is completed, can be beneficial as it can avoid possible undesired effects, e.g. by energy absorption or energy reflection effects, caused by the at least one support structure during the post-processing process. The same applies for exemplary embodiments in which multiple support structures are used. In such exemplary embodiments, the method can comprise introducing one or more first support structures into the post-processing volume while the at least one post-processing process is still ongoing and/or introducing one or more second support structures into the post-processing volume when the at least one post-processing process is completed.

According to another exemplary embodiment, the at least one green body or object, respectively can be at least partially mechanically contacted or supported by the at least one support structure. As such, the at least one support structure can generally be configured to mechanically contact, support or provide a mechanical contact or support of at least one green body and/or of at least one object. Notably, the same support structure can be configured to mechanically contact, support or provide a mechanical contact or support of at least one green body and of at least one object resulting from the at least one green body. In other words, the at least one support structure can be used both during and/or after the at least one irradiation process to contact or support the at least one green body created therein and used both during and/or after at least one post-processing process in which the at least one green body is converted in at least one object.

The mechanical support of the at least one green body or object, respectively via the at least one support structure can comprise that one or more first portions of the at least one green body or object, respectively are mechanically contacted or supported, i.e. in direct mechanical contact with the at least one support structure, e.g. via one or more first wall portions of the at least one support structure, and that one or more second portions of the at least one green body or object, respectively are not mechanically contacted or supported, i.e. not in direct mechanical contact with the at least one support structure. Respective first portions of the at least one green body or object, respectively can comprise portions, such as e.g. outer contour portions, which are not essential for an intended design and/or function of the object to be manufactured. Respective second portions of the at least one green body or object, respectively can comprise portions, such as e.g. outer contour portions, which are essential for the intended design and/or function of the object to be manufactured.

Any mechanical support of respective one or more first portions of the at least one green body or object, respectively with the at least one support structure can be or comprise a mechanical contact or connection between the at least one green body or object, respectively and the at least one support structure. A respective mechanical contact or connection between the at least one support structure and the at least one green body or object, respectively can be a detachable contact or connection, particularly a reversible contact or connection. As an example, the force required for building the contact or connection and the force for breaking the contact or connection can be the same or at least similar. As another example, when a mechanical contact or connection between the at least one green body or object, respectively and the at least one support structure is broken, it can be re-established. As another example, a mechanical contact or connection can (substantially) rely on gravity, e.g. when the at least one green body or object, respectively is placed on a surface of the at least one support structure, which, as will be apparent from below, can e.g. be or comprise a plate, a mechanical contact is made.

As such, the at least one support structure can comprise a design, particularly a specific constructive design with respect to at least one specific object or type of object to be manufactured, which facilitates that one or more first portions of the specific object or a green body of the specific object, respectively are mechanically supported, i.e. in direct mechanical contact with the at least one support structure, and that one or more second portions of the specific object or a green body underlying the specific object, respectively are not mechanically supported, i.e. not in direct mechanical contact with the at least one support structure. As a non-limiting example, the at least one support structure can comprise a design, particularly a specific constructive design with respect to at least one specific object or type of object to be manufactured, which comprises one or more first wall portions which are shaped and sized with respect to respective one or more first portions of a specific object or a green body underlying the specific object. As a more concrete example, the at least one support structure can comprise a design, particularly a specific constructive design with respect to at least one object or type of object to be manufactured which has a disc-like shape, which comprises one or more curved or quasi-curved first wall portions which are shaped and sized, i.e. geometrically adapted, with respect to the outer contour or outer perimeter of the specific object or a green body underlying the specific object such that a stable mechanical support is possible. As such, the outer contour or outer perimeter of the specific object or a green body underlying the specific object can be or comprise a respective first portion of the specific object or type of object to be manufactured, for instance.

According to another exemplary embodiment, the at least one green body or object, respectively can comprise at least one attachment element or attachment site for at least temporarily attaching the at least one support structure to the at least one green body or object, respectively. The at least one attachment element or attachment site can facilitate a highly stable support of the at least one green body or object, respectively via the at least one support structure as the at least one green body or object, respectively can be at least temporarily attached to the at least one support structure. Notably, attaching can e.g. comprise an at least temporary fastening of at least one portion to the at least one green body or object, respectively with the at least one attachment element or attachment site provided with the at least one support structure, or vice versa. The attachment element or attachment site provided with the at least one green body or object, respectively can thus, be or comprise a fastening element or fastening site which can be or comprise an opening, hook, loop, lug, protrusion, recess, etc. Particularly, a so-called fishing rod according to Herder ("Herder'sche Angel") can be used.

According to an exemplary embodiment, the at least one attachment element or attachment site can be integrally formed with the at least one green body via the at least one volumetric irradiation process. As such, the at least one green body can be printed with at least one attachment element or attachment site which enables that the at least one green body or object, respectively can be at least temporarily attached to the at least one support structure. As will be apparent from further below, the at least one attachment element or attachment site, respectively can be or be provided, particularly integrally formed, with an auxiliary or sacrificial portion of the at least one green body or object, respectively or a portion of a base body of the at least one green body or object, respectively.

According to another exemplary embodiment, the at least one attachment element or attachment site can be provided, particularly integrally formed, with at least one auxiliary or sacrificial portion of the at least one green body or object, respectively. Particularly, the at least one auxiliary or sacrificial portion can be removable, e.g. via one or more predetermined breaking structures, such as e.g. breaking points, breaking lines, etc., from a base body of the at least one green body or object, respectively. As such, the at least one attachment element or attachment site can generally be provided with portions of the at least one green body or object, respectively which are not required or least not decisive for the intended function of the at least one green body or object, respectively.

According to another exemplary embodiment, the at least one support structure can be or comprise a frame structure. The frame structure can comprise at least one receiving portion for at least partially receiving the at least one green body or object, respectively. Particularly, the frame structure can comprise at least one receiving portion for at least partially receiving at least one portion, e.g. a freely exposed portion, an outer portion, etc., of the at least one green body or object, respectively. The at least one receiving portion of the frame structure can comprise one or more respective first wall portions of the at least one support structure which are configured to mechanically support, i.e. to be in direct mechanical contact, with respective one or more first portions of the at least one green body or object, respectively which is to be supported via the at least one support structure. The at least one receiving portion of the frame structure can be or comprise at least one protrusion, recess, particularly a groove-like recess, or other depression which enables at least partially receiving at least one portion of the at least one green body or object, respectively.

According to another exemplary embodiment, the frame structure can comprise one or more one- or multidimensional, e.g. point- or line-shaped, contact portions each configured to contact/support the at least one green body or object, respectively when it is at least partially received in the at least one receiving portion. Respective one or more one- or multidimensional, e.g. point- or line-shaped, contact portions can be provided with respective one or more first wall portions of the at least one support structure which are configured to mechanically support, i.e. to be in direct mechanical contact, with respective one or more first portions of the at least one green body or object, respectively which is to be supported via the at least one support structure. Particularly, respective one or more one- or multidimensional, e.g. point- or line-shaped, contact portions can be provided as point- or line-shaped protrusions projecting off one or more first wall portions of the at least one support structure which are configured to mechanically support, i.e. to be in direct mechanical contact, with respective one or more first portions of the at least one green body or object, respectively which is to be supported via the at least one support structure.

According to another exemplary embodiment, the one or more contact portions can be formed as protrusion projecting off a base body of the frame structure of the at least one support structure. Furthermore, the one or more contact portions can be provided at distributed portions of the frame structure of the at least one support structure, particularly to enable a maximum contact area at specific portions of the at least one green body or object, respectively and/or a minimum contact area at other specific portions of the at least one green body or object, respectively. As such, the design of the frame structure of the at least one support structure can be chosen with respect to the geometry of the at least one green body or object, respectively which is to be received in the at least one receiving portion.

According to another exemplary embodiment, the one or more one- or multidimensional, e.g. point- or line-shaped, contact portions can be provided with the at least one receiving portion for at least partially receiving the at least one green body or object, respectively. As a non-limiting example, the one or more one- or multidimensional, e.g. point- or line-shaped, contact portions can be provided with at least one of a side-wall and a bottom-wall of the at least one receiving portion.

According to another exemplary embodiment, the at least one receiving portion can comprise a shape adapted to at least partially receive an outer contour of the at least one green body or the at least one object. Particularly, the shape of the at least one receiving portion can be chosen to facilitate that the overall contact area between the at least one support structure and the one or more first portions of the at least one green body or object, respectively supported therewith is relatively high, particularly as high as possible, as this can reduce the stress on the at least one green body or object, respectively during post-processing, e.g. when removing excess photocurable resin from the at least one green body or object, respectively or when conducing other post-processing measures. Generally, the at least one receiving portion can be sized and shaped such that at least one surface of the at least one green body or object, respectively can be kept free of contact with solid surfaces during removal, washing, post-processing.

As a non-limiting example, the at least one receiving portion can comprise a curved or quasi-curved shape adapted to a curved portion of the contour of the at least one green body or object, respectively. Particularly, the at least one receiving portion can comprise a curved or quasi-curved shape adapted to an outer diameter or outer perimeter of a (rotationally-)symmetric green body or object, respectively. The curved or quasi-curved shape of the at least one receiving portion can thus, be chosen to facilitate that the overall contact area between the at least one support structure and the one or more first portions of the at least one green body or object, respectively supported therewith is relatively high, particularly as high as possible, as this can reduce the stress on the at least one green body or object, respectively during post-processing, e.g. when removing excess photocurable resin from the at least one green body or object, respectively or when conducing other post-processing measures.

According to another exemplary embodiment, the at least one receiving portion can contact, support or cover at least 20%, particularly at least 30%, more particularly at least 40%, more particularly at least 50%, more particularly at least 60%, more particularly at least 70%, of the at least one green body or object, respectively. Particularly, the at least one receiving portion can contact, support or cover at least 20%, particularly at least 30%, more particularly at least 40%, more particularly at least 50%, more particularly at least 60%, more particularly at least 70%, of the or an outer contour of the at least one green body or object, respectively. The degree of contact, support, or coverage is typically, related with a contact or support area between the at least one receiving portion and the at least one green body or object, respectively such that relative high degrees of contact, support, or coverage can be implemented which can reduce the stress on the at least one green body or object, respectively during post-processing, e.g. when removing excess photocurable resin from the at least one green body or object, respectively or when conducing other post-processing measures.

According to another exemplary embodiment, the at least one receiving portion can comprise at least one confinement element which at least partially confines the at least one receiving portion, particularly to support an outer surface of the at least one green body or object, respectively supported by the at least one support structure such that the at least one green body or object, respectively is secured against motions in at least one degree of freedom of motion, such as e.g. a translatory and/or rotatory degree of freedom of motion, particularly in at least two different degrees of freedom of motion, such as e.g. two different translatory and/or rotatory degrees of freedom of motion. Particularly, the at least one confinement element can be or comprise an edge or wall which secures the at least one green body or object, respectively supported by the at least one support structure against motions in at least one degree of freedom of motion, such as e.g. a translatory and/or rotatory degree of freedom of motion, in a direction in which the at least one green body or object, respectively has been inserted in the at least one receiving portion or support structure, respectively and/or in a direction different from the direction in which the at least one green body or object, respectively has been inserted in the at least one receiving portion or support structure, respectively. For (rotationally-)symmetric green bodies or objects, respectively, the at least one confinement element can be or comprise an edge or wall which secures the at least one green body or the at least one object against motions in a direction parallel or transverse to a symmetry axis of the respective green body or object, respectively.

It is apparent from the above that the at least one green body or object, respectively can be inserted into the at least one receiving portion or support structure, respectively in a first direction and a respectively inserted green body or object, respectively can be removed from the at least one receiving portion or support structure, respectively in a second direction. Notably, the first and second direction can be the same or different. Preferably, the first and second direction are opposite directions as this enables easy insertion and removal of the at least one green body or object, respectively.

According to another exemplary embodiment, the at least one support structure can comprise a channel structure for a fluid. The channel structure can comprise at least one inlet opening through which a fluid, particularly a cleaning or washing fluid, can enter the channel structure and at least one outlet opening through which a fluid, particularly a cleaning fluid or a washing fluid or uncured photocurable resin, can exit the channel structure. The channel structure can thus, serve for at least one of the following functions: cleaning of a green body or object, respectively with a cleaning fluid, washing of a green body or object, respectively with a washing fluid, and removing of uncured photocurable resin from a green body or object, respectively.

According to another exemplary embodiment, the channel structure can particularly, be provided with or within a wall of the at least one support structure which comprises the at least one receiving portion. As such, the channel structure can be shaped and sized in accordance with the at least one receiving portion. Thus, for the non-limiting example of a receiving portion having a curved or quasi-curved shape, the channel structure can also have a curved or quasi-curved shape. Respective inlet and/or outlet openings of the channel structure can be provided as bores penetrating through a wall of the at least one receiving portion or support structure, respectively.

According to another exemplary embodiment, the at least one support structure can comprise a U-base shape or a U-like base shape. Such base shapes can generally comprise one base including a rounded shape and at least one leg, particularly two legs, extending thereof. In this exemplary embodiment, the at least one inlet opening can be provided with a straight portion of the at least one support structure and the at least one outlet opening can be provided with the curved portion of the at least one support structure, particularly with the bottom-most portion of the curved portion of the at least one support structure. Such an arrangement of the at least one inlet opening and the at least one outlet opening can be beneficial e.g. as it can promote a gravitationally-driven flow of a respective fluid through the channel structure and a gravitationally-driven exit of a respective flow out of the channel structure.

Generally, the at least one inlet opening and the at least one outlet opening can be spaced from each other. The spacing can be chosen with the premise that the channel structure has a defined spatial extension which enables best-possible effectiveness of a fluid flowing through the channel structure.

According to another exemplary embodiment, the at least one support structure, particularly the frame structure, can comprise at least two support structure members, particularly at least two frame structure members, which can be attached to each other. The at least two support structure members can, when attached to each other, define the or a channel structure for a fluid, particularly a cleaning fluid or a washing fluid or uncured photocurable resin. Also in this exemplary embodiment, the channel structure can comprise at least one inlet opening through which the fluid can enter the channel structure and at least one outlet opening through which a fluid can exit the channel structure. As such, at least one support structure element, typically at least two support structure elements, can comprise a recess or other variable cross-section which defines at least one wall of the channel structure.

According to another exemplary embodiment, the at least two support structure members can comprise one or more attachment interfaces facilitating that the at least two support structure members can be attached to each other at variable distances, particularly such that at least one geometrical parameter of the channel structure can be altered by varying the distance of the two frame structure members relative to each other. As such, the at least one support structure can be configured to receive, based on a respective adjustment of the distance of the two frame structure members relative to each other, green bodies or objects, of different spatial dimensions, particularly different thicknesses.

According to another exemplary embodiment, the at least one green body or object, respectively can be adhered, particularly by polymerization of the photocurable resin, to the at least one support structure, particularly during the at least one irradiation process, more particularly because the at least one volumetric irradiation process is initiated at at least one surface of the at least one support structure. As such, the at least one support structure can be at least partially arranged adjacent to the working volume or even within the working volume during the at least one irradiation process such that the at least one green body or object, respectively can be directly adhered, particularly by polymerization of the photocurable resin, to the at least one support structure, particularly during the at least one irradiation process, more particularly because the at least one irradiation process is initiated at at least one surface of the at least one support structure. The at least one green body or object, respectively can be directly or indirectly adhered, particularly by polymerization of the photocurable resin, to the at least one support structure. Indirectly adhering the at least one green body or object, respectively to the at least one support structure can e.g. comprise using an auxiliary or sacrificial structure which directly adheres to the at least one green body or object, respectively with at least one first portion and directly adheres to the at least one support structure with at least one other portion. Notably, adhering can refer to an irreversible contact or connection between the at least one green body or object, respectively such that the contact or connection between the at least one green body or object, respectively cannot be reestablished after breaking or in other words the contact or connection is irreversible. This embodiment can be beneficial as a connection between the at least one support structure and the at least one green body or object, respectively, can be created during the at least one irradiation process such that any separate measures for connecting the at least one support structure with the at least one green body or object, respectively can be avoided. The at least one support structure can comprise a base body defining one or more surfaces to which the at least one green body or object, respectively can directly or indirectly adhere. Thus, the at least one irradiation process can be initiated at the one or more surfaces of the base body. As will be apparent from below, the at least one support structure can comprise a base body defining a base plane and at least one surface, particularly at least one inclined surface, in exemplary embodiments. Thus, the at least one irradiation process can be initiated at at least one inclined surface of the at least one support structure in such exemplary embodiments of the method.

According to another exemplary embodiment, the at least one support structure can comprise a base body defining a base plane and at least one surface. The at least one surface can comprise a main extension plane having a normal arranged at an angle relative to the extension of the light which triggers the polymerization of the photocurable resin. As will be apparent from below, the at least one surface can be or comprise a planar surface and/or a non-planar surface. A non-planar surface can comprise a regular or irregular surface structuring, such as e.g. a regular or irregular arrangement of one or more depressions and/or elevations. Particularly, the depressions and/or elevations, more particularly the shape and/or size of the depressions and/or elevations, can be oriented and/or positioned on the at least one surface according to the shape and/or size of at least a part of the at least one green body or object, respectively. Hence, the orientation and/or position of the depressions and/or elevations, more particularly the shape and/or size of the depressions and/or elevations, can be chosen under consideration of the shape and/or size of at least a part of the at least one green body or object, respectively. As such, a non-planar surface can comprise a variable distance relative to a reference plane, particularly a reference plane defined by a wall of the container, particularly a reference plane defined by a bottom wall of the container. As such, the at least one surface can comprise multiple surface portions having the same or a different distance relative to a reference plane, particularly a reference plane defined by a wall of the container, particularly a reference plane defined by a bottom wall of the container.

As an example, the at least one surface can be an inclined surface. The at least one inclined surface can have a main extension plane extending at an inclination angle of e.g. 1 - 89° relative to a reference plane, particularly the base plane of the base body or relative to a main irradiation direction of the light of the at least one wavelength or a plane defined by a light sheet formed of the light of the at least one wavelength, particularly the light of the first wavelength, or relative to a side wall or bottom wall of the or a container delimiting the working volume or a plane defined by a tangent to at least one surface of the base body. For exemplary embodiments of a respective base body with one or more curved, quasi-curved or polygonal surfaces, the angle of e.g. 1 - 89° can also extend between a respective reference plane and a tangent on at least one curved portion, quasi-curved portion or polygonal portion of the at least one surface.

Notably, the at least one inclined surface can be tilted relative to a reference plane, particularly the base plane of the base body or relative to a main irradiation direction of the light of the at least one wavelength or a plane defined by a light sheet formed of the light of the at least one wavelength or relative to a bottom wall of a container delimiting the working volume, at a tilting angle of e.g. 1 - 89°, particularly a tilting angle between 1 - 75°, more particularly a tilting angle between 1 - 60°, more particularly a tilting angle between 1 - 45°, more particularly a tilting angle between 1 - 30°.

As a non-limiting example, the at least one inclined surface can have a main extension plane extending at an angle of e.g. 1 - 89° relative to a reference plane, particularly the base plane of the base body or relative to a main irradiation direction of the light of the at least one wavelength or a plane defined by a light sheet formed of the light of the at least one wavelength or relative to a bottom wall of a container delimiting the working volume. For exemplary embodiments of a respective base body with one or more curved, quasi-curved or polygonal surfaces, the angle of e.g. 1 - 89° can also extend between a respective reference plane and a tangent on a curved portion, quasi-curved portion or polygonal portion of the surface.

Providing the base body of the at least one support structure with at least one inclined surface, which can be additionally tilted as specified above, can avoid undesired optical effects of the at least one support structure in connection with the at least one irradiation process, e.g. due to an undesired shadow formation. Further, providing the base body of the at least one support structure with at least one inclined surface, which can be additionally tilted as specified above, can enable that the voxels in close proximity to the at least one support structure can be addressed. Further, providing the base body of the at least one support structure with at least one inclined surface, can improve avoiding or reducing the formation of undesired bubbles of gas, e.g. air, within the working volume, particularly at the surface of the at least one support structure, when the at least one support structure is inserted into the working volume as any gas between the at least one support structure and the photocurable resin within the working volume can be removed as the bubbles can move along the at least one inclined surface and escape the container. Notably, respective bubbles are undesired because they could negatively affect adherence or polymerization at the at least one support structure.

Notably, the at least one inclined surface does not necessarily have to be a plane surface but can also be any regular or irregular surface. As an example, the at least one inclined surface can be a curved, quasi-curved or polygonal surface, for instance. Also, the at least one inclined surface can be provided with a one-or multidimensional surface structuring, such as e.g. a specific surface roughness, e.g. to enable a stable attachment between the at least one green body and the support structure and/or to avoid undesired optical effects of the at least one support structure in connection with the at least one irradiation process. In either case, the at least one inclined surface can enable high light intensities at the surface of the at least one support structure which results in a good adherence between the surface of the at least one support structure and a green body which is to be attached to the surface of the at least one support structure via volumetric printing.

According to another exemplary embodiment, the at least one support structure can comprise at least one of the following configurations: at least two inclined surfaces each having a main extension plane extending at an angle of 1 - 89° relative to the reference plane, wherein the free ends of the at least two inclined surfaces contact each other, thereby, defining an edge-like tip portion; at least four inclined surfaces each having a main extension plane extending at an angle of 1 - 89° relative to the reference plane, wherein the free ends of the at least four inclined surfaces contact each other, thereby, defining a tip portion; at least one conical or frustoconical geometry having a symmetry or rotation axis extending at an angle of e.g. 1 - 90°, particularly 45 - 90°, more particularly 90°, relative to the reference plane; or at least one spherical geometry, particularly a dome-shaped geometry, having a symmetry or rotation axis extending at an angle of 1 - 90°, particularly 45°, particularly 45 - 90°, more particularly 90°, relative to the reference plane. Further, at least one surface of a support structure having a conical or frustoconical geometry or a spherical geometry can be arranged at an angle of 1 - 89° between the rotational symmetry axis of the conical or frustoconical geometry or spherical geometry and the reference plane.

According to an exemplary embodiment, in which the at least one support structure has a configuration with at least two inclined surfaces each having a main extension plane extending at an angle of 1 - 89° relative to the reference plane, wherein the free ends of the at least two inclined surfaces contact each other, thereby, defining an edge-like tip portion, the at least two inclined surfaces can be arranged parallel or transverse to a direction of the light of the at least one wavelength. In this configuration, the main extension planes of the at least two inclined surfaces can be arranged at an angle of 91 - 179° relative to each other. The at least two inclined surfaces can have a rectangular base shape, particularly a square base shape. The at least two inclined surfaces can be at least partially planar or at least partially curved. The tip portion can e.g. be flat or flattened such that it extends substantially parallel to the or a reference plane or the or a main extension plane of the or a base body of the at least one support structure. This configuration can be deemed or denoted a roof-configuration. As indicated above, at least one inclined surface can be tilted relative to a reference plane at a tilting angle of e.g. 1 - 89°, particularly a tilting angle between 1 - 75°, more particularly a tilting angle between 1 - 60°, more particularly a tilting angle between 1 - 45°, more particularly a tilting angle between 1 - 30°.

The roof-configuration can particularly, be used in connection with exemplary embodiments in which the at least one irradiation process comprises generating at least two light sheets or four light sheets, particularly comprising at least two parallel light sheets extending in opposite directions.

According to an exemplary embodiment, in which the at least one support structure has a configuration with at least four inclined surfaces each having a main extension plane extending at an angle of 1 - 89° relative to the reference plane, wherein the free ends of the at least four inclined surfaces contact each other, thereby, defining a tip portion, the main extension planes of the at least four inclined surfaces can be arranged at an angle of 91 - 179° relative to each other. The at least four inclined surfaces can have a triangular base shape, for instance. The at least four inclined surfaces can be at least partially planar or at least partially curved. The tip portion can e.g. be flat or flattened such that it extends substantially parallel to the or a reference plane and the main extension plane of the or a base body of the at least one support structure. This configuration can be deemed or denoted a pyramid configuration. As indicated above, at least one inclined surface can be tilted relative to a reference plane at a tilting angle of e.g. 1 - 89°, particularly a tilting angle between 1 - 75°, more particularly a tilting angle between 1 - 60°, more particularly a tilting angle between 1 - 45°, more particularly a tilting angle between 1 - 30°.

The pyramid-configuration can particularly, be used in connection with exemplary embodiments in which the at least one irradiation process comprises generating at least four light sheets, particularly comprising a first group of two parallel light sheets extending in opposite directions and, arranged at an angle, e.g. of 90°, thereto, a second group of light sheets extending in opposite directions.

Likewise, exemplary configurations with at least one conical or frustoconical geometry having a symmetry or rotation axis extending at an angle of 1 - 90°, particularly 45 - 90°, more particularly 90°, relative to the reference plane; or configurations with at least one spherical geometry, particularly a dome-shaped geometry, having a symmetry or rotation axis extending at an angle of 1 - 90°, particularly 45 - 90°, more particularly 90°, relative to the reference plane, can particularly, be used in connection with exemplary embodiments in which the at least one irradiation process comprises generating at least four light sheets, particularly comprising a first group of two parallel light sheets extending in opposite directions and, arranged at an angle, e.g. of 90°, thereto, a second group of light sheets extending in opposite directions.

In such exemplary configurations with at least one conical or frustoconical geometry having a symmetry or rotation axis extending at an angle of 1 -90°, particularly 45 - 90°, more particularly 90°, relative to the reference plane; or configurations with at least one spherical geometry, particularly a dome-shaped geometry, having a symmetry or rotation axis extending at an angle of 1 - 90°, particularly 45 - 90°, more particularly 90°, relative to the reference plane, the respective free end or highest point of the respective geometry can define a tip portion. A respective tip portion can thus, be understood as comprising the point having a maximum distance relative to the or a reference plane, which can be the base plane of the base body, for example.

Generally, any inclined surface of the at least one support structure can be arranged to avoid or reduce undesired optical effects of the at least one support structure in connection with the at least one irradiation process, e.g. due to an undesired shadow formation. The same applies to respective exemplary configurations with at least one conical or frustoconical geometry and/or respective exemplary configurations with at least one spherical geometry, particularly dome-shaped geometry. Generally, the at least one support structure can have optical properties, e.g. anti-reflective properties, to avoid or reduce undesired optical effects of the at least one support structure in connection with the at least one irradiation process, e.g. due to an undesired shadow formation, undesired (back)reflections, etc. As such, the at least one support structure can have absorptive properties, e.g. a dark color, such as e.g. black, at least in some exemplary embodiments. Further, the at least one support structure can have a specific surface structuring, e.g. a specific (high) surface roughness, in some exemplary embodiments. A respective specific surface structuring can be particularly, configured to scatter light of the at least one wavelength, for example.

According to another exemplary embodiment, the at least one support structure can comprise at least one (hollow) inner space, particularly for receiving photocurable resin when the at least one support structure is inserted into the working volume. The at least one support structure can thus, e.g. in a respective roof- or pyramid-configuration, comprise one or more walls delimiting at least one (hollow) inner space, particularly for receiving photocurable resin when the at least one support structure is inserted into the working volume. The at least one (hollow) inner space can avoid or reduce undesired changes of the fill level of the photocurable resin within the working volume when the at least one support structure is inserted into the working volume as any change of the fill level of the photocurable resin within the working volume can be compensated by a corresponding flow of the photocurable resin into the at least one (hollow) inner space of the at least one support structure. The at least one (hollow) inner space can improve avoiding or reducing the formation of undesired bubbles of gas, e.g. air, within the working volume, particularly at the surface of the at least one support structure, when the at least one support structure is inserted into the working volume as any gas between the at least one support structure and the photocurable resin within the working volume can be removed by a corresponding flow of gas into the at least one (hollow) inner space of the at least one support structure. The at least one (hollow) inner space of the at least one support structure can be or comprise a closed space or an open space.

According to another exemplary embodiment, the at least one (hollow) inner space of the at least one support structure can comprise or at least communicate with at least one inlet opening, particularly provided with at least one surface, such as e.g. at least one inclined surface, of the at least one support structure which is in contact with photocurable resin when the at least one support structure is inserted into the working volume. The at least one inlet opening, particularly when provided with at least one inclined surface of the at least one support structure, can ease the flow of photocurable resin into the at least one (hollow) inner space when the at least one support structure is inserted into the working volume and can thus, be beneficial for compensating respective undesired change of the fill level of the photocurable resin within the working volume.

According to another exemplary embodiment, the at least one support structure can comprise at least one opening, particularly a through-bore, through which gas, particularly air, may escape the working volume through the at least one support structure. The at least one opening may define at least one entry portion via which gas may enter the opening from the working volume and at least one exit portion via which the gas may exit the opening when the at least one support structure is inserted into the working volume. The at least one opening can thus, avoid or at least reduce undesired bubble formation within the photocurable resin as any bubbles created when inserting the at least one support structure into the working can escape the working volume through the at least one support structure. Generally, the at least one opening is particularly, provided at the lowest point of the base body, particularly the lowest point of a respective inclined surface, (frusto)conically-shaped surface, or dome-shaped surface, to improve the effect of avoiding or reducing undesired bubble formation. The lowest point of a respective inclined surface, (frusto)conically-shaped surface, or dome-shaped surface can be the point which has a minimum distance to the or a bottom wall of the container which at least partially delimits the working volume.

As mentioned further above, the working volume is at least partially delimited by a container or its container volume, respectively. According to another exemplary embodiment, the at least one support structure can be or comprise a closing element, such as e.g. a lid, of the container. A respective closing element of the container can be or comprise a top-wall of the container which can be moved relative to or removed from other walls, such as e.g. a side-wall or a bottom-wall, of the container. A respective top-wall of the container can have a main extension plane transverse or parallel to a main extension direction of at least one light sheet. Providing the at least one support structure as a closing element can be beneficial as the closing element can easily be removed from the rest of the container which facilitates easy removing of the at least one green body from the working volume by removing the closing element. Notably, the closing element or any other wall or wall portion of the container which serves as a respective support structure can be sized and shaped as to be inserted into a post-processing volume of one or more post-processing devices.

According to another exemplary embodiment, the at least one support structure can be or comprise a plate arranged parallel to a wall of the container, particularly a wall (rear-wall) of the container through which the light, particularly the light of the second wavelength, exits the container after having propagated through the working volume. As such, a respective plate can have transmissive properties at least with respect to the light of the at least one wavelength to avoid undesired artefacts within the at least one green body or object, respectively, e.g. caused by (back)reflections. This is not required or even not desired for other embodiments of the method. Additionally or alternatively, the at least one support structure can be or comprise a wall (rear-wall) of the container through which the light, particularly the light of the second wavelength, exits the container after having propagated through the working volume. As such, a respective wall of the container can have transmissive properties at least with respect to the light of the at least one wavelength to avoid undesired artefacts within the at least one green body or object, respectively, e.g. caused by (back)reflections. This is not required or even not desired for other embodiments of the method. Both a respective plate and a respective wall can be detachably connected with one or more other walls of the container and thus, be removed from the container.

A respective plate or wall (rear-wall) of the container through which the light, particularly the light of the second wavelength, exits the container after having propagated through the working volume can be provided with anti-reflective properties with respect to the light of the at least one wavelength. Particularly, at least one freely exposed plate portion or wall portion, i.e. the plate portion or wall portion opposed to a wall portion which is in contact with the photocurable resin inside the working volume, can be provided with anti-reflective properties with respect to the light of the at least one wavelength. Again, experiments have surprisingly shown that providing a respective plate or wall of the container with anti-reflective properties with respect to the light of the at least one wavelength can be a measure to reduce or avoid undesired artefacts in green bodies which are believed to originate from back-reflections of the light at the at least one wall through which the light exits the container after having propagated through the working volume. Respective anti-reflective properties can e.g. be created by an anti-reflective surface structuring of the respective plate or wall of the container and/or by anti-reflective elements attached to respective plate or wall of the container and/or by an anti-reflective coating of the respective plate or wall of the container, for example.

Additionally or alternatively, a respective plate or wall (rear-wall) of the container through which the light, particularly the light of the second wavelength, exits the container after having propagated through the working volume can be provided with a surface structuring configured to diffuse and/or scatter the light of the at least one wavelength, particularly the light of the second wavelength. A respective surface structuring can be or comprise a regular or irregular pattern of depressions and/or elevations, particularly microscopic depressions and/or elevations. Particularly, at least one freely exposed plate portion or wall portion, i.e. the plate portion or wall portion opposed to a wall portion which is in contact with the photocurable resin inside the working volume, can be provided with a respective surface structuring. Again, experiments have surprisingly shown that providing a respective plate or wall of the container with a respective surface structuring can be a measure to reduce or avoid undesired artefacts in green bodies which are believed to originate from back-reflections of the light at the at least one wall through which the light exits the container after having propagated through the working volume. Particularly, scattering and/or diffusing light can be beneficial as it reduces the intensity of possible back-reflections and/or as it defocuses possible back-reflections. A respective surface structuring can be created e.g. by blasting, particularly sand-blasting, etching, scratching, laser-processing, etc. of the plate or of the at least one wall of the container. Also, coatings enabling the same diffusing and/or scattering effects are conceivable.

According to another exemplary embodiment, the at least one support structure can comprise at least one handling interface via which the at least one support structure can be at least temporary handled, e.g. by a handling device, such as e.g. a handling robot. A respective handling interface can generally be any structure which enables handling, particularly gripping, of the at least one support structure, e.g. by a handling device. Non-limiting examples of a respective handling interface can be or comprise one or more hooks, loops, lugs, edges, protrusions, recesses, etc.

According to another exemplary embodiment, the at least one support structure can be made of at least one of: a ceramic, a polymer, a metal, a composite material, for instance. The at least one support structure can thus, be made of materials or material structures which are e.g. not prone to interact with the photocurable resin, not prone to interact with the light of the at least one wavelength, not prone to interact with cleaning/washing fluids, and not prone to interacting with other chemical and/or physical influences, such as e.g. temperature, which can occur during post-processing. As will be apparent from below, any material or material structure which is magnetic or magnetizable can be beneficial as it facilitates handling of the at least one support structure based on magnetic interaction with a handling device, such as e.g. a robot. As such, it is conceivable that the at least one support structure is made from a magnetic or magnetizable material, such as e.g. an iron-based metal or metal alloy.

According to another exemplary embodiment, the at least one support structure can be at last partially made of at least one of the following materials or material structures: a non-reflective material or material structure; a magnetic or magnetizable material or material structure. Non-reflective properties can be beneficial as they can avoid undesired artefacts within the at least one green body or object, respectively e.g. caused by (back)reflections. Non-reflective properties can result from a non-reflective coating of the at least one support structure, for instance. Magnetic or magnetizable properties can be beneficial as they facilitate handling of the at least one support structure based on magnetic interaction with a handling device, such as e.g. a robot. Magnetic or magnetizable properties can result from a magnetic or magnetizable coating the at least one support structure and/or the provision of one or more magnetic or magnetizable elements with the at least one support structure, particularly within the at least one support structure, for instance.

According to another exemplary embodiment, the at least one support structure can comprise thermally conductive properties. As such, the at least one support structure can be made of or comprise a thermally conductive material or material structure, such as e.g. metal or a metal structure. Additionally or alternatively, the at least one support structure can be thermally connected to an active or passive heat removal device, e.g. a heat sink. Such exemplary embodiments are particularly, useful when the at least one support structure has absorptive properties or non-reflective properties, respectively to avoid undesired heating of the at least one support structure mainly caused by the absorption of light of the at least one wavelength, particularly the light of the second wavelength.

According to another exemplary embodiment, the at least one support structure can comprise a surface which enables a stable attachment of the at least one green body or object, respectively thereto. A respective surface can comprise a one- or multidimensional surface structuring, such as e.g. a specific surface roughness, e.g. to enable a stable attachment or adherence between the at least one green body and the at least one support structure. Additionally or alternatively, a respective surface can be provided with at least one chemical and/or physical adherence agent which is configured to increase the adherence forces between the at least one support structure and the at least one green body or object, respectively attached thereto.

According to another exemplary embodiment, the method can further comprise a step of removing the at least one support structure including at least one green body attached thereto from the working volume and transferring the at least one support structure including the at least one green body attached thereto, particularly via at least one handling device, into at least one post-processing volume and/or to at least one post-processing device in which the or at least one post-processing process is performed. The method can thus, thus generally comprise a step of using the at least one support structure for transferring at least one green body from a volumetric printing device configured to carry out the at least one volumetric irradiation process, particularly at least one multi-color irradiation process, of irradiating a photocurable resin with light of at least one wavelength to form, by photopolymerization of the photocurable resin, the at least one green body in a working volume into at least one post-processing volume and/or to at least one post-processing device in which the or at least one post-processing process is performed. The transfer can comprise removing the at least one support structure including at least one green body attached thereto from the working volume of the volumetric printing device by moving same, moving the at least one support structure including at least one green body attached thereto towards a post-processing volume of at least one post-processing device and inserting the at least one support structure including at least one green body attached thereto into the post-processing volume of the at least one post-processing device. The transfer can comprise that the at least one support structure including at least one green body attached thereto is moved in one or more degrees of freedom of motion and particularly, that the at least one support structure including at least one green body attached thereto is moved along one or more motion trajectories which enable a respective removing, moving, and inserting. As indicated before, the transfer can be effected by a handling device, such as e.g. a handling robot, which can grip the at least one support structure and move it accordingly. Particularly, the transfer can be automatically effected by a handling device, such as e.g. a handling robot, which can automatically grip the at least one support structure and move it accordingly. The term "gripping" as used herein generally embraces any kind of gripping and is thus, not limited to mechanical gripping but can also refer to magnetic gripping, pneumatic gripping, hydraulic gripping, etc.

According to another exemplary embodiment, the method can further comprise a step of removing the at least one support structure including at least one green body or object, respectively attached thereto from the post-processing volume of a first post-processing device in which at least one first post-processing process has been performed and transferring the at least one support structure including the at least one green body or object, respectively attached thereto, particularly via at least one handling device, into at least one post-processing volume of at least one further post-processing device in which at least one further post-processing process is performed. The method can thus, thus generally comprise a step of using the at least one support structure for transferring at least one green body or object, respectively between different post-processing volumes and post-processing devices, respectively. The transfer can comprise removing the at least one support structure including at least one green body or object, respectively attached thereto from the post-processing volume of a first post-processing device by moving same, moving the at least one support structure including at least one green body or object, respectively attached thereto towards at least one further post-processing volume of at least one further post-processing device and inserting the at least one support structure including at least one green body or object, respectively attached thereto into the at least one further post-processing volume of the at least one further post-processing device. The transfer can comprise that the at least one support structure including the at least one green body or object, respectively attached thereto is moved in one or more degrees of freedom of motion and particularly, that the at least one support structure including the at least one green body or object, respectively attached thereto is moved along one or more motion trajectories which enable a respective removing, moving, and inserting. Again, the transfer can be effected by the or a handling device, such as e.g. a handling robot, which can grip the at least one support structure and move it accordingly. Particularly, the transfer can be automatically effected by the or a handling device, such as e.g. a handling robot, which can automatically grip the at least one support structure and move it accordingly. As mentioned before, the term "gripping" as used herein generally embraces any kind of gripping and is thus, not limited to mechanical gripping but can also refer to magnetic gripping, pneumatic gripping, hydraulic gripping, etc.

According to another exemplary embodiment, the at least one post-processing device can comprise one or more post-processing units configured to perform at least one post-processing process. Non-limiting examples of a respective post-processing processes comprise at least one of: a tempering process, particularly a heating process, e.g. to influence the viscosity of the uncured photocurable resin; a cleaning/washing process, particularly a cleaning/washing process in which excess photocurable resin is cleaned/washed off the at least one green body or object, respectively; a drying process, particularly a drying process in which the at least one green body or object, respectively is dried, e.g. after a cleaning/washing process; a detachment process, particularly a detachment process in which the at least one green body or object, respectively is detached from the at least one support structure; and a post-curing process of the at least one green body, particularly a post-curing process in which the at least one green body undergoes one or more post-curing measures, e.g. due to subjecting it to radiation energy, to transfer the at least one green body into an object.

As such, an apparatus used for implementing the method can comprise one or more post-processing devices each configured to perform one or more post-processing processes. Each post-processing device can comprise a post-processing volume in which at least one post-processing process can be performed. Each post-processing volume can be provided with a specific atmosphere, e.g. an inert atmosphere. As a non-limiting example, the apparatus can comprise at least one of: a post-processing device configured to perform a tempering process, particularly a heating process; a post-processing device configured to perform a cleaning/washing process, particularly a cleaning/washing process in which excess photocurable resin is cleaned/washed off the at least one green body or object, respectively; a post-processing device configured to perform a drying process, particularly a drying process in which the at least one green body or object, respectively is dried, e.g. after a cleaning/washing process; a post-processing device configured to perform a detachment process, particularly a detachment process in which the at least one green body or object, respectively is detached from the at least one support structure; and a post-processing device configured to perform a post-curing process of the at least one green body, particularly a post-curing process in which the at least one green body undergoes one or more post-curing measures, e.g. due to subjecting it to radiation energy, to convert the at least one green body into an object.

If the apparatus comprises multiple post-processing devices each configured to perform at least one post-processing process, two, more than two, or all post-processing devices can be arranged in a series arrangement, for instance. A series arrangement can comprise an arrangement of the respective post-processing devices along a line, particularly a straight line, or along a curved line, particularly a line of a circle.

Particularly, a series arrangement can comprise an arrangement of respective post-processing devices along a line, particularly a straight line, or along a curved line, particularly a line of a circle, in a specific order. An exemplary specific order can comprise the following arrangement: a post-processing device configured to perform a cleaning/washing process, particularly a cleaning/washing process in which excess photocurable resin is cleaned/washed off the at least one green body or object, respectively; followed by a post-processing device configured to perform a drying process, particularly a drying process in which the at least one green body or object, respectively is dried, e.g. after a cleaning/washing process; followed by a post-processing device configured to perform a post-curing process of the at least one green body, particularly a post-curing process in which the at least one green body undergoes one or more post-curing measures, e.g. due to subjecting it to radiation energy, to convert the at least one green body into an object; followed by a post-processing device configured to perform a tempering process, particularly a heating process; followed by a post-processing device configured to perform a detachment process, particularly a detachment process in which the at least one green body or object, respectively is detached from the at least one support structure.

In either case, the at least one support structure including the at least one green body or object, respectively attached thereto is or can be moved between the respective post-processing devices, while the post-processing devices are stationary, or the post-processing devices are or can be moved, e.g. as they are arranged on a moveable unit, e.g. rail, rotary table, etc., relative to the at least one support structure including the at least one green body or object, respectively attached thereto while the at least one support structure including the at least one green body or object, respectively is stationary. Also, a combination of both is possible, i. e. a configuration in which both one or more post-processing devices and the at least one support structure including the at least one green body or object, respectively attached thereto are or can be moved.

According to another exemplary embodiment, multiple handling devices, e.g. handling robots, can be used. Each of the multiple handling devices can be assigned to at least one green body or object, respectively. Each of the multiple handling devices can be assigned to at least one post-processing process. As such, it is conceivable that at least one green body or object, respectively is transferred from a first handling device which has been assigned to and used in connection with a first post-processing process to at least one further handling device which is assigned to and used in connection with at least one further post-processing process.

A second aspect of the invention relates to a support structure as specified in connection with the method and its exemplary embodiments such that any remarks made in connection with the method of the first aspect of the invention also apply to the support structure of the second aspect of the invention and vice versa. As such, the support structure is configured to support at least one green body and/or at least one object, particularly during and/or after the at least one volumetric irradiation process.

A third aspect of the invention relates to an apparatus for manufacturing, via volumetric printing, at least one object. The apparatus is particularly, configured to implement the method of the first aspect of the invention such that any remarks made in connection with the method of the first aspect of the invention also apply to the apparatus of the third aspect of the invention and vice versa.

The apparatus can particularly, comprise at least one volumetric printing device configured to carry out at least one volumetric irradiation process, particularly at least one multi-color irradiation process, of irradiating a photocurable resin with light of at least one wavelength to form, by photopolymerization of a photocurable resin, at least one green body in a working volume.

Additionally or alternatively, the apparatus can comprise at least one post-processing device configured to carry out at least one post-processing process of post-processing at least one green body, formed by the or at least one volumetric irradiation process of irradiating a photocurable resin with light of at least one wavelength to form, by photopolymerization of a photocurable resin, the at least one green body in a working volume, to form at least one object. The at least one post-processing device can be provided in a closed space in which a controlled chemical and/or physical atmosphere, e.g. an inert atmosphere, a controlled temperature atmosphere, a controlled pressure atmosphere, etc., can be created or maintained. A respective closed space can thus, be or comprise a clean-room, for instance. The at least one post-processing device can comprise a post-processing volume. The at least one post-processing volume can be provided in a closed space of the respective post-processing device in which a controlled chemical and/or physical atmosphere, e.g. an inert atmosphere, a controlled temperature atmosphere, a controlled pressure atmosphere, etc., can be created or maintained. A respective closed space can thus, be or comprise a clean-room, for instance.

Additionally or alternatively, the apparatus can comprise at least one handling device, e.g. a handling robot, for transferring at least one green body or object, respectively between the at least one volumetric printing device and the at least one post-processing device and/or for transferring the at least one green body or object, respectively between different post-processing devices.

Additionally or alternatively, the apparatus can comprise a hardware- and/or software-embodied controller configured to control operation of at least one of: the at least one volumetric printing device, the at least one post-processing device, and the at least one handling device. The controller can thus, be in communication at least with one or more of the aforementioned devices of the apparatus. The controller can also be in communication with one or more sensors assigned to at least one of the at least one volumetric printing device, the at least one post-processing device, and the at least one handling device and can consider respective sensor information for controlling operation of at least one of: the at least one volumetric printing device, the at least one post-processing device, and the at least one handling device. The controller can at least comprise at least one of: a processing unit, a memory, a data storage, and a communication interface, for instance.

The volumetric printing device typically, comprises a container delimiting a container volume configured to receive a photopolymerizable material, particularly a photopolymerizable polymer resin, which is to be irradiated with light for forming a three-dimensional object. The container volume can comprise the or a working volume which is configured to receive or receives the photocurable resin. The container can comprise one or more walls. Particularly, the container can comprise one or more top-walls, one or more side-walls, and one or more bottom-walls. One or more walls of the container can be made of a material which enables irradiating the photocurable resin inside the container with the light of the at least one wavelength. A respective material can be, at least with respect to the light of the at least one wavelength, a transparent material, for instance. A respective transparent material can be or comprise glass or a polymer, such as e.g. polycarbonate, polymethylmethacrylate, or cyclic olefin copolymer, for instance.

As an independent aspect of the invention, at least one wall of the container can be provided with anti-reflective properties with respect to the light of the at least one wavelength. Particularly, at least one wall (rear-wall) of the container through which the light, particularly the light of the second wavelength, exits the container after having propagated through the working volume can be provided with anti-reflective properties with respect to the light of the at least one wavelength. More particularly, at least one freely exposed wall portion, i.e. the wall portion opposed to a wall portion which is in contact with the photocurable resin inside the working volume, of the at least one wall through which the light exits the container after having propagated through the working volume can be provided with anti-reflective properties with respect to the light of the at least one wavelength. Experiments have surprisingly shown that providing at least one wall of the container can be provided with anti-reflective properties with respect to the light of the at least one wavelength can be a measure to reduce or avoid undesired artefacts in green bodies which are believed to originate from back-reflections of the light at the at least one wall through which the light exits the container after having propagated through the working volume. Respective anti-reflective properties can e.g. be created by an anti-reflective surface structuring of the at least one wall of the container and/or by anti-reflective elements attached to the at least one wall of the container and/or by an anti-reflective coating of the at least one wall of the container.

As another independent aspect of the invention, at least one wall of the container can be provided with a surface structuring configured to diffuse and/or scatter the light of the at least one wavelength. A respective surface structuring can be or comprise a regular or irregular pattern of depressions and/or elevations, particularly microscopic depressions and/or elevations. Particularly, at least one wall (rear-wall) of the container through which the light, particularly the light of the second wavelength, exits the container after having propagated through the working volume can be provided with a respective surface structuring. More particularly, at least one freely exposed wall portion, i.e. the wall portion opposed to a wall portion which is in contact with the photocurable resin inside the working volume, of the at least one wall through which the light exits the container after having propagated through the working volume can be provided with a respective surface structuring. Experiments have surprisingly shown that providing at least one wall of the container provided with a respective surface structuring can be a measure to reduce or avoid undesired artefacts in green bodies which are believed to originate from back-reflections of the light at the at least one wall through which the light exits the container after having propagated through the working volume. Particularly, scattering and/or diffusing light can be beneficial as it reduces the intensity of possible back-reflections and/or as it defocuses possible back-reflections. A respective surface structuring can be created e.g. by blasting, particularly sand-blasting, etching, scratching, laser-processing, etc. of the at least one wall of the container. Also, coatings enabling the same effect are conceivable.

The volumetric printing device is generally configured to form, via volumetric printing, a green body which can, via post-processing, converted into a three-dimensional object. A respective three-dimensional object can be a technical component or a technical component assembly, for instance. A respective volumetric printing process can comprise at least one local polymerization process of a polymerizable material, particularly a photopolymerizable material, for the continuous additive manufacture of at least one three-dimensional object, particularly multiple three-dimensional objects, by means of multiphoton photopolymerization, particularly multi-color photopolymerization, more particularly dual-color photopolymerization. The volumetric printing device can thus, be configured to perform one or more local polymerization processes of a polymerizable material, e.g., a photopolymerizable monomer resin, which polymerizable material may include but is not limited to acrylates, methacrylates, thiol + ene, epoxides, oxiranes, oxetanes, or vinylethers, and/or a photopolymerizable oligomer resin, which may include but are not limited to acrylates, methacrylates, thiol + ene, epoxides, oxiranes, oxetanes, or vinylethers, for the continuous additive manufacture of at least one three-dimensional object by means of multiphoton photopolymerization, particularly multi-color photopolymerization, more particularly dual-color photopolymerization. As such, the volumetric printing device can be configured to continuously manufacture at least one three-dimensional object by means of multiphoton photopolymerization, particularly multi-color photopolymerization, more particularly dual-color photopolymerization, of a photopolymerizable material, particularly a photopolymerizable polymer, e.g., a photopolymerizable polymer resin.

Respective local polymerization processes which can be carried out with the volumetric printing device, typically, comprise irradiating molecules of a photoinitiator with light of at least one wavelength to convert the molecules of the photoinitiator via sequential optical excitation into a reactive state in which the molecules of the photoinitiator locally trigger a polymerization reaction of a polymerizable material in a working volume of the volumetric printing device. Photopolymerization of the polymerizable material is thus typically, effected inside a working volume of the volumetric printing device, e.g. by irradiating light of at least one first wavelength and light of at least one further wavelength, which further wavelength is different from the first wavelength, via one or more irradiation devices of the volumetric printing device into the working volume, which results in that the molecules of the photoinitiator are converted, e.g., due to the absorption of light of the first wavelength, from an initial state in which the molecules of the photoinitiator (substantially) do not absorb the light of the second or further wavelength, into an intermediate state with changed optical properties compared to the initial state, such that the molecules of the photoinitiator in the intermediate state absorb the light of the further wavelength which results in that the molecules of the photoinitiator are transferred from the intermediate state to the reactive state which locally triggers the polymerization of the photopolymerizable material to manufacture at least one three-dimensional object inside the working volume of the volumetric printing device. A back reaction from the intermediate state into the initial state can be thermally induced, for instance.

The volumetric printing device can thus generally be configured to perform at least one of the following volumetric printing processes: xolography (see e.g. WO2020245456A1, the contents of which are incorporated herein by reference); computed axial lithography, CAL, (see e.g. US2018032666A1, US20180015672A1, WO2019043529A1, or the article by Kelly B et al. entitled: "Volumetric additive manufacturing via tomographic reconstruction" (see e.g. DOI: 10.1126/science.aau7114), the contents of which are incorporated herein by reference); a volumetric printing process which comprises tomographic reproductions or tomographic back projections, particularly via projecting light images from multiple directions into a working volume; or a volumetric printing process which comprises controlling a light source comprising a plurality of pixels to emit a plurality of beams toward an optical objective, diverging the plurality of beams, via the optical objective, as the plurality of beams exits the optical objective toward a volume of resin, translating, via one or more motors, the optical objective with respect to the volume of resin, by translating the optical objective relative to the volume of resin, applying the plurality of beams to a plurality of voxels inside the volume of resin, solidifying the plurality of voxels by the application of the plurality of beams to the plurality of voxels, applying the plurality of beams, via the optical objective, such that each of the plurality of voxels are exposed by at least two different beams among the plurality of beams, and exposing, via the at least two different beams, the each voxel at two different times such that the at least two different beams spatially overlap only in the each voxel, wherein a total exposure that solidifies the volume of resin in the each voxel equals to at least a sum of exposure of the at least two different beams at the each voxel (see e.g. WO2024163474A1, the contents of which are incorporated herein by reference).

As indicated above, the volumetric printing device comprises a working volume configured to receive a photopolymerizable material, particularly a photopolymerizable polymer resin, which is to be irradiated with light of at least one wavelength, particularly with light of at least two different wavelengths, for forming at least one green body. The working volume of the volumetric printing device can be a local sub-volume of a container volume of the container of the volumetric printing device. The container can be moveably supported relative to an irradiation device of the volumetric printing device and/or vice versa.

The volumetric printing device can thus, comprise at least one first irradiation device comprising at least one light source configured to irradiate light of a first wavelength into the working volume to generate at least one first light projection in the working volume. The at least one first light projection can thus, comprise multiple light beams traversing the working volume in at least one light sheet formed by the light sheet forming arrangement. The at least one first irradiation device can further comprise at least one optical element which can e.g. comprise at least one of: a prism, a Powell-lens, a cylindrical lens, a diffractive optical element, a beam expanding element, a collimating optical element, etc. At least one of the aforementioned optical elements, such as e.g. the or a prism, of the at least one first irradiation device can be rotatably supported about at least one rotation axis. Additionally or alternatively, the at least one first irradiation device can comprise a light deflection unit, such as e.g. a galvo-scanner, or a polygon scanner, for deflecting light into the volume defined by the at least one structural element of the light sheet forming arrangement. As indicated above, the light as emitted or irradiated by the at least one first irradiation device can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum of wavelengths, particularly at least partly covering the respective ranges. As a non-limiting example, the first wavelength can be ca. 375 nm. Typically, the first wavelength will be chosen at least under consideration of the photochemical properties, particularly the photochromic properties, of molecules of the photoinitiator.

Additionally, the volumetric printing device can comprise at least one further irradiation device configured to continuously project a plurality of images of light of a further wavelength, the further wavelength being different from the first wavelength, into the working volume. Each image of the further wavelength can correspond to a specific portion, particularly a specific cross-section, of the at least one three-dimensional object to be manufactured with the volumetric printing device. The at least one further irradiation device can thus be built as or comprise an image projector. The light as emitted or irradiated by the at least one further irradiation device can comprise a wavelength in the range of: 400 nm - 1000 nm, particularly 425 - 750 nm, more particularly 450 - 675 nm, more particularly 500 - 650 nm, for instance. The light of the further wavelength can comprise a spectrum of wavelengths, particularly at least partly covering the respective ranges. Typically, the further wavelength will be chosen at least under consideration of the photochemical properties, particularly the photochromic properties, of molecules of the photoinitiator.

In exemplary embodiments in which the volumetric printing device additionally comprises at least one further irradiation device configured to continuously project a plurality of images, the at least one further irradiation device can be configured to irradiate the light of the further wavelength into the working volume to generate a second light projection in the working volume, the second light projection intersecting the first light projection, which his formed by the light sheet of the light of the first wavelength, at a specific angle, particularly an angle of 90°. Hence, the at least one light plane generated by the light sheet forming arrangement can be oriented at an angle, particularly at an angle of 90°, relative to the direction of projection of the plurality of images generated by the at least one further irradiation device. In such embodiments, the local polymerization process of the photopolymerizable material and, thus the formation of a green body can occur in the region in which the projected images generated by the at least one further irradiation device intersect the at least one light sheet generated by the light sheet forming arrangement (and vice versa). As indicated above, the local polymerization process of the photopolymerizable material and, thus the formation of a green body can take place continuously (which is one characteristic of volumetric printing relative to conventional additive manufacturing principles).

Typically, the projection of the plurality of images generated by the at least one further irradiation device does not only overlay the light sheet generated by the light sheet forming arrangement but also has its focus plane in the light sheet. Notably, dynamic or static optical properties of the photopolymerizable material, such as the refractive index, can be considered for adjusting the focus plane of the projection of the plurality of images generated by the at least one further irradiation device.

In further exemplary embodiments, the volumetric printing device can comprise at least one beam splitting unit assigned to at least one light source of the at least one first irradiation device. The at least one beam splitting unit can be configured to split the light generated by the at least one first irradiation device into multiple split light beams, wherein one or more split light beams can be used for generating the at least one light sheet. Additionally or alternatively, one or more split light beams can be used for projecting respective images into the working volume, wherein each image can correspond to a specific portion, particularly a specific cross-section, of the at least one three-dimensional object to be manufactured with the volumetric printing device. As such, the volumetric printing device can be operated with a single light source and respective light beams for generating the light sheet can be generated from at least one light beam split off from an original light beam as emitted from the at least one first irradiation device via the at least one beam splitting unit, and respective light beams for projecting images can be generated from at least one respective light beam split off from the original light beam as emitted from the at least one light source via the at least one beam splitting unit. The at least one beam splitting unit can be built as or comprise a beam splitting prism, for instance, which is arranged in the optical path downstream of the at least one light source.

### Brief description of the drawings

With these and other advantages and features that will become hereinafter apparent, a more complete understanding of the invention can be obtained by referring to the following description of the appended drawings in which:
Fig. 1 shows a principle drawing of an apparatus for manufacturing, via volumetric printing, at least one object in accordance with an exemplary embodiment;
Fig. 2 shows principle drawings of a support structure in accordance with an exemplary embodiment;
Fig. 3 shows principle drawings of a support structure in accordance with an exemplary embodiment;
Fig. 4 shows principle drawings of a support structure in accordance with an exemplary embodiment;
Fig. 5 shows principle drawings of a support structure in accordance with an exemplary embodiment;
Fig. 6 shows principle drawings of a support structure in accordance with an exemplary embodiment;
Fig. 7 shows principle drawings of a support structure in accordance with an exemplary embodiment;
Fig. 8 shows principle drawings of a support structure in accordance with an exemplary embodiment;
Fig. 9 and 10 each show a principle drawing of post-processing devices in accordance with an exemplary embodiment;
Fig. 11 shows principle drawings of an attachment element or attachment site provided with a green body or object in accordance with an exemplary embodiment; and
Fig. 12 shows principle drawings of an apparatus for manufacturing, via volumetric printing, at least one object in accordance with another exemplary embodiment.

### Detailed description of the drawings

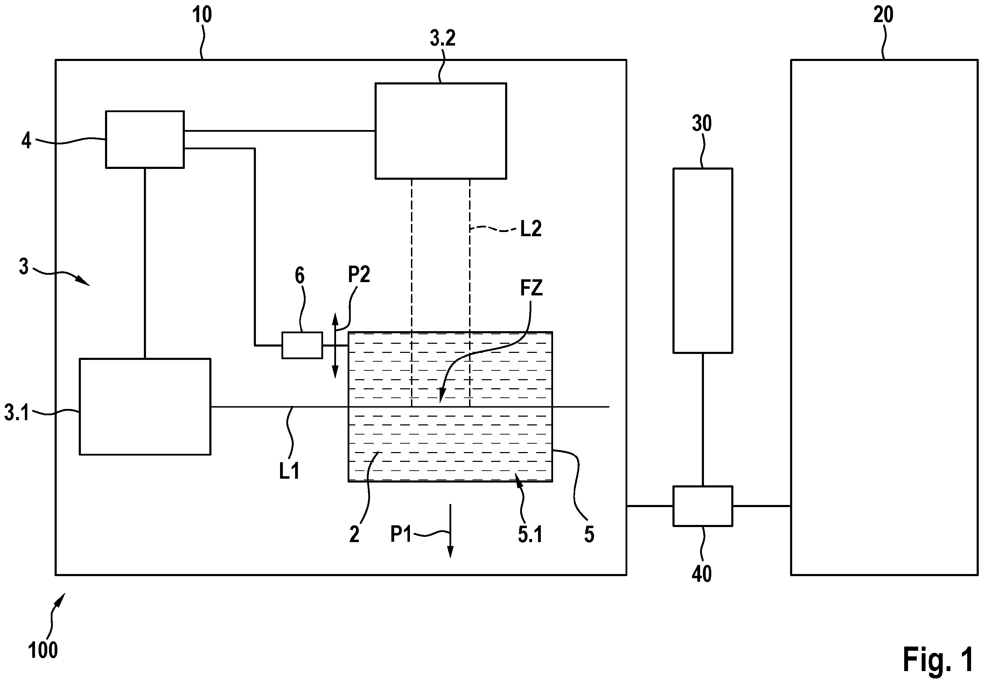

Fig. 1 shows a principle drawing of an apparatus 100 for manufacturing, via volumetric printing, at least one object in accordance with an exemplary embodiment.

The apparatus 100 is particularly, configured to implement a method of manufacturing, vial volumetric printing, at least one object which method will be specified further below in more detail.

As is apparent from Fig. 1, the apparatus 100 can particularly, comprise a volumetric printing device 10 configured to carry out at least one volumetric irradiation process, particularly at least one multi-color irradiation process, of irradiating a photocurable resin with light of at least one wavelength to form, by photopolymerization of a photocurable resin, at least one green body in a working volume, and at least one post-processing device 20 configured to carry out at least one post-processing process of post-processing at least one green body, formed by the volumetric printing device 10, to convert the at least one green body into an object.

The volumetric printing device 10 is configured for volumetric printing at least one green body by dual-color photopolymerization of a photocurable resin 2 and comprises an irradiation device 3 for performing an irradiation process of irradiating a photocurable resin 2 with light L1 of a first wavelength and light L2 of a second wavelength, different from the first wavelength, to form, by dual-color photopolymerization, a green body in at least one direction. The direction is indicated by arrow P1 in Fig. 1 and can be or comprise the formation direction of the at least one green body to be printed. As is apparent from Fig. 1, the light L1 of the first wavelength and the light L2 of the second wavelength intersect in a formation zone FZ.

The light L1 of the first wavelength can comprise a light sheet comprising a plurality of light beams extending through the photocurable resin 2. Respective light beams can intersect in one or more intersection points; respective intersection points can be (substantially) arranged in a common plane which can form a light plane. Additionally or alternatively, respective light beams can comprise a light plane, for instance. A light plane can be or comprise a light plane in which the or a plurality of light beams, particularly (substantially) parallel light beams, extend adjacent such that there is no intermediate space between directly adjacent light beams. Notably, at least some of the directly adjacent light beams can also partially overlap. Alternatively, a light plane can be or comprise a light plane in which the or a plurality of light beams extend adjacent such that there is an intermediate space between directly adjacent light beams. Respective light beams can be generated by a directed light emission device, such as e.g. a laser device, which can form part of an irradiation device of a volumetric printing apparatus used for implementing the method, for instance.

The light L2 of the second wavelength can comprise a projection of images corresponding to a cross-sectional geometry of the at least one green body to be printed or a plurality of points or lines corresponding to a cross-sectional geometry of the at least one green body to be printed. Respective points or lines can form a pattern, such as e.g. a hatch pattern. A respective projection can be generated by a light projection device, such as e.g. a digital light projection device, which can form part of an irradiation device of a volumetric printing apparatus used for implementing the method. The light projection device can be or comprise a digital micromirror device (DMD) or a liquid-crystal display (LCD) configured to generate the different images corresponding to a cross-sectional geometry of the at least one green body to be printed which can form part of the irradiation device 3 of the volumetric printing device 10. Additionally or alternatively, a respective point or line can be generated by a directed light emission device, such as e.g. a laser device, which can form part of the irradiation device 3 of the volumetric printing device 10. Both the light projection device and the directed light emission device can be examples of a second irradiation apparatus 3.2 as will be explained further below.

The volumetric printing device 10 comprises a hardware- and/or software-embodied controller 4 configured to spatially and/or temporarily vary at least one printing parameter, particularly a printing parameter influencing the curing (behavior) of the photocurable resin 2, during the at least one irradiation process.

Particularly, the volumetric printing device 10 can be or comprise a volumetric 3d-printing apparatus, particularly a xolography apparatus, i. e. an apparatus configured to perform the base principles of xolography. The base principles of xolography are specified in WO2020245456A1, the contents of which are incorporated herein by reference. Likewise, the volumetric printing device 10 can be or comprise an apparatus configured to implement a so-called, computed axial lithography, CAL, process, for instance. Likewise, the volumetric printing device 10 can be or comprise an apparatus as specified in WO2024163474A1, the contents of which are incorporated herein by reference. Likewise, the volumetric printing device 10 can be or comprise a device configured to implement cone beam lithography or parallax manufacturing as specified above.

The volumetric printing device 10 comprises a container 5 for receiving photocurable resin 2. The container 5 delimits a container volume 5.1 which can comprise the working volume in which the at least one green body can be printed. The container 5 can comprise one or more top-walls, one or more side-walls, and one or more bottom-walls, for instance. One or more walls of the container 5 can be made of a material which enables irradiating the photocurable resin inside the container 5 with the light L1, L2 of the first and the second wavelength. A respective material can thus be a transparent material with respect to the light L1, L2 of the first and second wavelength. A respective transparent material can be or comprise glass or a polymer, such as e.g. polycarbonate, polymethylmethacrylate, or cyclic olefin copolymer, for instance.

At least one wall of the container 5 can be provided with anti-reflective properties with respect to the light L1, L2 of the first and second wavelength. Particularly, at least one wall (rear-wall) of the container 5 through which the light L2 of the second wavelength exits the container 5 after having propagated through the working volume can be provided with anti-reflective properties with respect to the light of the at least one wavelength L1, L2. More particularly, at least one freely exposed wall portion, i.e. the wall portion opposed to a wall portion which is in contact with the photocurable resin 2 inside the working volume, of the at least one wall through which the light exits the container 5 after having propagated through the working volume can be provided with anti-reflective properties with respect to the light of the at least one wavelength. Respective anti-reflective properties can e.g. be created by an anti-reflective surface structuring of the at least one wall of the container 5 and/or by anti-reflective elements attached to the at least one wall of the container 5 and/or by an anti-reflective coating of the at least one wall of the container 5.

Additionally or alternatively, at least one wall of the container 5 can be provided with a surface structuring configured to diffuse and/or scatter the light L1, L2 of the at least one wavelength. A respective surface structuring can be or comprise a regular or irregular pattern of depressions and/or elevations, particularly microscopic depressions and/or elevations. Particularly, at least one wall (rear-wall) of the container 5 through which the light L2 of the second wavelength exits the container 5 after having propagated through the working volume can be provided with a respective surface structuring. More particularly, at least one freely exposed wall portion, i.e. the wall portion opposed to a wall portion which is in contact with the photocurable resin inside the working volume, of the at least one wall through which the light exits the container 5 after having propagated through the working volume can be provided with a respective surface structuring. A respective surface structuring can be created e.g. by blasting, particularly sand-blasting, etching, scratching, laser-processing, etc. of the at least one wall of the container. Also, coatings enabling the same effect are conceivable.

The container 5 can be moveably supported in at least one direction (indicated by double-arrow P2 in Fig. 1) e.g. via an associated drive device 6, e.g. an electric motor. As is apparent from Fig. 1, the at least one direction can be or comprise the formation direction of the at least one green body to be printed. Notably, the drive device 6 could also be associated with a first irradiation apparatus 3.1 of the irradiation device 3 of the volumetric printing device 10 to move the first irradiation apparatus 3.1 in analogous manner in at least one direction.

As indicated above, the volumetric printing device 10 further comprises the irradiation device 3 which can be a dual-color irradiation device configured to irradiate the photocurable resin inside the container 5 with the light L1, L2 of the first and second wavelength. Particularly, the irradiation device 3 can be configured to simultaneously irradiate the photocurable resin 2 inside the container 5 with the light L1, L2 of the first and second wavelength. The irradiation device 3 can be configured to generate a light sheet from the light L1 of the first wavelength, wherein the light sheet extends in a light sheet plane. Further, the irradiation device 3 can be configured to generate e.g. a light projection from the light L2 of the second wavelength, wherein the light projection intersects with the light sheet at an intersection angle, particularly an intersection angle of (ca.) 90°.

As is apparent from Fig. 1, the irradiation device 3 can comprise a first irradiation apparatus 3.1 comprising at least one first light source for generating and emitting the light L1 of the first wavelength and a second irradiation apparatus 3.2 comprising at least one second light source for generating and emitting the light L2 of the second wavelength.

The first irradiation apparatus 3.1 can comprise at least one light source configured to generate and irradiate light L1 of the first wavelength towards the photocurable resin 2 to generate a light sheet. The first irradiation apparatus 3.1 can be built as or comprise a laser or light emitting diode, for instance. The first irradiation apparatus 3.1 can further comprise at least one optical element which can e.g. comprise at least one of: a prism, a Powell-lens, a cylindrical lens, a diffractive optical element, a beam expanding element, a collimating optical element, etc. At least one of the aforementioned optical elements, such as e.g. the or a prism, of the at least one first irradiation device 3.1 can be rotatably supported about at least one rotation axis. Additionally or alternatively, the first irradiation apparatus 3.1 can comprise a light deflection unit, such as e.g. a (moveable, particularly rotatable) mirror, a galvo-scanner, or a polygon scanner, for deflecting light towards the photocurable resin 2. The first irradiation apparatus 3.1 can be configured to vary the focus or focus parameter, particularly at least one of: the focus position, the focal length, the depth of focus, or the depth of field, of at least one respective first light projection within the working volume. Particularly, the first irradiation apparatus 3.1 can be configured to vary the focus or at least one focus parameter with respect to the size of the formation zone FZ. The first irradiation apparatus 3.1 can comprise one or more controllers configured to vary the focus or a focus parameter, particularly at least one of: the focus position, the focal length, the depth of focus, or the depth of field, of at least one respective first light projection configured to vary the focus or a focus parameter, particularly at least one of: the focus position, the focal length, the depth of focus, or the depth of field, of at least one respective first light projection within the working volume. Additionally or alternatively, the first irradiation apparatus 3.1 can comprise one or more optical elements, such as e.g. lenses, particularly adaptable or adjustable lenses, which are configured to vary the focus or a focus parameter, particularly at least one of: the focus position, the focal length, the depth of focus, or the depth of field, of at least one respective first light projection within the working volume. The light L1 generated by the first irradiation apparatus 3.1 can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light L1 of the first wavelength can comprise a spectrum of wavelengths, particularly at least partly covering the respective ranges. As a non-limiting example, the first wavelength can be ca. 375 nm. Typically, the first wavelength will be chosen at least under consideration of the photochemical properties, particularly the photochromic properties, of molecules of a photoinitiator of the photocurable resin 2.

The second irradiation apparatus 3.2 can comprise at least one second light source configured to continuously emit images of light L2 of the second wavelength towards the photocurable resin 2, wherein each image can correspond to a specific cross-section of at least one green body to be printed, or a plurality of points or lines corresponding to a cross-sectional geometry of the at least one green body to be printed. The second irradiation apparatus 3.2 can be built as or comprise an image projection device, particularly a digital light projection device, or a directed light emission device, for instance. The second irradiation apparatus 3.2 can further comprise one or more light projection optics. The second irradiation apparatus 3.2 can thus generate image elements, such as e.g. voxels, having a specific focus and/or size, for instance. The second irradiation apparatus 3.2 can be configured to change the size of at least one image of the projection of images or of at least one image element, such as e.g. a pixel, of at least one image of the projection of images. The second irradiation apparatus 3.2 can comprise one or more controllers configured to change the size of at least one image of the projection of images or of at least one image element, such as e.g. a pixel, of at least one image of the projection of images. Additionally or alternatively, the second irradiation apparatus 3.2 can comprise one or more optical elements, such as e.g. lenses, which are configured to change the size of at least one image of the projection of images or of at least one image element, such as e.g. a pixel, of at least one image of the projection of images. The light L2 emitted or irradiated by the second irradiation apparatus 3.2 can comprise a wavelength in the range of: 400 nm - 1000 nm, particularly 425 - 750 nm, more particularly 450 - 675 nm, more particularly 500 - 650 nm, for instance. The light L2 of the second wavelength can comprise a spectrum of wavelengths, particularly at least partly covering the respective ranges. Typically, the second wavelength will be chosen at least under consideration of the photochemical properties, particularly the photochromic properties, of molecules of a photoinitiator of the photocurable resin 2.

As is apparent from above, the irradiation device 3 can be generally configured to irradiate the light L1 of the first wavelength at a first angle, particularly an angle of 0 - 180°, and the light L2 of the second wavelength at a second angle, particularly an angle of 0 - 180°, relative to the extension direction of the light L1 of the first wavelength. Respective angles can particularly, range between 15 and 165°, more particularly between 30 and 150°, more particularly between 90 and 150° or between 30 and 90°. Particularly, the light L2 of the second wavelength can intersect the light L1 of the first wavelength at an angle of 90° (as is exemplarily shown in Fig. 1).

Irradiating the photocurable resin 2 with the light L1 of the first wavelength causes one or more photoinitiator molecules of the photocurable resin 2 to transfer from an initial state into an intermediate state with changed optical properties compared to the initial state, such that the molecules of the one or more photoinitiators in the intermediate state can absorb the light L2 of the second wavelength which results in that the molecules of the one or more photoinitiators are transferred from the intermediate state to a reactive state by absorption of light L2 of the second wavelength which locally triggers the polymerization of the photocurable resin 2 to form at least one green body.

The photocurable resin 2 can be a photocurable monomer resin or a photocurable oligomer resin, which may include acrylates, methacrylates, thiol + ene, epoxides, oxiranes, oxetanes, or vinylethers, for instance. Multi-color photopolymerization can comprise multi-photon photopolymerization, particularly dual-photon photopolymerization, of the photocurable resin 2. Photopolymerization of the photocurable resin 2 is thus, effected by irradiating the photocurable resin 2 with the light L1 of the first wavelength and, particularly simultaneously, the light L2 of the second wavelength which results in that molecules of the one or more photoinitiators of the photocurable resin 2 are converted, e.g., due to the absorption of the light L1 of the first wavelength, from an initial state in which the molecules of the one or more photoinitiators (substantially) do not absorb the light L2 of the second wavelength, into an intermediate state with changed optical properties compared to the initial state, such that the molecules of the one or more photoinitiators in the intermediate state absorb the light L2 of the second wavelength which results in that the molecules of the one or more photoinitiators are transferred from the intermediate state to a reactive state which locally triggers the polymerization of the photocurable resin to form at least one green body.

Suitable photoinitiators of a respective photocurable resin 2 are e.g. known from US5230986A, WO2020245456A1, WO2023034398A1, WO2023034402A1, WO2023220461A1, WO2023220463A1, the contents of which are incorporated herein by reference.

The photocurable resin 2 can have or exhibit non-Newtonian flow properties, i.e. shear-thinning flow properties and/or can have a yield point that is greater than the static shear stress caused by the at least one green body. The yield point of the photocurable resin 2 can be determined, for example, by rotational rheometry (e.g. via a plate-plate rheometer) under quasi-static load via a 'creep test' or by running a slow shear stress ramp. A respective yield point of photocurable resin 2 can be set by admixing oligomers and polymers with non-Newtonian flow properties and/or by admixing additives (rheological modifiers), for instance.

The at least one post-processing device 20 is configured to carry out at least one post-processing process of post-processing at least one green body, formed by the volumetric printing device 10 to form at least one object. The at least one post-processing device 20 can be provided in a closed space in which a controlled chemical and/or physical atmosphere, e.g. an inert atmosphere, a controlled temperature atmosphere, a controlled pressure atmosphere, etc., can be created or maintained. A respective closed space can thus, be or comprise a clean-room, for instance. The at least one post-processing device 20 can comprise a post-processing volume. The post-processing volume can be provided in a closed space of the respective post-processing device in which a controlled chemical and/or physical atmosphere, e.g. an inert atmosphere, a controlled temperature atmosphere, a controlled pressure atmosphere, etc., can be created or maintained. A respective closed space can thus, be or comprise a clean-room, for instance.

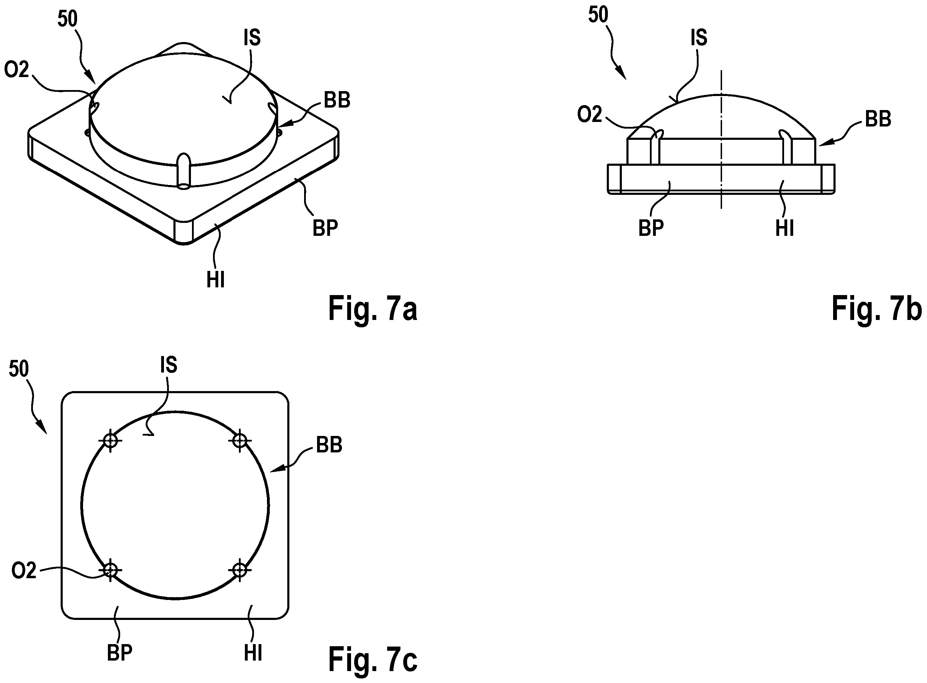

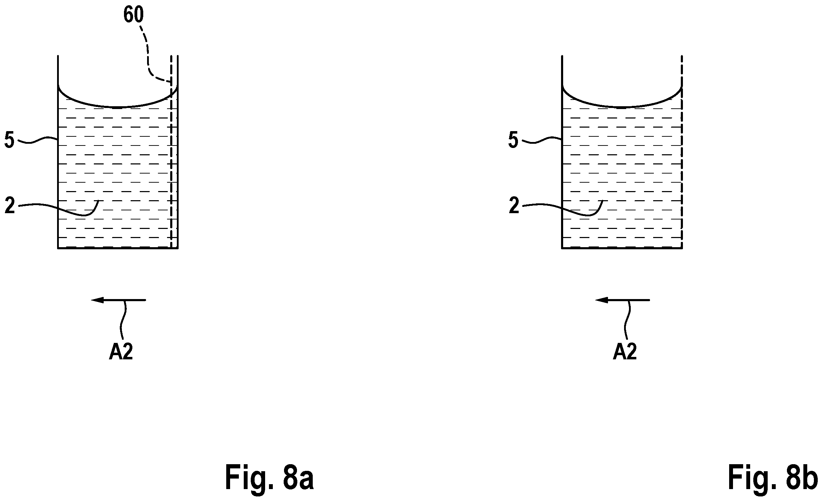

As is further apparent from the embodiments of Fig. 7 and Fig 8, the apparatus 100 can further comprise at least one handling device 30, e.g. a handling robot, assigned to the volumetric printing device 10 and the at least one post-processing device 20. The at least one handling device 30 is particularly, configured for transferring at least one green body or object, respectively between the at least one volumetric printing device 10 and the at least one post-processing device 20 and/or for transferring the at least one green body or object, respectively between different post-processing devices 20. Notably, the at least one green body or object, respectively is indicate by the expression "GB/O" in Fig. 7 and 8.

Further, the apparatus 100 can comprise a hardware- and/or software-embodied controller 40 configured to control operation of at least one of: the at least one volumetric printing device 10, the at least one post-processing device 20, and the at least one handling device 30. The controller 40 can thus, be in communication with the aforementioned devices of the apparatus 100. The controller 40 can also be in communication with one or more sensors assigned to at least one of the at least one volumetric printing device 10, the at least one post-processing device 20, and the at least one handling device 30 and can consider respective sensor information for controlling operation of at least one of: the at least one volumetric printing device 10, the at least one post-processing device 20, and the at least one handling device 30. The controller 40 can at least comprise at least one of: a processing unit, a memory, a data storage, and a communication interface, for instance.

As indicated above, the apparatus 100 is configured to implement a method for manufacturing, via volumetric printing, at least one object. A respective object can be or comprise a technical component or a group of respective technical components. As a non-limiting example, a respective technical component can be or comprise an optical component, such as e.g. a lens, particularly a microlens, a prism, a mirror, etc. or a group of respective optical components. As another non-limiting example, a respective technical component can be a medical component, particularly a dental component, such as e.g. a dental prosthesis, particularly a dental implant, a bridge, or an inlay, overlay, an aligner or a dental brace, a bite splint, a retainer, a mouthguard, a migraine prevention device, a mandibular advancement device, such as one useable as a dental sleep medicine, a removable, such as e.g. a denture, a partial, a combination of a crown and a partial, a flipper, etc.

The method comprises at least one of the following processes: at least one volumetric irradiation process, particularly at least one multi-color irradiation process, particularly at least one dual-color irradiation process, of irradiating a photocurable resin 2 with light of at least one wavelength L1, L2 to form, by photopolymerization of the photocurable resin, at least one green body in a working volume, and at least one post-processing process of post-processing at least one green body, formed by the or at least one volumetric irradiation process of irradiating a photocurable resin 2 with light L1, L2 of at least one wavelength to form, by photopolymerization of a photocurable resin 2, the at least one green body in a working volume, to form at least one object.

The at least one volumetric irradiation process can be or comprise volumetric printing of at least one green body. The at least one volumetric irradiation process can thus, be or form part of a volumetric printing process in which at least one green body is created via volumetric printing. The at least one green body can be an intermediate component which does not completely exhibit all desired or required properties of the respective object to be manufactured. As a non-limiting example, a respective green body can have the geometric base configuration of the object to be manufactured. As a non-limiting example, a respective green body can differ in one or more properties, e.g. in mechanical properties, such as e.g. hardness, stiffness, tensile strength, etc., from the object to be manufactured. At least some of these properties can be desired or required for the intended use of the object to be manufactured such that the respective green body needs to undergo at least one post-processing process.

The at least one post-processing process can be or comprise a post-processing of a respective green body created in the at least one volumetric irradiation process in which the respective green body is converted, e.g. by post-curing, into the actual object (so-called brown body). A respective post-processing process can thus, comprise at least one measure which enables post-curing of the as printed green body, particularly to convert it into a brown body. Non-limiting examples of a respective measure can be or comprise at least one of the following: subjecting the as printed green body to elevated temperatures, e.g. by placing it in a heating device, such as e.g. an oven in which it undergoes post-curing; subjecting the as printed green body to radiation exposure, e.g. by placing it in a radiation device in which it is irradiated with radiation to undergo post-curing; subjecting the as printed green body to a chemically reactive atmosphere, e.g. by placing it in a chemical reactor in which it can react with a reaction agent to undergo post-curing, etc.

As indicated in connection with the apparatus 100, the at least one volumetric irradiation process can be or comprise volumetric printing via any volumetric printing process which can comprise at least one of the following: xolography (see e.g. WO2020245456A1, the contents of which are incorporated herein by reference); computed axial lithography, CAL; a volumetric printing process which comprises tomographic reproductions or tomographic back projections, particularly via projecting light images from multiple directions into a working volume; or a volumetric printing process which comprises controlling a light source comprising a plurality of pixels to emit a plurality of beams toward an optical objective, diverging the plurality of beams, via the optical objective, as the plurality of beams exits the optical objective toward a volume of resin, translating, via one or more motors, the optical objective with respect to the volume of resin, by translating the optical objective relative to the volume of resin, applying the plurality of beams to a plurality of voxels inside the volume of resin, solidifying the plurality of voxels by the application of the plurality of beams to the plurality of voxels, applying the plurality of beams, via the optical objective, such that each of the plurality of voxels are exposed by at least two different beams among the plurality of beams, and exposing, via the at least two different beams, the each voxel at two different times such that the at least two different beams spatially overlap only in the each voxel, wherein a total exposure that solidifies the volume of resin in the each voxel equals to at least a sum of exposure of the at least two different beams at the each voxel (see e.g. WO2024163474A1, the contents of which are incorporated herein by reference).

Each volumetric printing process comprises at least one volumetric irradiation process, hereinafter also referred to as "irradiation process", which comprises irradiating a photocurable resin with light L1, L2 of at least one wavelength to form, by photopolymerization, particularly by multi-color photopolymerization, more particularly by dual-color photopolymerization, at least one green body. The at least one irradiation process can comprise irradiating, typically on basis of one or more printing parameters, a photocurable resin with light of a first wavelength and light of a second wavelength, which is different from the first wavelength, to form, by multi-color photopolymerization, particularly by dual-color photopolymerization, a green body in at least one direction. The at least one direction can be or comprise the formation direction of the respective green body to be printed, i. e. the or a direction in which the respective green body is printed. The method generally, enables volumetric printing of one or more green bodies in the at least one (formation) direction.

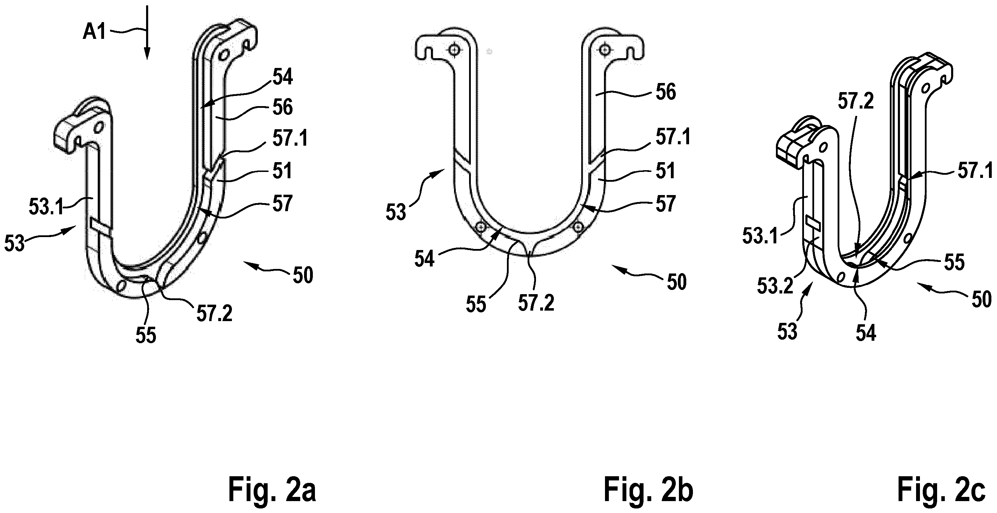

To overcome the above-mentioned drawbacks of known methods for manufacturing, via volumetric printing, at least one object, the method comprises supporting the at least one green body and/or the at least one object, particularly during and/or after the at least one irradiation process, via at least one support structure 50 (see particularly Fig. 2 - 6). The at least one support structure 50 can also be deemed or denoted a "build plate". As a non-limiting example, the following exemplary embodiments are conceivable: supporting the at least one green body by a support structure 50 during and/or after the at least one volumetric irradiation process; and/or supporting the at least one green body by the support structure 50 during the at least one post-processing process; and/or supporting the at least one object by the support structure 50 during and/or after the at least one post-processing process.

The method can thus, comprise using the or at least one support structure 50 for supporting the at least one green body during and/or after the at least one irradiation process and thus, during and/or after volumetric printing. The method thus, enables handling the at least one green body during and/or after the at least one irradiation process and thus, during and/or after volumetric printing via the at least one support structure 50. Handling the at least one green body during and/or after the at least one irradiation process and thus, during and/or after volumetric printing can enable moving the at least one green body within the working volume and/or removing the at least one green body from the working volume.

Additionally or alternatively, the method can comprise using the or at least one support structure 50 for supporting the at least one object during and/or after the post-processing process and thus, during and/or after post-processing. The method thus, enables handling the at least one object during and/or after the post-processing process and thus, during and/or after post-processing via the at least one support structure 50. Handling the at least one object during and/or after the post-processing process and thus, during and/or after post-processing can enable moving the at least one object within at least one post-processing volume and/or removing the at least one object from at least one post-processing volume.

The at least one post-processing process can comprise at least one process of: separating excess or uncured photocurable resin from the at least one green body, e.g. by washing the at least one green body in at least one washing fluid, which can be or comprise a solvent; drying the at least one green body, e.g. by (gently) heating the at least one green body or subjecting the at least one green body to a gas flow, particularly air flow; post-curing the at least one green body, e.g. by tempering the at least one green body and/or by irradiating the at least one green body with post-curing irradiation; polishing the at least one green body, coating the at least one green body; and moving or transferring the at least one green body from a first orientation and/or position, which can be correlated with at least one first post-processing process or post-processing device implementing such at least one first post-processing process, to at least one further orientation and/or position, which can be correlated with at least one further post-processing process or post-processing device implementing such at least one further post-processing process. Each post-processing process can be performed via a post-processing device 20 of the apparatus 100.

It is apparent from the above, that the method can also comprise using at least one support structure 50 for supporting the at least one green body and/or the at least one object after the at least one irradiation process and before the post-processing process. The period using at least one support structure 50 for supporting the at least one green body and/or the at least one object can be or comprise an intermediate stage of the method. As such, the method can comprise using at least one support structure 50 for supporting the at least one green body and/or the at least one object before, during and after of a respective intermediate stage.

The method thus, generally comprises using at least one support structure 50 for supporting the at least one green body and/or the at least one object. Hence, a manual handling of the at least one green body and/or the at least one object, e.g. manually griping the at least one green body or the at least one object, respectively, is generally not required in accordance with the method because the at least one green body or the at least one object, respectively is supported by the at least one support structure 50. Notably, the at least one support structure 50 can be gripped by a hand or by a gripping tool, e.g. of a handling device 30, which means that any direct contact between the at least one green body or the at least one object and the hand or gripping tool, which direct contact could possibly damage the at least one green body or the at least one object, respectively can be avoided.

According to the method, the at least one green body can be removed from the working volume in which the at least one irradiation process takes place via the at least one support structure 50. The support structure 50 is thus, not necessarily at least partially arranged within the working volume during the at least one irradiation process. Particularly, the at least one support structure 50 can be introduced, e.g. by moving the at least one support structure 50 in at least one degree of freedom of motion relative to the container 5, into the working volume for removing the at least one green body from the working volume before or after the at least one irradiation process is completed. More particularly, the at least one support structure 50 can be introduced into the working volume for removing the at least one green body from the working volume within a period of the last 5, 10, 15, 20, 25 or 30 seconds before completion of the at least one irradiation process or after completion of the at least one irradiation process, particularly within a period of the last 5, 10, 15, 20, 25 or 30 seconds after completion of the at least one irradiation process and thus, within a period of the last 5, 10, 15, 20, 25 or 30 seconds before completion of the at least one volumetric printing process of the at least one green body or after completion of the at least one irradiation process, particularly within a period of the last 5, 10, 15, 20, 25 or 30 seconds after completion of the at least one volumetric printing process of the at least one green body.

As such, the method can comprise introducing the at least one support structure 50 into the working volume while the at least one irradiation process is still ongoing and/or introducing the at least one support structure 50 into the working volume when the at least one irradiation is completed. Introducing the at least one support structure 50 into the working volume before the at least one irradiation process is completed, can be beneficial as it can increase efficiency of the overall volumetric printing process. Introducing the at least one support structure 50 into the working volume after the at least one irradiation process is completed, can be beneficial as it can avoid possible undesired effects, e.g. by light absorption or light reflection effects, caused by the at least one support structure 50 during the volumetric printing process. The same applies for exemplary embodiments in which multiple support structures 50 are used. In such exemplary embodiments, the method can comprise introducing one or more first support structures 50 into the working volume while the at least one irradiation process is still ongoing and/or introducing one or more second support structures 50 into the working volume when the at least one irradiation process is completed.

According to the method, the at least one green body or object, respectively can be removed from the or a post-processing volume in which the at least one post-processing process takes place via the at least one support structure 50. The at least one support structure 50 is thus, not necessarily at least partially arranged within the post-processing volume during the at least one post-processing process. Particularly, the at least one support structure 50 can be introduced, e.g. by moving same in at least one degree of freedom of motion relative to a post-processing device 20 in which the at least one post-processing process takes place, into the post-processing volume for removing the at least one green body or object, respectively from the post-processing volume before or after the at least one post-processing process is completed. More particularly, the at least one support structure 50 can be introduced into the post-processing volume for removing the at least one green body and/or object, respectively from the post-processing volume within a period of the last 5, 10, 15, 20, 25 or 30 seconds before completion of the at least one post-processing process or after completion of the at least one post-processing process, particularly within a period of the last 5, 10, 15, 20, 25 or 30 seconds after completion of the at least one post-processing process and thus, within a period of the last 5, 10, 15, 20, 25 or 30 seconds before completion of the at least one post-processing process of the at least one green body or object, respectively or after completion of the at least one post-processing process, particularly within a period of the last 5, 10, 15, 20, 25 or 30 seconds after completion of the at least one post-processing process of the at least one green body or object, respectively.

As such, the method can comprise introducing the at least one support structure 50 into the post-processing volume while the at least one post-processing process is still ongoing and/or introducing the at least one support structure 50 into the post-processing volume when the at least one post-processing process is completed. Introducing the at least one support structure 50 into the post-processing volume before the at least one post-processing process is completed, can be beneficial as it can increase efficiency of the overall post-processing process. Introducing the at least one support structure 50 into the post-processing volume after the at least one post-processing process is completed, can be beneficial as it can avoid possible undesired effects, e.g. by energy absorption or energy reflection effects, caused by the at least one support structure during the post-processing process. The same applies for exemplary embodiments in which multiple support structures 50 are used. In such exemplary embodiments, the method can comprise introducing one or more first support structures 50 into the post-processing volume while the at least one post-processing process is still ongoing and/or introducing one or more second support structures 50 into the post-processing volume when the at least one post-processing process is completed.

As is apparent from the exemplary embodiments of Fig. 2 - 6, the at least one green body or object, respectively can be at least partially mechanically contacted or supported by the at least one support structure 50. As such, the at least one support structure 50 can generally be configured to mechanically contact, support or provide a mechanical contact or support of at least one green body or object, respectively. Notably, the same support structure 50 can be configured to mechanically contact, support or provide a mechanical contact or support of at least one green body and of at least one object resulting from the at least one green body. In other words, the at least one support structure 50 can be used both during and/or after the at least one irradiation process to support the at least one green body created therein and used both during and/or after at least one post-processing process in which the at least one green body is converted in at least one object.

Any mechanical support of respective one or more first portions of the at least one green body or object, respectively with the at least one support structure 50 can be or comprise a mechanical contact or connection between the at least one green body or object, respectively and the at least one support structure 50. A respective mechanical contact or connection between the at least one support structure 50 and the at least one green body or object, respectively can be a detachable contact or connection, particularly a reversible contact or connection. As an example, the force required for building the contact or connection and the force for breaking the contact or connection can be the same or at least similar. As another example, when a mechanical contact or connection between the at least one green body or object, respectively and the at least one support structure 50 is broken, it can be re-established. As another example, a mechanical contact or connection can (substantially) rely on gravity, e.g. when the at least one green body or object, respectively is placed on a surface of the at least one support structure 50, which, as will be apparent from below, can e.g. be or comprise a plate, a mechanical contact is made.

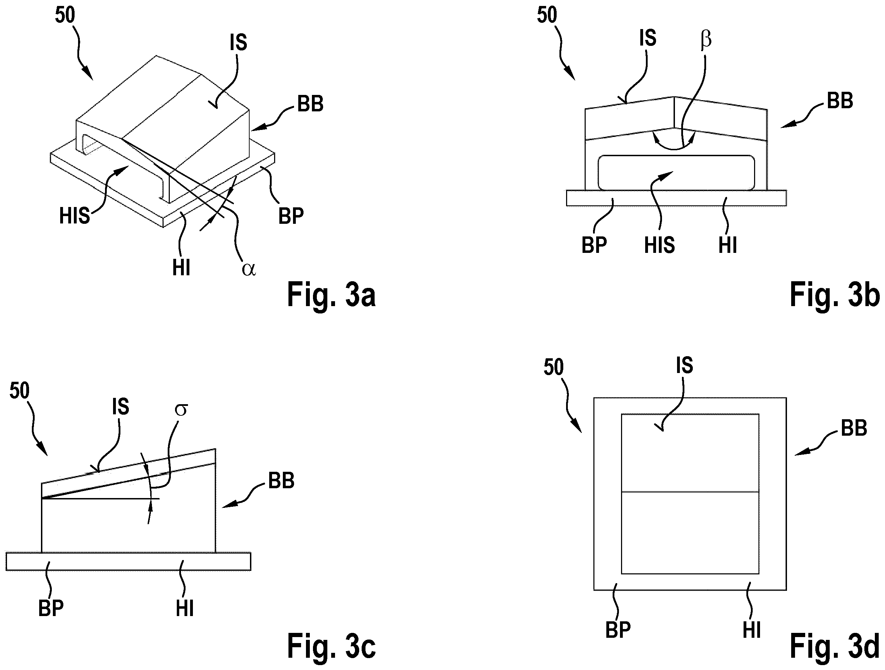

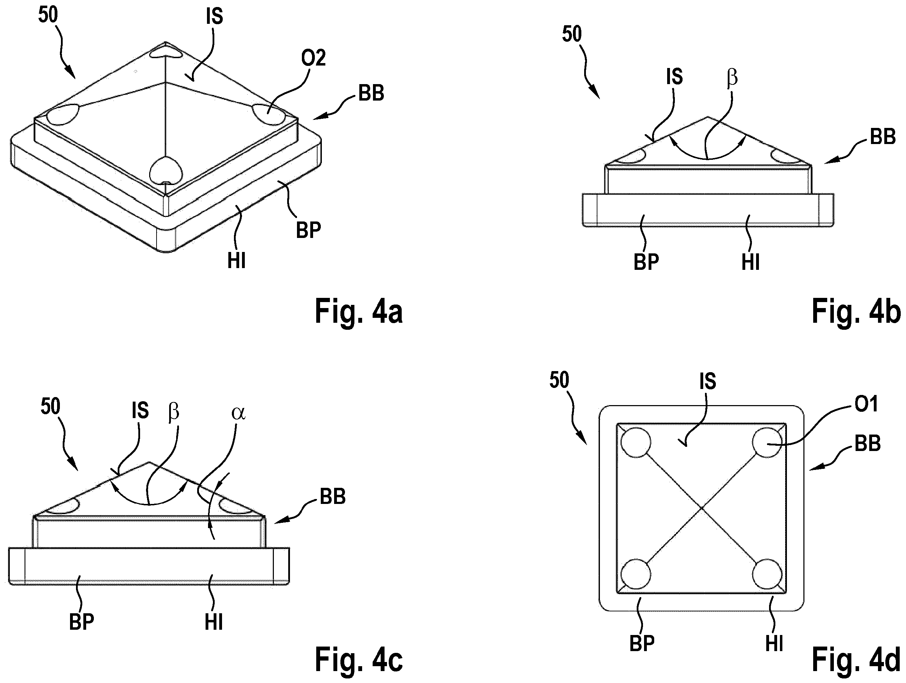

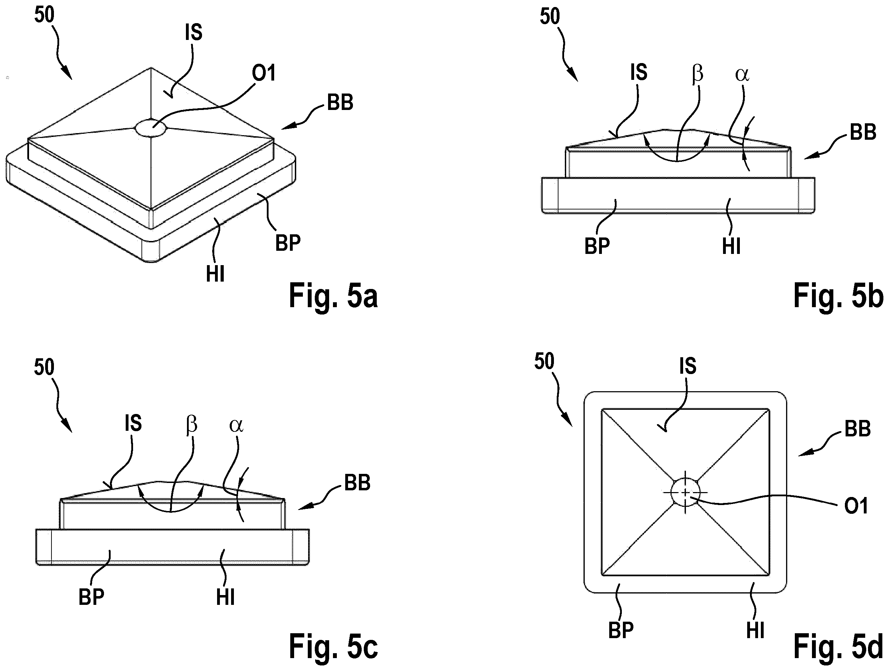

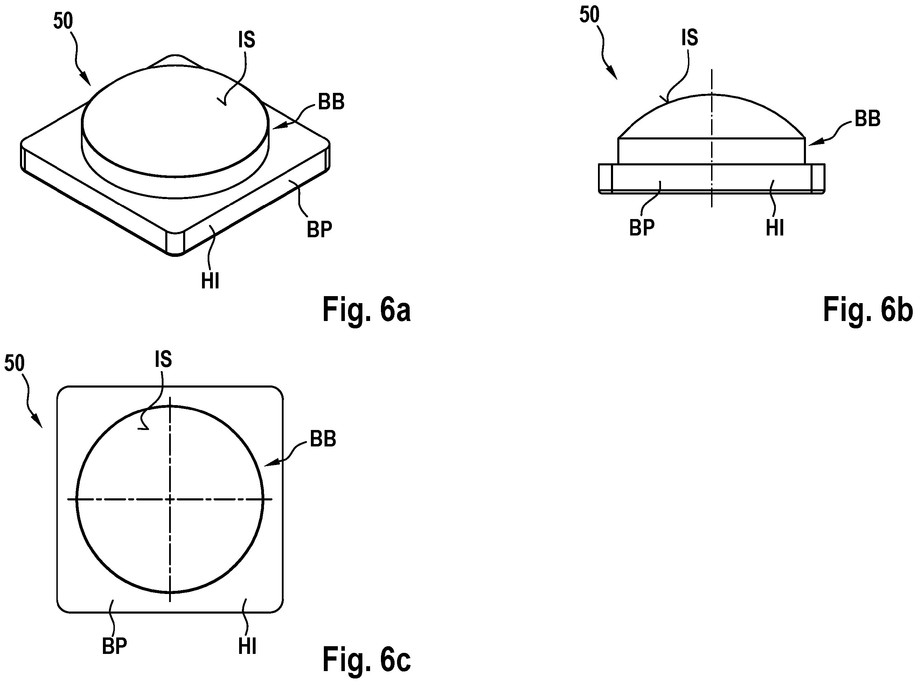

Particularly, Fig. 2 - 8 show in Fig. 2a, 2b, and 2c a perspective view of an exemplary embodiment of a support structure 50 (see Fig. 2a), a frontal view of the exemplary embodiment of the support structure 50 (see Fig 2b), and a perspective view of the exemplary embodiment of the support structure 50 including a frame structure 53 with two frame structure members 53.1, 53.2 (see Fig. 2c), in Fig. 3a - 3d a perspective view of another exemplary embodiment of a support structure 50 (see Fig. 3a), a frontal view of the exemplary embodiment of the support structure 50 (see Fig. 3b), a side-view of the exemplary embodiment of the support structure 50 (see Fig. 3c), and a top-view of the exemplary embodiment of the support structure 50 (see Fig. 3d), in Fig. 4a - 4d a perspective view of another exemplary embodiment of a support structure 50 (see Fig. 4a), a frontal view of the exemplary embodiment of the support structure 50 (see Fig. 4b), a side-view of the exemplary embodiment of the support structure 50 (see Fig. 4c), and a top-view of the exemplary embodiment of the support structure 50 (see Fig. 4d), in Fig. 5a - 5d a perspective view of another exemplary embodiment of a support structure 50 (see Fig. 5a), a frontal view of the exemplary embodiment of the support structure 50 (see Fig. 5b), a side-view of the exemplary embodiment of the support structure 50 (see Fig. 5c), and a top-view of the exemplary embodiment of the support structure 50 (see Fig. 5d), in Fig. 6a - 6c a perspective view of another exemplary embodiment of a support structure 50 (see Fig. 6a), a side-view of the exemplary embodiment of the support structure 50 (see Fig. 6b), and a top-view of the exemplary embodiment of the support structure 50 (see Fig. 6c), in Fig. 7a - 7c a perspective view of another exemplary embodiment of a support structure 50 (see Fig. 7a), a side-view of the exemplary embodiment of the support structure 50 (see Fig. 7b), and a top-view of the exemplary embodiment of the support structure 50 (see Fig. 7c), and in each of Fig. 8a and 8b a side-view of another exemplary embodiment of a support structure 50.

As is apparent from Fig. 2 - 6, the mechanical support of the at least one green body or object, respectively via the at least one support structure 50 can comprise that one or more first portions of the at least one green body or object, respectively are mechanically supported, i.e. in direct mechanical contact with the at least one support structure 50, e.g. via one or more first wall portions 51 of the at least one support structure 50, and that one or more second portions of the at least one green body or object, respectively are not mechanically supported, i.e. not in direct mechanical contact with the at least one support structure 50. Respective first portions of the at least one green body or object, respectively can comprise portions, such as e.g. outer contour portions, which are not essential for an intended design and/or function of the object to be manufactured. Respective second portions of the at least one green body or object, respectively can comprise portions, such as e.g. outer contour portions, which are essential for the intended design and/or function of the object to be manufactured.

As such, the at least one support structure 50 can comprise a design, particularly a specific constructive design with respect to at least one specific object or type of object to be manufactured, which facilitates that one or more first portions of the specific object or a green body of the specific object, respectively are mechanically supported, i.e. in direct mechanical contact with the at least one support structure, and that one or more second portions of the specific object or a green body underlying the specific object, respectively are not mechanically supported, i.e. not in direct mechanical contact with the at least one support structure. As a non-limiting example, the at least one support structure 50 can comprise a design, particularly a specific constructive design with respect to at least one specific object or type of object to be manufactured, which comprises one or more first wall portions 51 which are shaped and sized with respect to respective one or more first portions of a specific object or a green body underlying the specific object. As a more concrete example which is apparent from the exemplary embodiment of Fig. 2, the at least one support structure 50 can comprise a design, particularly a specific constructive design with respect to at least one object or type of object to be manufactured which has a disc-like shape, which comprises one or more curved or quasi-curved first wall portions which are shaped and sized, i.e. geometrically adapted, with respect to the outer contour or outer perimeter of the specific object or a green body underlying the specific object such that a stable mechanical support is possible. As such, the outer contour or outer perimeter of the specific object or a green body underlying the specific object can be or comprise a respective first portion of the specific object or type of object to be manufactured, for instance.

According to the method, the at least one green body or object, respectively can comprise at least one attachment element or attachment site for at least temporarily attaching the at least one support structure 50 to the at least one green body or object, respectively. The at least one attachment element or attachment site can facilitate a highly stable support of the at least one green body or object, respectively via the at least one support structure 50 as the at least one green body or object, respectively can be at least temporarily attached to the at least one support structure 50. Notably, attaching can e.g. comprise an at least temporary fastening of at least one portion to the at least one green body or object, respectively with the at least one attachment element AE or attachment site provided with the at least one support structure 50, or vice versa. The attachment element AE or attachment site provided with the at least one green body or object, respectively can thus, be or comprise a fastening element or fastening site which can be or comprise an opening, hook, loop, lug, protrusion, recess, etc. Particularly, a so-called fishing rod according to Herder ("Herder'sche Angel") can be used.

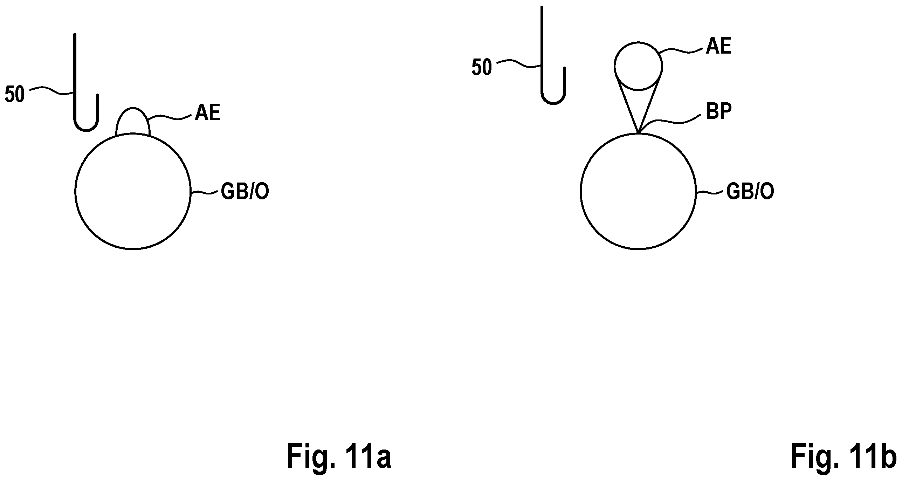

Two exemplary embodiments of an attachment element AE or attachment site provided with a green body or object (GB/O) in the exemplary shape of a disc is shown in Fig. 11.

According to the exemplary embodiment of Fig. 11a, the attachment element AE or attachment site is provided as an arc-like wall portion delimiting an opening through which a support structure 50, particularly a support structure 50 comprising a hook element, can engage.

According to the exemplary embodiment of Fig. 11b, the attachment element AE or attachment site is provided, particularly integrally formed, with an auxiliary or sacrificial portion SP of the at least one green body or object, respectively or a portion of a base body of the at least one green body or object, respectively. Notably, auxiliary or sacrificial portion can comprise one or more predetermined breaking structures or predetermined breaking points, e.g. created by portions having small wall thicknesses, which eases detachment of the auxiliary or sacrificial portion SP of the at least one green body or object. As is exemplarily shown in Fig. 11b, respective breaking points BP can be directly provided at an outer contour or outer surface, respectively of the base body of the at least one green body or object, respectively.

As is apparent from Fig. 11, the at least one attachment element AE or attachment site can be integrally formed with the at least one green body via the at least one volumetric irradiation process. As such, the at least one green body can be printed with at least one attachment element AE or attachment site which enables that the at least one green body or object, respectively can be at least temporarily attached to the at least one support structure 50. The at least one attachment element AE or attachment site, respectively can be or be provided, particularly integrally formed, with an auxiliary or sacrificial portion of the at least one green body or object, respectively or a portion of a base body of the at least one green body or object, respectively.

As is further apparent from Fig. 11, the at least one attachment element AE or attachment site can be provided, particularly integrally formed, with at least one auxiliary or sacrificial portion of the at least one green body or object, respectively. Particularly, the at least one auxiliary or sacrificial portion can be removable, e.g. via one or more predetermined breaking structures, such as e.g. breaking points, breaking lines, etc., from a base body of the at least one green body or object, respectively. As such, the at least one attachment element AE or attachment site can generally be provided with portions of the at least one green body or object, respectively which are not required or least not decisive for the intended function of the at least one green body or object, respectively.

As is apparent from the exemplary embodiment of Fig. 2, the at least one support structure 50 can be or comprise a frame structure 53 according to another exemplary embodiment. The frame structure 53 can comprise at least one receiving portion 54 for at least partially receiving the at least one green body or object, respectively. Particularly, the frame structure 53 can comprise at least one receiving portion 54 for at least partially receiving at least one portion, e.g. a freely exposed portion, an outer portion, etc., of the at least one green body or object, respectively. The at least one receiving portion 54 of the frame structure 53 can comprise one or more respective first wall portions 51 of the at least one support structure 50 which are configured to mechanically support, i.e. to be in direct mechanical contact, with respective one or more first portions of the at least one green body or object, respectively which is to be supported via the at least one support structure 50. The at least one receiving portion 54 of the frame structure 53 can be or comprise at least one protrusion, recess, particularly a groove-like recess, or other depression which enables at least partially receiving at least one portion of the at least one green body or object, respectively.

As is apparent from Fig. 2, the frame structure 53 can comprise one or more one- or multidimensional, e.g. point- or line-shaped, contact portions 55 each configured to contact/support the at least one green body or object, respectively when it is at least partially received in the at least one receiving portion 54. Respective one or more one- or multidimensional, e.g. point- or line-shaped, contact portions 55 can be provided with respective one or more first wall portions 51 of the at least one support structure 50 which are configured to mechanically support, i.e. to be in direct mechanical contact, with respective one or more first portions of the at least one green body or object, respectively which is to be supported via the at least one support structure 50. Particularly, respective one or more one- or multidimensional, e.g. point- or line-shaped, contact portions 55 can be provided as point- or line-shaped protrusions projecting off one or more first wall portions 51 of the at least one support structure 50 which are configured to mechanically support, i.e. to be in direct mechanical contact, with respective one or more first portions of the at least one green body or object, respectively which is to be supported via the at least one support structure 50.

As is further apparent from Fig. 2, the one or more contact portions 55 can be formed as protrusion projecting off a base body of the frame structure 53. Furthermore, the one or more contact portions 55 can be provided at distributed portions of the frame structure 53, particularly to enable a maximum contact area at specific portions of the at least one green body or object, respectively and/or a minimum contact area at other specific portions of the at least one green body or object, respectively. As such, the design of the frame structure 53 can be chosen with respect to the geometry of the at least one green body or object, respectively which is to be received in the at least one receiving portion 54.

As is further apparent from Fig. 2, the one or more one- or multidimensional, e.g. point- or line-shaped, contact portions 55 can be provided with the at least one receiving portion 54 for at least partially receiving the at least one green body or object, respectively. As a non-limiting example, the one or more one- or multidimensional, e.g. point- or line-shaped, contact portions 55 can be provided with at least one of a side-wall and a bottom-wall of the at least one receiving portion 54.

As is further apparent from Fig. 2, the at least one receiving portion 54 can comprise a shape adapted to at least partially receive an outer contour of the at least one green body or object, respectively. Particularly, the shape of the at least one receiving portion 54 can be chosen to facilitate that the overall contact area between the at least one support structure 50 and the one or more first portions of the at least one green body or object, respectively supported therewith is relatively high, particularly as high as possible, as this can reduce the stress on the at least one green body or object, respectively during post-processing, e.g. when removing excess photocurable resin from the at least one green body or object, respectively or when conducing other post-processing measures.

As exemplarily indicated in Fig. 2, the at least one receiving portion 54 can comprise a curved or quasi-curved shape adapted to a curved portion of the contour of the at least one green body or object, respectively. Particularly, the at least one receiving portion 54 can comprise a curved or quasi-curved shape adapted to an outer diameter or outer perimeter of a (rotationally-)symmetric green body or object, respectively. The curved or quasi-curved shape of the at least one receiving portion 54 can thus, be chosen to facilitate that the overall contact area between the at least one support structure 50 and the one or more first portions of the at least one green body or object, respectively supported therewith is relatively high, particularly as high as possible, as this can reduce the stress on the at least one green body or object, respectively during post-processing, e.g. when removing excess photocurable resin from the at least one green body or object, respectively or when conducing other post-processing measures.

As a non-limiting example, the at least one receiving portion 54 can contact, support or cover at least 20%, particularly at least 30%, more particularly at least 40%, more particularly at least 50%, more particularly at least 60%, more particularly at least 70%, of the at least one green body or object, respectively. Particularly, the at least one receiving portion 54 can contact, support or cover at least 20%, particularly at least 30%, more particularly at least 40%, more particularly at least 50%, more particularly at least 60%, more particularly at least 70%, of the or an outer contour of the at least one green body or object, respectively. The degree of contact, support or coverage is typically, related with a contact area between the at least one receiving portion 54 and the at least one green body or object, respectively such that relative high degrees of coverage can be implemented which can reduce the stress on the at least one green body or object, respectively during post-processing, e.g. when removing excess photocurable resin from the at least one green body or object, respectively or when conducing other post-processing measures. Generally, the at least one receiving portion 54 can be sized and shaped such that at least one surface of the at least one green body or object, respectively can be kept free of contact with solid surfaces during removal, washing, post-processing.

As is further apparent from Fig. 2, the at least one receiving portion 54 can comprise at least one confinement element 56 which at least partially confines the at least one receiving portion 54, particularly to support an outer surface of the at least one green body or object, respectively supported by the at least one support structure 50 such that the at least one green body or object, respectively is secured against motions in at least one degree of freedom of motion, such as e.g. a translatory and/or rotatory degree of freedom of motion, particularly in at least two different degrees of freedom of motion, such as e.g. two different translatory and/or rotatory degrees of freedom of motion. Particularly, the at least one confinement element 56 can be or comprise an edge or wall of the frame structure 54 which secures the at least one green body or object, respectively supported by the at least one support structure 50 against motions in at least one degree of freedom of motion, such as e.g. a translatory and/or rotatory degree of freedom of motion, in a direction (see arrow A1 in Fig. 2a in which the at least one green body or object, respectively has been inserted in the at least one receiving portion 54 or support structure 50, respectively and/or in a direction different from the direction in which the at least one green body or object, respectively has been inserted in the at least one receiving portion 54 or support structure 50, respectively. For (rotationally-)symmetric green bodies or objects, respectively, the at least one confinement element 56 can be or comprise an edge or wall of the frame structure 53 which secures the at least one green body or object, respectively against motions in a direction parallel or transverse to a symmetry axis of the respective green body or object, respectively.

It is apparent from the above that the at least one green body or object, respectively can be inserted into the at least one receiving portion 53 or support structure 50, respectively in a first direction and a respectively inserted green body or object, respectively can be removed from the at least one receiving portion or support structure, respectively in a second direction. Notably, the first and second direction can be the same or different. Preferably, the first and second direction are opposite directions as this enables easy insertion and removal of the at least one green body or object, respectively.

As is further apparent from Fig. 2, the at least one support structure 50 can comprise a channel structure 57 for a fluid. The channel structure 57 can comprise at least one inlet opening 57.1 through which a fluid, particularly a cleaning or washing fluid, can enter the channel structure 57 and at least one outlet opening 57.2 through which a fluid, particularly a cleaning fluid or a washing fluid or uncured photocurable resin, can exit the channel structure 57. The channel structure 57 can serve for at least one of the following functions: cleaning of a green body or object, respectively with a cleaning fluid, washing of a green body or object, respectively with a washing fluid, and removing of uncured photocurable resin from a green body or object, respectively.

As is further apparent from Fig. 2, the channel structure 57 can particularly, be provided with or within a wall of the frame structure 53 which comprises the at least one receiving portion 53. As such, the channel structure 57 can be shaped and sized in accordance with the at least one receiving portion 54. Thus, for the non-limiting example of a receiving portion 54 having a curved or quasi-curved shape, the channel structure 57 can also have a curved or quasi-curved shape. Respective inlet and/or outlet openings 57.1, 57.2 of the channel structure 57 can be provided as bores penetrating through a wall of the at least one receiving portion 54 or frame structure 53, respectively.

Fig. 2 further shows that the at least one support structure 50 can comprise a U- or U-like base shape. In this exemplary embodiment, the at least one inlet opening 57.1 can be provided with a straight portion of the frame structure 53 or respectively the at least one support structure 50 and the at least one outlet opening 57.2 can be provided with the curved portion of the frame structure 53 or respectively the at least one support structure 50, particularly with the bottom-most portion of the curved portion of the at least one support structure 50. Such an arrangement of the at least one inlet opening 57.1 and the at least one outlet opening 57.2 can be beneficial e.g. as it can promote a gravitationally-driven flow of a respective fluid through the channel structure 57 and a gravitationally-driven exit of a respective flow out of the channel structure 57, for instance.

Generally, the at least one inlet opening 57.1 and the at least one outlet opening 57.2 can be spaced from each other. The spacing can be chosen with the premise that the channel structure 57 has a defined spatial extension which enables best-possible effectiveness of a fluid flowing through the channel structure 57.

As is particularly apparent from Fig. 2c), the at least one support structure 50, particularly the frame structure 53, can comprise at least two support structure members, particularly at least two frame structure members 53.1, 53.2, which can be attached to each other. The at least two support structure members or frame structure members 53.1, 53.2, respectively can, when attached to each other, define the or a channel structure 57 for a fluid, particularly a cleaning fluid or a washing fluid or uncured photocurable resin. Also in this exemplary embodiment, the channel structure 57 can comprise at least one inlet opening 57.1 through which the fluid can enter the channel structure 57 and at least one outlet opening 57.2 through which a fluid can exit the channel structure 57. As such, at least one support structure element or frame structure element 53.1, 53.2, respectively, typically at least two support structure elements or frame structure members 53.1, 53.2, respectively, can comprise a recess or other variable cross-section which defines at least one wall of the channel structure 57.

The at least two support structure members or frame structure members 53.1, 53.2, respectively can comprise one or more attachment interfaces facilitating that the at least two support structure members or frame structure members 53.1, 53.2, respectively can be attached to each other at variable distances, particularly such that at least one geometrical parameter of the channel structure 57 can be altered by varying the distance of the two frame structure members or frame structure members 53.1, 53.2, respectively relative to each other. As such, the at least one support structure 50 can be configured to receive, based on a respective adjustment of the distance of the two frame structure members or frame structure members 53.1, 53.2, respectively relative to each other, green bodies or objects, of different spatial dimensions, particularly different thicknesses.

As is apparent from the embodiments of Fig. 3 - 6, the at least one green body or object, respectively can be adhered, particularly by polymerization of the photocurable resin, to the at least one support structure 50, particularly during the at least one irradiation process, more particularly because the at least one volumetric irradiation process is initiated at at least one surface of the at least one support structure 50. As such, the at least one support structure 50 can be at least partially arranged adjacent to the working volume or even within the working volume during the at least one irradiation process such that the at least one green body or object, respectively can be directly adhered, particularly by polymerization of the photocurable resin, to the at least one support structure 50, particularly during the at least one irradiation process, more particularly because the at least one irradiation process is initiated at at least one surface of the at least one support structure 50. This is beneficial as a connection between the at least one support structure 50 and the at least one green body or object, respectively, can be created during the at least one irradiation process such that any separate measures for connecting the at least one support structure 50 with the at least one green body or object, respectively can be avoided. Yet, it is also possible that the at least one green body or object, respectively can be indirectly adhered, particularly by polymerization of the photocurable resin, to the at least one support structure 50, particularly during the at least one irradiation process, more particularly because the at least one irradiation process is initiated at at least one surface of the at least one support structure 50. Indirectly adhering the at least one green body or object, respectively to the at least one support structure can e.g. comprise using an auxiliary or sacrificial structure which directly adheres to the at least one green body or object, respectively with at least one first portion and directly adheres to the at least one support structure with at least one other portion.

As is apparent from the embodiments of Fig. 4 - 6, the at least one support structure 50 can comprise a base body BB defining a base plane BP and at least one surface, particularly at least one inclined surface IS, in exemplary embodiments. In such exemplary embodiments of the method, the at least one irradiation process can be initiated at the at least one surface, particularly the at least one inclined surface IS, of the at least one support structure 50.

Generally, the at least one surface of the base body BB can comprise a planar surface or a non-planar surface. A non-planar surface can comprise a regular or irregular surface structuring, such as e.g. a regular or irregular arrangement of one or more depressions and/or elevations. Particularly, the depressions and/or elevations, more particularly the shape and/or size of the depressions and/or elevations, can be oriented and/or positioned on the at least one surface according to the shape and/or size of at least a part of the at least one green body or object, respectively. Hence, the orientation and/or position of the depressions and/or elevations, more particularly the shape and/or size of the depressions and/or elevations, can be chosen under consideration of the shape and/or size of at least a part of the at least one green body or object, respectively.

As is particularly apparent from Fig. 3 - 5, the at least one support structure 50 can comprise a base body BB defining a base plane BP and at least one inclined surface IS. The at least one inclined surface IS can have a main extension plane extending at an angle α of e.g. 1 - 89° relative to a reference plane, particularly the base plane BP of the base body BB or relative to a main irradiation direction of the light of the at least one wavelength, particularly the light L1 of the first wavelength, or relative to side wall or a bottom wall of a container 5 delimiting the working volume. Providing the base body BB of the at least one support structure 50 with at least one inclined surface IS can avoid undesired optical effects of the at least one support structure 50 in connection with the at least one irradiation process, e.g. due to an undesired shadow formation. Further, providing the base body BB of the at least one support structure 50 with at least one inclined surface IS can enable that the voxels in close proximity to the at least one support structure 50 can be addressed. Notably, the at least one inclined surface IS does not necessarily have to be a plane surface but can also be a curved, quasi-curved or polygonal surface, for instance. Also, the at least one inclined surface IS can be provided with a one- or multidimensional surface structuring, such as e.g. a specific surface roughness, e.g. to enable a stable attachment between the at least one green body and the at least one support structure 50 and/or to avoid undesired optical effects of the at least one support structure 50 in connection with the at least one irradiation process. In either case, the at least one inclined surface IS can enable high light intensities at the surface of the at least one support structure 50 which results in a good adherence between the surface of the at least one support structure 50 and a green body which is to be attached to the surface of the at least one support structure 50 via volumetric printing.

As is further apparent from Fig. 3, the at least one inclined surface IS can additionally be tilted relative to a reference plane, particularly the base plane BP of the base body BB or relative to a main irradiation direction of the light L1, L2 of the at least one wavelength or a plane defined by a light sheet formed of the light of the at least one wavelength or relative to a bottom wall of a container delimiting the working volume or a plane defined by a tangent to at least one surface or surface portion of the base body, at a tilting angle σ of e.g. 1 - 89°.

As is further apparent from Fig. 3 - 5, the at least one support structure 50 can comprise at least one of the following configurations: at least two inclined surfaces IS each having a main extension plane extending at an angle of 1 - 89° relative to the reference plane, wherein the free ends of the at least two inclined surfaces contact each other, thereby, defining an edge-like tip portion (see Fig. 3); or at least four inclined surfaces IS each having a main extension plane extending at an angle of 1 - 89° relative to the reference plane, wherein the free ends of the at least four inclined surfaces contact each other, thereby, defining a tip portion (see e.g. Fig. 4, 5); or at least one spherical geometry having a symmetry or rotation axis extending at an angle of 1 - 90°, particularly 45 - 90°, more particularly 90°, relative to the reference plane (see e.g. Fig. 6, 7). Further, at least one surface of a support structure 50 having a conical or frustoconical geometry or a spherical geometry can be arranged at an angle (half angle) of 1 - 89° relative to reference plane.

According to the exemplary embodiment of Fig. 3, in which the at least one support structure 50 has a configuration with two inclined surfaces IS each having a main extension plane extending at an angle α of 1 - 89° relative to the reference plane, wherein the free ends of the two inclined surfaces IS contact each other, thereby, defining an edge-like tip portion, the two inclined surfaces IS can be arranged parallel or transverse to a direction of the light of the at least one wavelength. In this configuration, the main extension planes of the two inclined surfaces IS can be arranged at an angle β of 91 - 179° relative to each other. The two inclined surfaces IS can have a rectangular base shape, particularly a square base shape. The two inclined surfaces IS can be at least partially plane or at least partially curved. Even though not shown, the tip portion can e.g. be flat or flattened such that it extends substantially parallel to the main extension plane of the base body BB of the at least one support structure 50. This configuration can be deemed or denoted a roof-configuration.

According to the exemplary embodiment of Fig. 4 and 5, in which the at least one support structure 50 has a configuration with four inclined surfaces IS each having a main extension plane extending at an angle α of 1 - 89° relative to the reference plane, wherein the free ends of the four inclined surfaces IS contact each other, thereby, defining a tip portion, the main extension planes of the four inclined surfaces IS can be arranged at an angle β of 91 - 179° relative to each other. The four inclined surfaces IS can have a triangular base shape, for instance. The four inclined surfaces IS can be at least partially plane or at least partially curved. As is apparent from the embodiment of Fig. 5, the tip portion can e.g. be flat or flattened such that it extends substantially parallel to the main extension plane of the base body BB of the at least one support structure 50. This configuration can be deemed or denoted a pyramid configuration.

The roof-configuration can particularly, be used in connection with exemplary embodiments of the method in which the at least one irradiation process comprises generating at least two light sheets, particularly comprising two parallel light sheets extending in opposite directions. Particularly, the at least two inclined surfaces IS can be arranged parallel or transverse to a direction of the light which forms the at least two light sheets in the roof-configuration.

The pyramid-configuration can particularly, be used in connection with exemplary embodiments of the method in which the at least one irradiation process comprises generating at least four light sheets, particularly comprising a first group of two parallel light sheets extending in opposite directions and, arranged at an angle, e.g. of 90°, thereto, a second group of light sheets extending in opposite directions. Particularly, at least two inclined surfaces IS can be arranged parallel or transverse to a direction of light which forms the first group of parallel light sheets, and at least two inclined surfaces IS can be arranged parallel to or transverse to a direction of light which forms the second group of light sheets in the pyramid-configuration.

Generally, any surface of the at least one support structure 50 can be arranged to avoid or reduce undesired optical effects of the at least one support structure 50 in connection with the at least one irradiation process, e.g. due to an undesired shadow formation. Generally, the at least one support structure 50 can have optical properties, e.g. anti-reflective properties, to avoid or reduce undesired optical effects of the at least one support structure 50 in connection with the at least one irradiation process, e.g. due to an undesired shadow formation, undesired (back)reflections, etc. As such, the at least one support structure 50 can have a dark color, e.g. black, at least in exemplary embodiments as shown in Fig. 3 - 5.

As is further apparent from Fig. 3 - 7, the at least one support structure 50 can comprise at least one hollow inner space HIS, particularly for receiving photocurable resin 2 when the at least one support structure 50 is inserted into the working volume. The at least one support structure 50 can thus, e.g. in a respective roof- or pyramid-configuration, comprise one or more walls delimiting at least one hollow inner space HIS, particularly for receiving photocurable resin 2 when the at least one support structure 50 is inserted into the working volume. The at least one hollow inner space HIS can avoid or reduce undesired changes of the fill level of the photocurable resin 2 within the working volume when the at least one support structure 50 is inserted into the working volume as any change of the fill level of the photocurable resin 2 within the working volume can be compensated by a corresponding flow of the photocurable resin 2 into the at least one hollow inner space HIS of the at least one support structure 50. The at least one (hollow) inner space HIS can support avoiding or reducing the formation of undesired bubbles of gas, e.g. air, within the working volume, particularly at the surface of the at least one support structure 50, when the at least one support structure 50 is inserted into the working volume as any gas between the at least one support structure 50 and the photocurable resin 2 within the working volume can be removed by a corresponding flow of gas into the at least one (hollow) inner space HIS of the at least one support structure 50. As is apparent from Fig. 3 - 5, the at least one hollow inner space HIS of the at least one support structure 50 can be or comprise a closed space as shown in Fig. 4, 5 or an open space as shown in Fig. 3.

As is particularly apparent from Fig. 4, 5, the at least one (hollow) inner space HIS of the at least one support structure 50 can comprise or at least communicate with at least one inlet opening O1, particularly provided with at least one surface, such as e.g. at least one inclined surface IS, of the at least one support structure 50 which is in contact with photocurable resin 2 when the at least one support structure 50 is inserted into the working volume. The at least one inlet opening O1, particularly when provided with at least one inclined surface IS of the at least one support structure 50, can ease the flow of photocurable resin 2 into the at least one hollow inner space HIS when the at least one support structure 50 is inserted into the working volume and can thus, be beneficial for compensating respective undesired change of the fill level of the photocurable resin 2 within the working volume.

Further, the at least one support structure 50 can comprise at least one opening O2, particularly a through-bore, through which gas, particularly air, may escape the working volume through the at least one support structure 50. The at least one opening O2 may define at least one entry portion via which gas may enter the opening O2 from the working volume and at least one exit portion via which the gas may exit the opening when the at least one support structure 50 is inserted into the working volume. The at least one opening O2 can thus, avoid or at least reduce undesired bubble formation within the photocurable resin 2 as any bubbles created when inserting the at least one support structure 50 into the working can escape the working volume through the at least one support structure 50.

As mentioned further above, the working volume is at least partially delimited by a container volume of a container 5. According to another exemplary embodiment, the at least one support structure 50 - this can particularly, apply to the embodiments shown in Fig. 3 - 5, can be or comprise a closing element, such as e.g. a lid, of the container 5. A respective closing element of the container 5 can be or comprise a top-wall of the container which can be moved relative to or removed from other walls, such as e.g. a side-wall or a bottom-wall, of the container 5. A respective top-wall of the container 5 can have a main extension plane transverse or parallel to a main extension direction of at least one light sheet. Providing the at least one support structure 50 as a closing element can be beneficial as the closing element can easily be removed from the rest of the container 5 which facilitates easy removing of the at least one green body from the working volume by removing the closing element. Notably, the closing element or any other wall or wall portion of the container 5 which serves as a respective support structure 50 can be sized and shaped as to be inserted into a post-processing volume of one or more post-processing devices 20 of the apparatus 100.

As is apparent from the exemplary embodiments of Fig. 6 and 7, the at least one support structure 50 can also comprise a configuration having a spherical geometry, particularly a dome-shaped geometry, having a symmetry or rotation axis extending at an angle of 1 - 90°, particularly 45 - 90°, more particularly 90°, relative to a reference plane, such as e.g. the base plane BP of the base body BB. Particularly, in the exemplary embodiment of Fig. 6, the at least one support structure 50 can be provided with respective openings O2, whereas in the exemplary embodiment of Fig. 7, the at least one support structure 50 is provided with respective openings O2. Notably, the openings O2 are provided at the outer edge of the spherical portion of the base body BB in the exemplary embodiments of Fig. 6, 7. However, other configurations, particularly with respect to the arrangement and/or number of openings O2, are conceivable.

The embodiments of Fig. 6 and 7 further show that the respective free end or highest point of the respective geometry can define a tip portion. This generally applies to any configuration of the at least one support structure 50.

Even though not explicitly shown in the drawings, other exemplary embodiments of the at least one support structure 50 can comprise a configuration with at least one conical or frustoconical geometry having a symmetry or rotation axis extending at an angle of 1 - 90°, particularly 45 - 90°, more particularly 90°, relative to the reference plane.

In any one of the embodiments of Fig. 3 - 7, the at least one support structure 50 can have a specific surface structuring, e.g. a high surface roughness, which can be particularly, configured to scatter light L1, L2 of the at least one wavelength, for example.

As is particularly apparent from Fig. 8a, the at least one support structure 50 can be or comprise a plate 60 arranged parallel to a wall of the container 5, particularly a wall (rear-wall) of the container 5 through which the light, particularly the light L2 of the second wavelength, exits the container 5 after having propagated through the working volume (see the arrow A2 in Fig. 8a, 8b which indicates an exemplary printing direction). As such, a respective plate 60 can have transmissive properties at least with respect to the light L1, L2 of the at least one wavelength to avoid undesired artefacts within the at least one green body or object, respectively, e.g. caused by (back)reflections. This is not required or even not desired for other embodiments of the method.

As is particularly apparent from Fig. 8b, the at least one support structure 50 can be or comprise a wall (rear-wall) of the container 5 through which the light L1, L2, particularly the light L2 of the second wavelength, exits the container 5 after having propagated through the working volume. As such, a respective wall of the container 5 can have transmissive properties at least with respect to the light L1, L2 of the at least one wavelength to avoid undesired artefacts within the at least one green body or object, respectively, e.g. caused by (back)reflections. This is not required or even not desired for other embodiments of the method.

Still referring to the exemplary embodiments of Fig. 8a, 8b, a respective plate 60 or wall (rear-wall) of the container 5 can be provided with anti-reflective properties with respect to the light L1, L2 of the at least one wavelength, particularly the light L2 of the second wavelength. Particularly, at least one freely exposed plate portion or wall portion, i.e. the plate portion or wall portion opposed to a wall portion which is in contact with the photocurable resin 2 inside the working volume, can be provided with anti-reflective properties with respect to the light L1, L2 of the at least one wavelength. Respective anti-reflective properties can e.g. be created by an anti-reflective surface structuring of the respective plate 60 or wall of the container 5 and/or by anti-reflective elements attached to the respective plate 60 or the wall of the container 5 and/or by an anti-reflective coating of the respective plate 60 or wall of the container 5, for example.

Additionally or alternatively, a respective plate 60 or wall (rear-wall) of the container 5 can be provided with a surface structuring configured to diffuse and/or scatter the light L1, L2 of the at least one wavelength, particularly the light L2 of the second wavelength. A respective surface structuring can be or comprise a regular or irregular pattern of depressions and/or elevations, particularly microscopic depressions and/or elevations. Particularly, at least one freely exposed plate portion or wall portion, i.e. the plate portion or wall portion opposed to a wall portion which is in contact with the photocurable resin 2 inside the working volume, can be provided with a respective surface structuring. A respective surface structuring can be created e.g. by blasting, particularly sand-blasting, etching, scratching, laser-processing, etc. of the respective plate 60 or wall of the container 5, for example. Also, coatings enabling the same diffusing and/or scattering effects are conceivable.

Both a respective plate 60 and a respective wall of the container 5 can be detachably connected with one or more other walls of the container 5 and thus, be removed from the container 5.

In any embodiment, the at least one support structure 50 can comprise at least one handling interface HI via which the at least one support structure 50 can be at least temporarily handled, e.g. by a handling device 40, such as e.g. a handling robot. A respective handling interface HI exemplarily shown in the embodiment of Fig. 3 and can generally be any structure which enables handling, particularly gripping, of the at least one support structure 50, e.g. by a handling device 30. Non-limiting examples of a respective handling interface can be or comprise one or more hooks, loops, lugs, edges, protrusions, recesses, etc.

In any embodiment, the at least one support structure 50 can be made of at least one of: a ceramic, a polymer, a metal, a composite material, for instance. The at least one support structure 50 can thus, be made of materials or material structures which are e.g. not prone to interact with the photocurable resin 2, not prone to interact with the light L1, L2 of the at least one wavelength, not prone to interact with cleaning/washing fluids, and not prone to interacting with other chemical and/or physical influences, such as e.g. temperature, which can occur during post-processing. As will be apparent from below, any material or material structure which is magnetic or magnetizable can be beneficial as it facilitates handling of the at least one support structure 50 based on magnetic interaction with a handling device 30, such as e.g. a robot. As such, it is conceivable that the at least one support structure 50 is made from a magnetic or magnetizable material, such as e.g. an iron-based metal or metal alloy.

Additionally or alternatively, the at least one support structure 50 can be at last partially made of at least one of the following materials or material structures: a non-reflective material or material structure; a magnetic or magnetizable material or material structure. Non-reflective properties can be beneficial as they can avoid undesired artefacts within the at least one green body or object, respectively e.g. caused by (back)reflections. Non-reflective properties can result from a non-reflective coating of the at least one support structure, for instance. Magnetic or magnetizable properties can be beneficial as they facilitate handling of the at least one support structure based on magnetic interaction with a handling device, such as e.g. a robot. Magnetic or magnetizable properties can result from a magnetic or magnetizable coating the at least one support structure and/or the provision of one or more magnetic or magnetizable elements with the at least one support structure, particularly within the at least one support structure, for instance.

Additionally or alternatively, the at least one support structure 50 can comprise thermally conductive properties. As such, the at least one support structure 50 can be made of or comprise a thermally conductive material or material structure, such as e.g. metal or a metal structure. Additionally or alternatively, the at least one support structure 50 can be thermally connected to an active or passive heat removal device, e.g. a heat sink. Such embodiments are particularly, useful when the at least one support structure has absorptive properties or non-reflective properties, respectively to avoid undesired heating of the at least one support structure 50 caused by the absorption of light of the at least one wavelength, particularly the light of the second wavelength.

Particularly, in connection with the exemplary embodiments of Fig. 3 - 6, the at least one support structure 50 can comprise a surface which enables a stable attachment or adherence of the at least one green body or object, respectively thereto. A respective surface can comprise a one- or multidimensional surface structuring, such as e.g. a specific surface roughness, e.g. to enable a stable attachment or adherence between the at least one green body and the at least one support structure 50. Additionally or alternatively, a respective surface can be provided with a chemical and/or physical adherence agent which is configured to increase the adherence forces between the at least one support structure 50 and the at least one green body or object, respectively attached thereto.

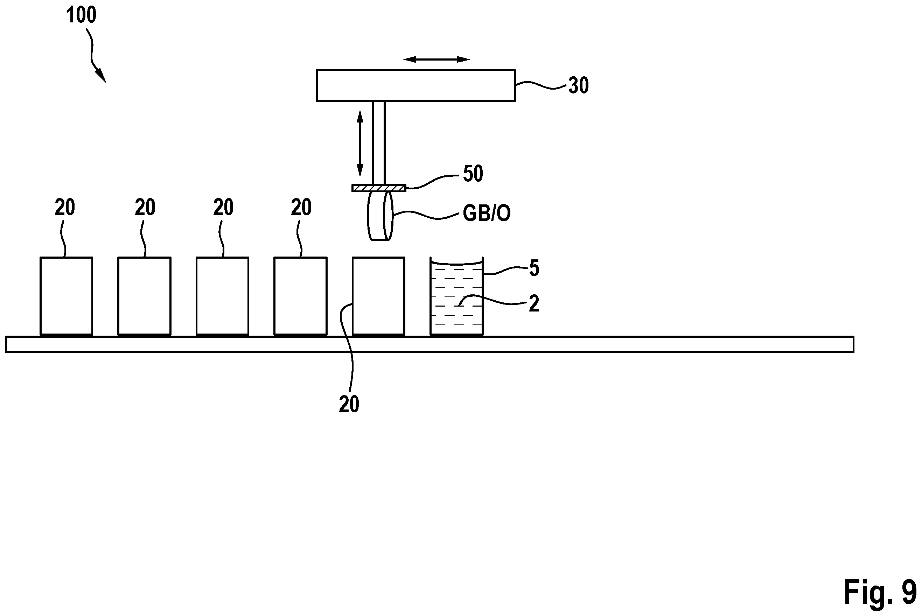

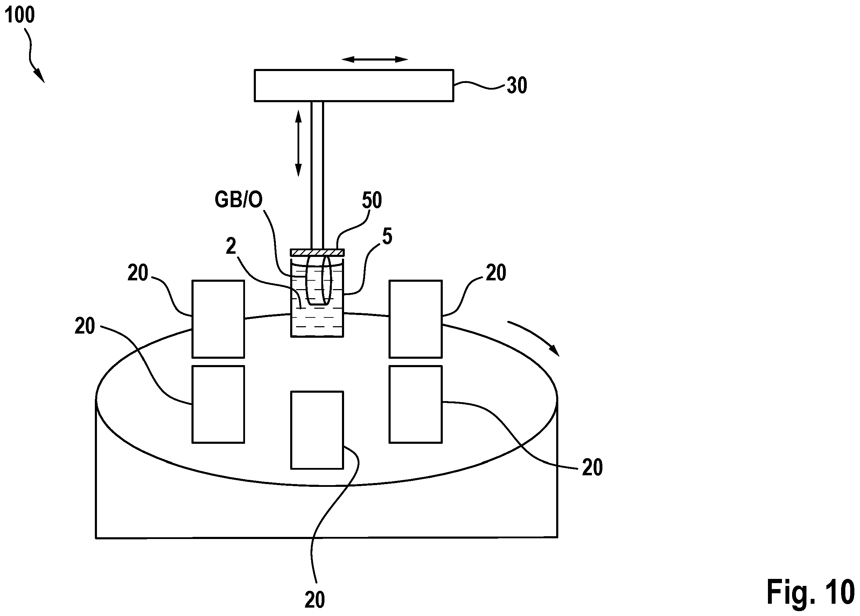

As is particularly, apparent from the exemplary embodiments of Fig. 9 and 10, the method can further comprise a step of removing the at least one support structure 50 including at least one green body attached thereto from the working volume and transferring the at least one support structure 50 including the at least one green body attached thereto, particularly via at least one handling device 30, into at least one post-processing volume and/or to at least one post-processing device 20 in which the or at least one post-processing process is performed. The method can thus, thus generally comprise a step of using the at least one support structure 50 for transferring at least one green body from a volumetric printing device 10 configured to carry out the at least one volumetric irradiation process, particularly at least one multi-color irradiation process, of irradiating a photocurable resin with light of at least one wavelength to form, by photopolymerization of a photocurable resin 2, the at least one green body in a working volume into at least one post-processing volume and/or to at least one post-processing device 20 in which the or at least one post-processing process is performed. The transfer can comprise removing the at least one support structure 50 including at least one green body attached thereto from the working volume of the volumetric printing device 10 by moving same, then moving the at least one support structure 50 including at least one green body attached thereto towards a post-processing volume of at least one post-processing device 20 and inserting the at least one support structure 50 including at least one green body attached thereto into the post-processing volume of the at least one post-processing device 20. The transfer can comprise that the at least one support structure 50 including at least one green body attached thereto is moved in one or more degrees of freedom of motion and particularly, that the at least one support structure 50 including at least one green body attached thereto is moved along one or more motion trajectories (exemplarily indicated by the double-arrows in Fig. 9 and 10) which enable a respective removing, moving, and inserting. As indicated before, the transfer can be effected by a handling device 30, such as e.g. a handling robot, which can grip the at least one support structure 50 and move it accordingly. Particularly, the transfer can be automatically effected by a handling device 30, such as e.g. a handling robot, which can automatically grip the at least one support structure 50 and move it accordingly. The term "gripping" as used herein generally embraces any kind of gripping and is thus, not limited to mechanical gripping but can also refer to magnetic gripping, pneumatic gripping, hydraulic gripping, etc.

As is further apparent from the exemplary embodiments of Fig. 9 and 10, the method can further comprise a step of removing the at least one support structure 50 including at least one green body or object, respectively attached thereto from the post-processing volume of a first post-processing device 20 in which at least one first post-processing process has been performed and transferring the at least one support structure 50 including the at least one green body or object, respectively attached thereto, particularly via at least one handling device 30, into at least one post-processing volume of at least one further post-processing device 20 in which at least one further post-processing process is performed. The method can thus, thus generally comprise a step of using the at least one support structure 50 for transferring at least one green body or object, respectively between different post-processing volumes and post-processing devices 20, respectively. The transfer can comprise removing the at least one support structure 50 including at least one green body or object, respectively attached thereto from the post-processing volume of a first post-processing device 20 by moving same, then moving the at least one support structure 50 including at least one green body or object, respectively attached thereto towards at least one further post-processing volume of at least one further post-processing device 20 and inserting the at least one support structure 50 including at least one green body or object, respectively attached thereto into the at least one further post-processing volume of the at least one further post-processing device 20. The transfer can comprise that the at least one support structure 50 including the at least one green body or object, respectively attached thereto is moved in one or more degrees of freedom of motion and particularly, that the at least one support structure 50 including the at least one green body or object, respectively attached thereto is moved along one or more motion trajectories which enable a respective removing, moving, and inserting. Again, the transfer can be effected by the or a handling device 30, such as e.g. a handling robot, which can grip the at least one support structure 50 and move it accordingly. Particularly, the transfer can be automatically effected by the or a handling device 30, such as e.g. a handling robot, which can automatically grip the at least one support structure 50 and move it accordingly. As mentioned before, the term "gripping" as used herein generally embraces any kind of gripping and is thus, not limited to mechanical gripping but can also refer to magnetic gripping, pneumatic gripping, hydraulic gripping, etc.

One or more of the exemplary post-processing devices 20 shown in Fig. 9 and 10 can comprise one or more post-processing units configured to perform at least one post-processing process. Non-limiting examples of a respective post-processing processes comprise at least one of: a tempering process, particularly a heating process, e.g. to influence the viscosity of the uncured photocurable resin; a cleaning/washing process, particularly a cleaning/washing process in which excess photocurable resin is cleaned/washed off the at least one green body or object, respectively; a drying process, particularly a drying process in which the at least one green body or object, respectively is dried, e.g. after a cleaning/washing process; a detachment process, particularly a detachment process in which the at least one green body or object, respectively is detached from the at least one support structure; and a post-curing process of the at least one green body, particularly a post-curing process in which the at least one green body undergoes one or more post-curing measures, e.g. due to subjecting it to radiation energy, to transfer the at least one green body into an object.

As such, the apparatus 100 used for implementing the method can comprise one or more post-processing devices 20 each configured to perform one or more post-processing processes. As mentioned before, each post-processing device 20 can comprise a post-processing volume in which at least one post-processing process can be performed. Each post-processing volume can be provided with a specific atmosphere, e.g. an inert atmosphere. As a non-limiting example, the apparatus 100 can comprise at least one of: a post-processing device configured to perform a tempering process, particularly a heating process; a post-processing device configured to perform a cleaning/washing process, particularly a cleaning/washing process in which excess photocurable resin is cleaned/washed off the at least one green body or object, respectively; a post-processing device configured to perform a drying process, particularly a drying process in which the at least one green body or object, respectively is dried, e.g. after a cleaning/washing process; a post-processing device configured to perform a detachment process, particularly a detachment process in which the at least one green body or object, respectively is detached from the at least one support structure; and a post-processing device configured to perform a post-curing process of the at least one green body, particularly a post-curing process in which the at least one green body undergoes one or more post-curing measures, e.g. due to subjecting it to radiation energy, to convert the at least one green body into an object.

As is further apparent from Fig. 9 and 10, if the apparatus 100 comprises multiple post-processing devices 20 each configured to perform at least one post-processing process, two, more than two, or all post-processing devices 20 can be arranged in a series arrangement. A series arrangement can comprise an arrangement of the respective post-processing devices along a line, particularly a straight line (as indicated in Fig. 9), or along a curved line, particularly a line of a circle (as indicated in Fig. 10).

Particularly, a series arrangement can comprise an arrangement of respective post-processing devices along a line, particularly a straight line, or along a curved line, particularly a line of a circle, in a specific order. An exemplary specific order shown in connection with the embodiments of Fig. 9 and 10 can comprise the following arrangement (from right to left): a first post-processing device 20 configured to perform a cleaning/washing process, particularly a cleaning/washing process in which excess photocurable resin is cleaned/washed off the at least one green body or object, respectively; followed by a second post-processing device 20 configured to perform a drying process, particularly a drying process in which the at least one green body or object, respectively is dried, e.g. after a cleaning/washing process; followed by a third post-processing device 20 configured to perform a post-curing process of the at least one green body, particularly a post-curing process in which the at least one green body undergoes one or more post-curing measures, e.g. due to subjecting it to radiation energy, to convert the at least one green body into an object; followed by a fourth post-processing device 20 configured to perform a tempering process, particularly a heating process; followed by a fifth post-processing device 20 configured to perform a detachment process, particularly a detachment process in which the at least one green body or object, respectively is detached from the at least one support structure 50.

In either case, the at least one support structure 50 including the at least one green body or object, respectively attached thereto is or can be moved between the respective post-processing devices 20, while the post-processing devices are stationary, or the post-processing devices 20 are or can be moved, e.g. as they are arranged on a moveable unit, e.g. rail, rotary table (see Fig. 8), etc., relative to the at least one support structure 50 including the at least one green body or object, respectively attached thereto while the at least one support structure 50 including the at least one green body or object, respectively is stationary. Also, a combination of both is possible, i. e. a configuration in which both one or more post-processing devices 20 and the at least one support structure 50 including the at least one green body or object, respectively attached thereto are or can be moved.

Even though not shown, it is conceivable that the apparatus 100 comprises multiple handling devices 30, e.g. handling robots. Each of the multiple handling devices 30 can be assigned to at least one green body or object, respectively. Each of the multiple handling devices 30 can be assigned to at least one post-processing process. As such, it is conceivable that at least one green body or object, respectively is transferred from a first handling device 30 which has been assigned to and used in connection with a first post-processing process to at least one further handling device 30 which is assigned to and used in connection with at least one further post-processing process. As such, each handling device can be assigned to at least two different post-processing devices 20.

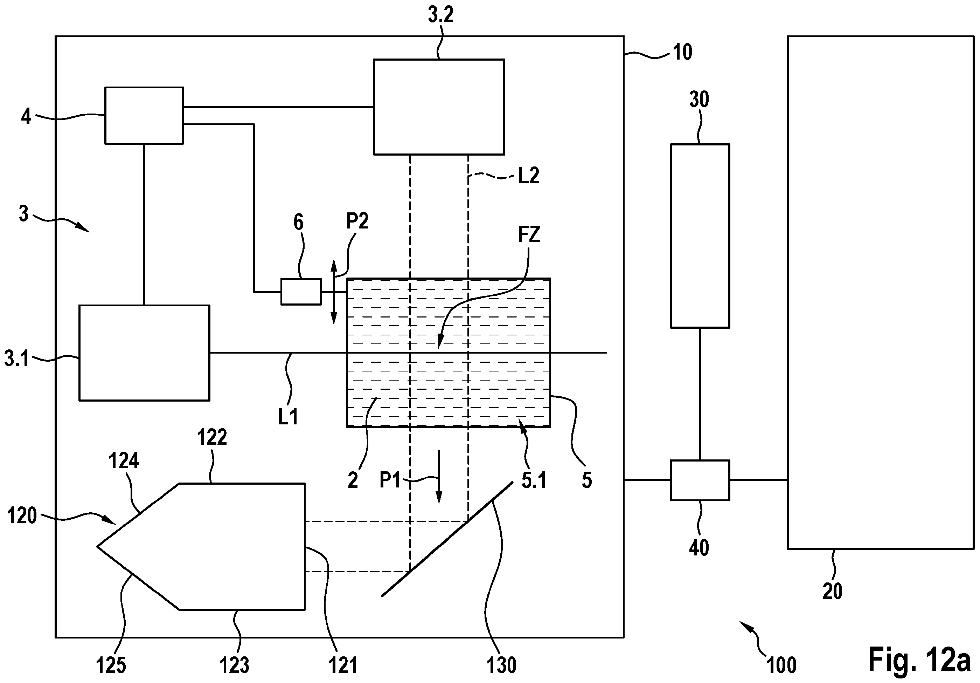

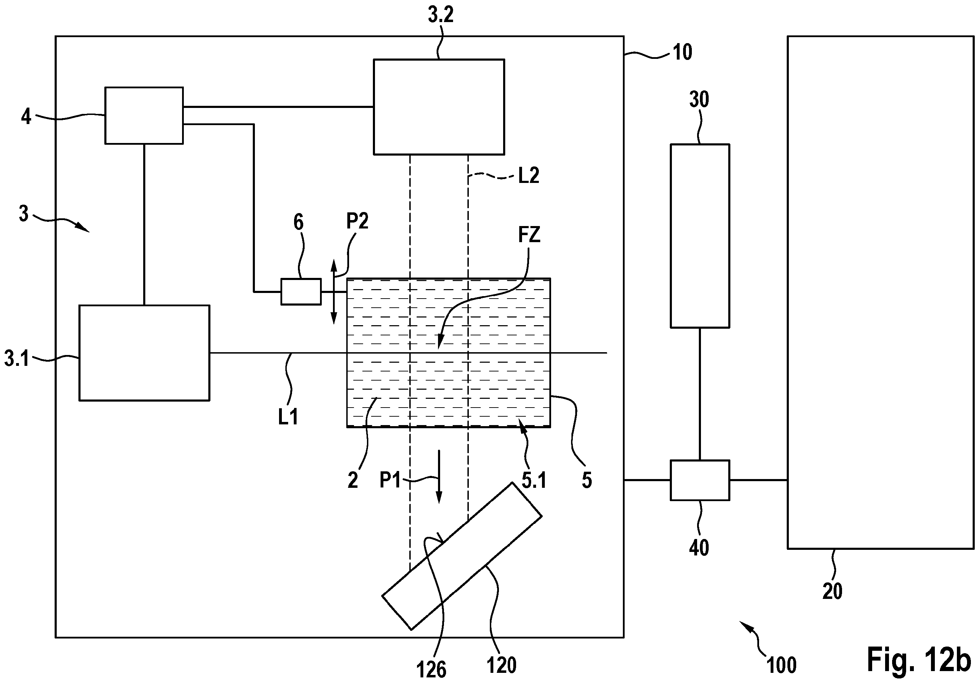

Fig. 12a, b shows two principle drawings of an apparatus 100 for manufacturing, via volumetric printing, at least one object in accordance with another exemplary embodiment which can constitute an independent aspect of the invention.

In the embodiments of Fig. 12 a, b, the apparatus 100 or device 10, respectively comprises at least one light collecting element 120 assigned to the container 5. Particularly, the at least one light collecting element 120 can be configured to collect light of the at least one wavelength, particularly light of the second wavelength, which exits the container 5 after having propagated through the container volume 5.1. As shown in Fig. 12, the at least one light collecting element 120 can be assigned to at least one wall (rear-wall) of the container 5 through which the light, particularly the light of the second wavelength, exits the container 5 after having propagated through the working volume defined or delimited by the container volume 5.1. More particularly, the at least one light collecting element 120 can be assigned to at least one freely exposed wall portion, i.e. the wall portion opposed to a wall portion which is in contact with the photocurable resin inside the working volume, of the at least one wall through which the light exits the container 5 after having propagated through the working volume. Hence, light collecting can mean that the light is at least partially absorbed and/or reflected and/or diffused by the at least one light collecting element 120 one or more times such that the amount of light which is possibly back-reflected into the container 5 is at least significantly reduced. As such, the at least one light collecting element 120 can comprise one or more walls 121 - 125 in a specific spatial arrangement which enable absorption and/or reflection such that the amount of light which is possibly back-reflected into the container 5 is at least significantly reduced.

The at least one light collecting element 120 can be arranged directly adjacent to the container 5, i. e. behind the container 5, such that light which exits the container 5 can directly enter the at least one light collecting element 120, particularly via a wall 121 of the at least one light collecting element 120 which defines a light entry portion of the at least one light collecting element 120. Yet, it is also possible that, as is exemplarily shown in Fig. 12a, the at least one light collecting element 120 is arranged offset to the container 5 such that at least one light deflection element 130, e.g. a mirror element, which is configured to deflect the light which exits the container 5 towards the at least one light deflection element 120, particularly towards a wall 121 of the at least one light collecting element 120 which defines a light entry portion of the at least one light collecting element 120, is arranged between the container 5 and the at least one light deflection element 120.

Fig. 12a exemplifies that the at least one light collecting element 120 can comprise a hollow polyhedric base configuration and thus, the base shape of a polyhedron. Particularly the at least one light collecting element 120 can comprise at least two parallel walls 122, 123 and at least two inclined walls 124, 125 arranged at an angle of less than 180°, particularly less than 150°, particularly less than 120°, relative to each other. Particularly, the at least two inclined walls 124, 125 can form a tip-portion of the at least one light collecting element 120 which is arranged opposite to the wall 121 defining the light entry portion of the at least one light collecting element 120. Particularly, any one of the walls 122 - 125 can enable at least one of: absorption, reflection, diffusion, etc. such that the light entering the at least one light collecting element 120 is absorbed, reflected, diffused, etc. multiple times within the at least one light collecting element 120.

Generally, the at least one light collecting element 120 can have a color enabling absorption of the light of the at least one wavelength, particularly the second wavelength, such as e.g. a dark color, e.g. black, which enables absorption of the light of the at least one wavelength.

Generally, the at least one light collecting element 120 can be made of a material having light collecting properties, particularly high-absorbing properties and/or low-reflecting properties. The respective optical properties of the at least one light collecting element 120, i.e. particularly the light collecting, absorption, reflection, scattering and/or diffusing properties, can be material-immanent properties and/or provided by a functionalization, e.g. a coating, surface structuring, etc., of at least one wall 121 - 125 of the at least one light collecting element 120.

As exemplified in Fig. 12b, the at least one light collecting element 120 could also comprise any other structure, such as e.g. a plate, a sheet, etc., which has light collecting properties, i.e. which is configured to at least partially absorb and/or reflect and/or diffuse light of the at least one wavelength one or more times such that the amount of light which is possibly back-reflected into the container is at least significantly reduced. Respective light collecting properties can result from a light absorbing color, e.g. a dark color, such as e.g. black, and/or a specific reflecting and/or diffusing surface structuring, for example.

Fig. 12b exemplifies that the at least one light collecting element 120 can comprise a light collecting structure, such as a plate, having a surface or wall 126 arranged at an angle different from 90°, particularly an angle of 45°, relative to the direction of the light which exits the container 5 after having propagated through the working volume. The angle of the surface or wall 126 of the at least one light collecting element 120 enables that the light which exits the container 5 after having propagated through the working volume cannot reflect back into the working volume. Particularly, the angle of the surface or wall 126 of the at least one light collecting element 120 enables that the light is deflected and/or scattered in a direction away from the working volume.

Even though not explicitly shown in the Fig., at least one wall of a container for a refractive index matching bath can be provided with anti-reflective properties with respect to the light of the at least one wavelength. Particularly, at least one wall (rear-wall) of such a container through which the light, particularly the light L2 of the second wavelength, exits the container after having propagated through the container volume can be provided with anti-reflective properties with respect to the light of the at least one wavelength. More particularly, at least one freely exposed wall portion, i.e. the wall portion opposed to a wall portion which is in contact with a refractive index matching medium inside the container volume, of the at least one wall through which the light exits the container after having propagated through the container volume can be provided with anti-reflective properties with respect to the light of the at least one wavelength. Respective anti-reflective properties can e.g. be created by an anti-reflective surface structuring of the at least one wall of such a container and/or by anti-reflective elements attached to the at least one wall of such a container and/or by an anti-reflective coating of the at least one wall of such a container.

Additionally or alternatively, at least one wall of a container for a refractive index matching bath can be provided with a surface structuring configured to diffuse and/or scatter the light of the at least one wavelength. A respective surface structuring can be or comprise a regular or irregular pattern of depressions and/or elevations, particularly microscopic depressions and/or elevations. Particularly, at least one wall (rear-wall) of the container through which the light, particularly the light of the second wavelength, exits the container after having propagated through the working volume can be provided with a respective surface structuring. More particularly, at least one freely exposed wall portion, i.e. the wall portion opposed to a wall portion which is in contact with the photocurable resin inside the working volume, of the at least one wall through which the light exits the container after having propagated through the working volume can be provided with a respective surface structuring. A respective surface structuring can be created e.g. by blasting, particularly sand-blasting, etching, scratching, laser-processing, etc. of the at least one wall of the container.

One, more, or all features mentioned in connection with at least one embodiment can be arbitrarily combined with one, more, or all features mentioned in connection with at least one other embodiment.

## Claims

1. A method for manufacturing, via volumetric printing, at least one object, particularly at least one optical component, wherein the method comprises:
- at least one volumetric irradiation process, particularly at least one multi-color irradiation process, of irradiating a photocurable resin with light of at least one wavelength to form, by photopolymerization of a photocurable resin, at least one green body in a working volume, and/or
- at least one post-processing process of post-processing at least one green body, formed by the or at least one volumetric irradiation process of irradiating a photocurable resin with light of at least one wavelength to form, by photopolymerization of a photocurable resin, the at least one green body in a working volume, to form at least one object, the method further comprising:
supporting the at least one green body and/or the at least one object, particularly during and/or after the at least one volumetric irradiation process, via at least one support structure.

2. The method of claim 1, wherein the at least one green body is removed from the working volume via the at least one support structure, particularly wherein the at least one support structure is introduced into the working volume for removing the at least one green body from the working volume within a period of the last 10 seconds before completion of the at least one volumetric irradiation process or after completion of the at least one volumetric irradiation process.

3. The method of claim 1 or 2, wherein the at least one green body or the at least one object is at least partially mechanically contacted or supported by the at least one support structure.

4. The method of any one of the preceding claims, wherein the at least one green body or the at least one object comprises at least one attachment element or attachment site for attaching the at least one support structure to the at least one green body or to the at least one object, wherein the at least one attachment element or attachment site is optionally integrally formed with the at least one green body via the at least one volumetric irradiation process, wherein optionally, the at least one attachment element or attachment site is provided with at least one auxiliary portion of the at least one green body or the at least one object, wherein the at least one auxiliary portion is removable, e.g. via one or more predetermined breaking structures, from a base body of the at least one green body or the at least one object, respectively..

5. The method of claim 4, wherein the at least one support structure is or comprises a frame structure which comprises at least one receiving portion for at least partially receiving the at least one green body or the at least one object, wherein the frame structure optionally comprises one or more one- or multidimensional, e.g. point- or line-shaped, contact portions which contact/support the at least one body or the at least one object when it is at least partially received in the at least one receiving portion.

6. The method of any one of the preceding claims, wherein the at least one green body or the at least one object is adhered, particularly by polymerization of the photocurable resin, to the at least one support structure, particularly during the at least one volumetric irradiation process, more particularly because the at least one volumetric irradiation process is initiated at at least one surface of the at least one support structure.

7. The method of claim 6, wherein the at least one support structure comprises a base body defining a base plane and at least one regular or irregular surface, particularly a regular or irregular surface structuring, wherein the surface structuring particularly, comprises a regular or irregular pattern of depressions and/or elevations.

8. The method of claim 6 or 7, wherein the at least one support structure comprises a base body defining a base plane and at least one inclined surface having a main extension plane extending at an angle of 1 - 89° relative to a reference plane, particularly the base plane of the base body or relative to a main irradiation direction of the light of the at least one wavelength or relative to a bottom wall of a container delimiting the working volume.

9. The method of claim 7 or 8, wherein the at least one support structure comprises at least one of:
at least two inclined surfaces each having a main extension plane extending at an angle of 1 - 89° relative to the reference plane, wherein the free ends of the at least two inclined surfaces contact each other, thereby, defining an edge-like tip portion; or
at least four inclined surfaces each having a main extension plane extending at an angle of 1 - 89° relative to the reference plane, wherein the free ends of the at least four inclined surfaces contact each other, thereby, defining a tip portion; or
at least one conical or frustoconical geometry having a symmetry axis extending at an angle of 1 - 90°, particularly 45 - 90°, more particularly 90°, relative to the or a reference plane; or
at least one spherical geometry having a symmetry axis extending at an angle of 1 - 90°; particularly 45 - 90°, more particularly 90°, relative to the or a reference plane.

10. The method of any one of the preceding claims, wherein the at least one support structure comprises at least one opening, particularly a through-bore, through which gas, particularly air, may escape the working volume through the at least one support structure.

11. The method of any one of the preceding claims, wherein the working volume is at least partially defined by a container volume of a container, wherein the at least one support structure is a lid of the container.

12. The method of any one of the preceding claims, wherein the at least one volumetric irradiation process is initiated at at least one surface, particularly at least one inclined surface, of the at least one support structure.

13. The method of any one of the preceding claims, wherein the working volume is at least partially defined by a container volume of a container, wherein the at least one support structure is or comprises a plate arranged parallel to a wall of the container or wherein the at least one support structure is or comprises a plate which forms at least one wall of the container.

14. The method of any one of the preceding claims, further comprising a step of removing the at least one support structure including at least one green body attached thereto from the working volume and transferring the at least one support structure including the at least one green body attached thereto, particularly via at least one handling device, to at least one post-processing device in which the or at least one post-processing process is performed.

15. A support structure, configured to support at least one green body and/or at least one object, particularly during and/or after the at least one volumetric irradiation process.

16. An apparatus for manufacturing, via volumetric printing, at least one object, wherein the apparatus is configured to perform the method of any one of claims 1 - 14.
